(19) **Europäisches Patentamt**

**European Patent Office**

**Office européen des brevets**

(11) **EP 1 637 990 A1**

(12) **EUROPEAN PATENT APPLICATION**
published in accordance with Art. 158(3) EPC

(43) Date of publication:
   **22.03.2006 Bulletin 2006/12**

(51) Int Cl.:
   *G06F 9/44* (1980.01)     *G06F 11/28* (1980.01)

(21) Application number: **03753950.9**

(22) Date of filing: **25.09.2003**

(86) International application number:
   **PCT/JP2003/012284**

(87) International publication number:
   **WO 2004/081788 (23.09.2004 Gazette 2004/39)**

(84) Designated Contracting States:
   **AT BE BG CH CY CZ DE DK EE ES FI FR GB GR
   HU IE IT LI LU MC NL PT RO SE SI SK TR**

(30) Priority: **10.03.2003 JP 2003064220**

(71) Applicant: **Catena Corporation
   Tokyo 135-8565 (JP)**

(72) Inventors:
   • **MEJRI, Mohamed
      Québec G1K 7P4 (CA)**
   • **KTARI, Bechir
      Québec G1K 7P4 (CA)**
   • **FUJITA, Hamido,
      Software and Info. Science Dpt.
      Iwate-gun,
      Iwate 020-0193 (JP)**
   • **ERHIOUI, Mourad
      Québec G1K 7P4 (CA)**

(74) Representative: **Michalski, Stefan
   Maiwald Patentanwalts GmbH,
   Neuer Zollhof 2
   40221 Düsseldorf (DE)**

(54) **STATIC ANALYSIS METHOD FOR LYEE-ORIENTED SOFTWARE**

(57)     A static analysis method conventionally used is applied to the Lyee requirement. More specifically, for Lyee requirement as an object, optimization (classical optimization, optimization by ordering of a predicate vector), slicing, requirement debug, and typing (error detection, type finding, security using a type) are performed. These are subjected to a pre-processing appropriate for generation of optimal code by the LyeeAll tool to obtain a format for outputting a requirement. Thus, it is possible to optimize the requirement definition for code generation having a more preferable quality (reduction in memory and execution time consumption) in the Lyee methodology.

Fig. 9

**EP 1 637 990 A1**

## Description

Technical Field

The present invention relates to a soft ware analysis method which can be used for soft ware in all purposes, types/ contents, and for ms irrespective of, e. g. , business/ individual purposes, types/ contents of business applications/ games or the like, and for ms of singl e soft ware/ electronic product incorporated ROM or the like, and more particularly to a static analysis method regarding Lyee (registered trademark, similar herein after ) oriented soft ware.

Background Art

Software development and maintenance has become an activity of major importance in our economy. As computer comes into widespread use, this activity involves a big industry.

Hundreds of billions of dollars are spent every year in order to develop and maintain soft ware. Today, competition between actors of soft ware development field is fiercer than ever. To survive the race, these actors (companies) must keep productivity at its peek and cost at its bottom. They must also deliver products (soft ware) having high qualities and deliver them in time. However, t he available tools and methodologies f or soft war e development do not al ways sui t pr oper ly t he company needs?

Basi cal l y, t he goal of the soft war e development researches i s t o look f or a method f or buillding sof t war e of bet t er quality easily and qui ckl y. A large var i et y of methodologies and t echni ques have been el abor at ed and pr oposed, over t he last 10 year s, t o improve one or many st eps of t he software devel opment life cycl e.

Despi t e t hei r acknow edgedly consi der abl e cont r i but i ons, t hey have a bi g difficulty in finding t hei r way into widespread use. I n f act , almost all of them fail t o pr oduce cl ear l y under st andabl e and modifiable systems and their use is still consi der ed t o be an activity accessi bl e onl y t o speci al i st s with a very large ar r ay of corrpet enci es, ski l l s, and knowl edge. Thi s, i n t ur n, means t hat hi ghl y pai d personal, hi gh cost maintenance, and ext ensi ve checks are needed f or the software to be per formed. For these reasons, companies are now more than welcome to any new promising methodology improvement in software development cycl e and t hey ar e ready t o pay t he pr i ce.

Lyee (a word formed from the f i nal letter of "government aL met hodol ogY f or soft war E pr ovi dence") i s one of t he new and ver y promisi ng methodol ogi es. I nt ended t o deal efficiently with a wide range of software pr oblems r el at ed t o di f f er ent f i el d, Lyee allows t he devel opment of software by simply defining their requi r ements. Mor e pr eci sel y, t he user has onl y t o gi ve a word, t he word' s calculation formul ae, t he word's calcul at i on condi t i ons (pr econdi t i ons) and layout of scr eens and pr i nt out s ( e. g. , see Pat ent Document s 1, 2, and 4 t o 6).

Then al l subsequent t r oubl esome programming pr ocess ( cont r ol l ogi c aspect s) i s t o be r el egat ed i n t he hands of a computer. I n ot her wor ds, it i s not necessar y f or a human such as a syst em engi neer ( SE) t o desi gn a logic. Despi t e Lyee' S i nf ancy, t he r esul t s of i t s use have shown its t r emendous pot ent i al. Infact, compared t o convent i onal methodol ogi es, devel opment time, maint enance time and document at i on vol ume can be consi der abl y reduced (70 t o 80%). Up t o now, a primitive suppor t i ng tool called LyeeAll is available t o devel oper s al l owing t he aut omatic gener at i on of code f r om requirement s ( e. g. , see Pat ent Documents 3 and 4).

Never t hel ess, as i s true f or any new methodology, r esear ches have t o be made on Lyee t o pr ove its ef f i ci ency, and t o improve i t s good qual i t i es. Further more, t he Lyee Al l t ool has a room be f ur t her devel oped t o make it more user-friendly.

On t he ot her hand, as software static analysis methods, t her e ar e (1) an optimizi ng t echni que, (2) a program slicing t echni que, (3) r equi r ement debuggi ng, (4) t ypi ng, and t he like ( see Nonpat ent Document s 1 and 4).

(1) The optimizing t echni que (see Nonpat ent Document s 3 and 8) i s carried out for t he pur pose of adopting a series of changes t o reduce a volume of a code st r i ng, t o shor t en its execution time, and to reduce memory consumption or t he like. However, in combination with Lyee met hodol ogy, an optimizing target has been a code string pr epar ed by t he Lyee methodology, and optimizing t hat targets Lyee requirement s has not clearly been r eal i zed technically ( see Patent Document 4) .

(2) The program slicing t echni que has long been used as an appr oach of " di vi di ng and controlling" pr ogr am reading and debugging in traditional programming languages. I t has successf ul l y been used f or anal ysi s of many appl i cat i ons. However , obj ect s of t hese appl i cat i ons ar e combination, al gor i t hm debuggi ng, r ever se engi neer i ng, conponent r euse, aut omat i c par al l el i ng, pr ogr am i nt egr at i on, measurement of ver i f i cat i on assi st ance, and t he like. There has been proposed no idea of combining t hi s t echni que with t he Lyee met hodol ogy (see Nonpat ent Document 12).

(3) The requirement debuggi ng can obt ai n a more usef ul r esul t by detecting requirement bugs bet or e codes are gener at ed. However, t her e has been pr oposed no idea of combining t hi s t echni que with t he Lyee methodology.

(4) The t ypi ng ( see Nonpat ent Document s 2 and 11) i s mainly used f or statically guar ant eei ng some dynamic

and good operational characteristics of programs. According to this typing, errors that frequently occur during program execution can be detected at the time of compiling. The typing technique has successfully been used for ensuring that developed software wildeal with security problems of some kind (see Nonpatent Document 11). However, there has been proposed no idea of combining this technique with the Lyee methodology.

(Patent Document 1)
International Publication WO 97/ 16784 A1 pamphlet
(Patent Document 2)
International Publication WO 98/ 19232 A1 pamphlet
(Patent Document 3)
International Publication WO 99/ 49387 A1 pamphlet
(Patent Document 4)
International Publication WO 00/ 79385 A1 pamphlet
(Patent Document 5)
International Publication WO 02/42904 A1 pamphlet
(Patent Document 5)
Japan Patent Application Laid-Open Publication No. 2002-202883

(Nonpatent Document 1)

M Bozga, J. C. Fernandez, and L. Ghirvu. Using static analysis to improve automatic test generation. pages 235-250, 2000.

(Nonpatent Document 2)

L. Cardelli.Type systems. Handbook of Computer Science and Engineering, Chapter 103, CRC Press, 1997.

(Nonpatent Document 3)

T. HENNING. Optimization Methods. Springer - Verlag, 1975.

(Nonpatent Document 4)

S. Muchnick. Compiler Design Implantation. Morgan Kaufman Publishers, California, 1999.

(Nonpatent Document 5)

F. Negoro. Principle of Lyee software. 2000 International Conference on Information Society in 21 st Century (IS2000), pages 121- 189, November 2000.

(Nonpatent Document 6)

F. Negoro. Introduction to Lyee. The Institute of Computer Based Software Methodology and Technology, Tokyo, Japan, 2001.

( Nonpatent Document 7)

F. Negoro and I . Hamid. A proposal for intention engineering. 5th East - European Conference Advances in Databases and Information System (ADBIS' 2001 ) , September 2000.

(Nonpatent Document 8)

S. PANDE and D. P. AGRAWAL. Compiler Optimizations for Scalable Parallel Systems : Languages, Compilation Techniques, and Run Time Systems. Springer - Verlag, 2001.

(Nonpatent Document 9)

D. E. Rutherford. Introduction to Lattice Theory. Hafner Publishing, New York, 1965.

(Nonpatent Document 10)

F. Ti p. A sur vey of program sl i ci ng t echni ques. Jour nal of Programming Languages, 3(3) : 121-189, September 1995.

(Nonpatent Document 11)

D. Vol pano, G Smith, and C. Irvine. A sound type syst em f or secur e flow analysis. Jour nal of Corrput er Security, 4 (3) : 167 - 187, 1996.

( Nonpatent Document 12)

W Weiser. Pr ogr am sl i ci ng. I EEE Tr ans Soft war e Eng. , pages 352-357, July 1984.

Thus, var i ous methodologi es and t echni ques have conventionally been proposed as methods capable of easily and qui ckl y const r uct i ng hi gher - qual i t y soft war e, and st eps of a software devel opment life cycl e has been improved t o a certain extent. However, t hese methodologies and t echni ques have not r eal i zed clear under st andi ng and modification. Moreover , their uses have been conveni ent onl y f or specialists who have br oad r anges of abilities, skills, and knowl edge. Thus, t her e has been a pr obl em t hat execut i on of t he soft war e has necessi t at ed gr eat labor cost s, soft ware mai nt enance cost s, and checki ng cost s.

To sol ve t he problem a promising met hodol ogy called Lyee has been proposed. However, t her e is still a r oom f or i mpr ovement i n st udi es on ef f i ci ency and qual i t y, and i n real i zat i on of hi gher user f r i endliness.

The present invention has been developed to solve t he f or egoi ng problems of t he convent i onal ar t . Specifically, it is an obj ect of the pr esent i nvent i on t o pr ovi de a static analysis met hod r egar di ng Lyee- or i ent ed software which assi st s hi gher quality ( less consurrpt i on of memory and execution time) i n a Lyee methodology.

Thus, it i s anot her obj ect of the pr esent invention t o show a way t o further enhance Lyee methodology by usi ng cl assi cal st at ic analysis t echni ques to anal yze Lyee r equirements ( a set of words within their definitions, their calculation condi t i ons and their attributes), and to pr ovi de a static analysis method r egar di ng Lyee- or i ent ed software which can actually use the method.

It is yet anot her obj ect of the pr esent i nvent i on to show how t ypi ng and t he ot her static analysis t echni ques can improve some aspect of t he Lyee met hodol ogy, and t o pr ovi de a static analysis met hod r egar di ng Lyee- or i ent ed software which can actually use t he t ypi ng and the ot her static analyzing t echni ques.

It is a further obj ect of the pr esent invention to i nt r oduce t he Lyee Requirement Anal yzer , a pr ot ot ype t hat we have devel oped t o implement some st at i c anal ysi s t echni ques, and t o pr ovi de a st at i c anal ysi s method r egar di ng Lyee- or i ent ed soft war e which can act ual l y use the Analyzer.

Finally, it is anot her obj ect of the present i nvent i on t o sket ch some concl udi ng r emar ks on t hi s work and f ut ur e r esear ch as a concl usi on, and t o provide a static analysis met hod r egar di ng Lyee- or i ent ed soft war e which can actually use the r esul t s.

I n t hi s case, " Lyee ( r egi st er ed t r ademark)" means an i nvent i on and a t echni que regardi ng the soft war e pr oduct i on met hod or the like i nvent ed by Fumi o Negor o who i s one of the inventors of t hi s appl i cat i on. I t s det ai ls ar e di scl osed, for example, i n I nt er nat i onal Publ i cat i ons of t he Pat ent Document s 1 t o 6 or the like.

Disclosure of the I nvent i on

To achi eve the obj ect , the pr esent i nvent i on corrpr i ses a st ep of obt ai ni ng a r equi r ement defi ni t i on i ncl udi ng a definition expr essi on of each word t o pr oduce software i n accordance with Lyee met hodol ogy, a st ep of usi ng the word of the obt ai ned r equi r ement defi ni t i on as a key t o det ect a const ant , and a st ep of propagating the const ant i n accor dance with the definition expr essi on whi ch uses the det ect ed const ant .

" Pr opagat i on of t he constant " means organizing of the definition expr essi ons of the words by unbr okenl y substituting the word with the constant , substituting the word havi ng the definition expr essi on which uses t hi s word, and the like when the const ant i s present in the word of t he requirement definition ( Lyee requirements) .

Accor di ng t o the present invention, as optimizing i s execut ed for the Lyee r equi rements at a st age bef or e software pr oduct i on by the Lyee, it is possi bl e t o achi eve f ur t her r educt i ons i n volume of a code st r i ng, memory consurrpt i on, and pr ogr am execut i on time in the soft war e producti on by the Lyee met hodol ogy.

The pr esent invent i on comprises a st ep of obt ai ni ng a r equi r ement defi ni t i on includi ng a defi ni t i on expr essi on of each wor d t o pr oduce software i n accor dance with Lyee met hodol ogy, a st ep of det ect i ng a pat t er n f rom t he definition expr essi on of the obt ai ned requirement definition, and a st ep of substituting the requirement definition with representation in which t he det ect ed pattern is a subst i t ut i on expression.

"Pattern i s a subst i t ut i on expr essi on" means subst i t ut i on of a pat t er n in the requirements wi t h a t emporary var i abl e when the pat t er n appear s many times.

Accor di ng to the present invent i on, as the pat t er n i n t he Lyee requirements whi ch appear s by a pl ur al i t y of t i mes i s cal cul at ed onl y once, t her eby pr event i ng cal cul at i ons of many times, it i s possi bl e t o achi eve a r educt i on i n code execut i on time.

The present invention comprises a st ep of obtaining a requirement definition including a def inition expr essi on and pr econdi t i ons of each word t o pr oduce software i n accor dance with Lyee methodology, a st ep of obt ai ni ng a statement i n whi ch at l east an identifier , the definition expr essi on and the pr econdi t i ons of the word ar e described i n conformity with BNF grammar based on the requirement definition, a step of defining a Def / Use function f or each obt ai ned statement , and a st ep of obtaining an order relation among the statements from an or der r el at i on among the defined Def / use f unct i ons.

" Statement " means represent i ng by one f unct i on of t he word in the requirements and i t s def i ni t i on expression, t he pr econdi t i ons, the i nput / out put at t r i but es and the like. " Def / use function" means a function of representing an undef i ned word f or each statement , and a f unct i on of representing anot her word used f or defining the undefined word.

Accor di ng t o the pr esent invent i on, as a result of converting/ anal yzi ng the word in the Lyee requirement s, i t s definition expr essi on or the like int o a st at ement form, t he best combination of pr edi cat e vect or s ( i . e . , execut i on time i s reduced) i n Lyee' s Tense Control Vector can be known. Thus, by making a combination with a tool ( Lyee All) f or gener at i ng codes from the requirements, it is possible t o f ur t her increase ef f i ci ency of the soft war e pr oduct i on by the Lyee.

The present invention comprises a step of obtaining a requirement definition including a definition expr essi on and i nput / out put at t r i but es of each word to pr oduce software i n accor dance with Lyee met hodol ogy, a st ep of obt ai ni ng a statement i n whi ch at l east an identifier , the definition expr essi on and the input / out put at t r i but es of the word ar e descr i bed based on the requirement definition, a st ep of der i vi ng anot her statement (second statement ) which cont r i but es t o definition of the word of the statement from the obtained st at ement (first statement) t o execute for all the st at ement s a sl i ci ng f unct i on which places the first and second statements in t he same statement gr oup, and a st ep of obt ai ni ng slices independent of each ot her from the sli ci ng f unct i on.

"Slicing function" means a function of conver gi ng pr ogr ams t o statements r egar di ng specific cal cul at i ons t o cl assi f y t hem into statement gr oups i ndependent of each other.

Accor di ng t o the pr esent i nvent i on, as sl i ce groups independent of each other can be executed in parallel, it is possible to reduce execut i on t i me, especially under st andi ng errors of the r equi r ement def i ni t i on even when t her e ar e many statements.

The pr esent i nvent i on comprises a step of obt ai ni ng a r equi r ement defi ni t i on including a definition expr essi on and i nput / out put at t r i but es of each word t o pr oduce software i n accor dance wi t h Lyee methodology, a st ep of obt ai ni ng a st at ement i n whi ch at l east an identifier, the definition expr essi on and the input / out put at t r i but es of the word ar e descr i bed based on the requi r ement defi ni t i on, and a st ep of det ect i ng a bug i n t he r equi r ement defi ni t i on based on pr edet er mined anal ysi s for the obtained st at ement.

" Det ect i on of a bug in the requirement definition" means di scover y of an inactive statement, a cycl i c st at ement, an i ncomplet e st at ement, an addi t i onal st at ement, or the like. Needless to say, the target of the bug det ect i on i s not limited t o these st at ement s, but ot her statements can be t ar get ed.

According to the present invention, in scenario function execution by the Lyee methodology, transfer of cont r ol t o a subpr ogr am which is not actually execut ed can be pr event ed. Thus, it is possible to achieve a reduction i n processing time, an increase i n ef f i ci ency of a consumed memory, or the like.

The pr esent invention comprises a st ep of obt ai ni ng a requirement definition including a definition expr essi on and i nput / out put at t r i but es of each word t o pr oduce software i n accor dance with Lyee methodology, a st ep of obt ai ni ng a st at ement i n whi ch at l east an identifier, t he definition expr essi on and the input / out put at t r i but es of the word ar e descr i bed based on the r equi r ement definition, a st ep of defining type al gebr as for the obt ai ned statement, an oper at or and data in the statement, and a st ep of di scover i ng a type error in the requirement definition by usi ng an environment and predetermined type rules correlated to the defined type al gebr as.

"Type al gebr a" i s a concept i nt r oduced t o perform, by an expr essi on, an oper at i on of i nt r oduci ng a concept of types f or the word, the definition expr essi on or the like regarding the statement gener at ed f r om the requirements, and of removing equally treating different types of a st at ement , an oper at or and a dat a as er r or s at a r equi rement st age.

According to the pr esent invention, as the Lyee r equi r ement s ar e targeted t o execute analysis in terms of types, and an error is discovered in the requirements by usi ng type r ul es, it is possi bl e t o further reduce pr ogr am errors.

The pr esent invent i on comprises a step of obtaining a requirement defi ni t i on i ncl udi ng a definition expr essi on and input / out put at t r i but es of each word t o pr oduce software i n accor dance with Lyee met hodol ogy, a st ep of obt ai ni ng a st at ement i n whi ch at least an i dentifier , the definition expression and the input / out put at t r i but es of the word ar e descr i bed based on the r equi r ement def i ni t i on, a st ep of def i ni ng type al gebr as for the obt ai ned st at ement, an oper at or and data in the st at ement, and a st ep of gener at i ng types of an intermediate article and an out put word from an input word in the r equi r ement def i ni t i on by usi ng a predetermined environment and type rules based on the def i ned type al gebr as.

Accor di ng t o the pr esent invention, as the types of the out put word and the intermadiate article are uni quel y derived beforehand from the input word, it is possi bl e to si mplify user's work and to reduce errors.

The present invention comprises a step of obtaining a requirement definition including a defi ni t i on expr essi on and input / out put at t r i but es of each word t o pr oduce software i n accor dance with Lyee methodology, a st ep of obt ai ni ng a st at ement i n whi ch at least an identifier, the definition expression, the input / out put attributes and a security label of the word ar e descr i bed based on the requirement definition, a st ep of defining a label function which correlates the security label to a value of the word by using a lattice showing a relation bet ween security label s in the obt ai ned st at ement, and a step of determining a program which does not comply with a specific security pol i cy by usi ng a predetermined security pol i cy based on the defined label f unct i on.

"Security label" i s a label i ndi cat i ng security r equi r ement s ( e. g. , " disclosed, "secret " or the like) f or certain information. " Label function" i s a function of pr ovi di ng a security label t o the word in the r equi r ement s to process the same by an expr essi on. "Security policy" i s a gui de as t o how t o treat information having a security label to be f r eel y def i ned by a user si de.

Accor di ng to the pr esent invention, by expandi ng t he af or ement i oned typing technique to information secur i t y, it is possi bl e t o achi eve aut omati c pr ogr am ver i f i cat i on which is useful for clarifying desi gn defects likely to cause security violations.

The present invent i on can be configured by comprising a requirement definition reception section for r ecei vi ng a requirement definition including a definition expression and pr econdi t i ons of each word to produce software i n accor dance with Lyee methodol ogy, an anal ysi s sect i on f or analyzing a vocabulary and a sent ence st r uct ur e cont ai ned i n the r ecei ved requirement definition from the same t o out put intermediate representation, a flow anal ysi s sect i on f or execut i ng anal ysi s r egar di ng a dat a flow and a control flow with respect to the requirement definition by starting from the out put t ed intermediate representation to out put a dat a flow gr aph and a cont r ol flow gr aph, and an opt i mizat i on sect i on f or optimizing the r equi r ement definition passed t hr ough the flow anal ysi s to out put improved regulations.

In this case, " requirement definition reception section" i s a uni t having a function of having the Lyee requirements (requirement definition) imputted before processi ng by the present invention. For example, itcan be realized as a r ecor di ng medium or ROM which st or es t he pr ogr am assuming t he aforementioned f unct i on i n a programmed and execut abl e f or m

"Anal ysi s section" i s a uni t havi ng a function of ext r act i ng and anal yzi ng t he vocabul ar y and t he sent ence st r uct ur e f r om the r ecei ved requirement definition and t hen out put t i ng t he requirement definition as intermediate representation i n a sent ence structure form For example, it can be realized as a recoding medium or RCM which st or es t he pr ogr am assuming t he af or ementioned f unct i on i n a programmed and execut abl e f or m

"Flow anal ysi s section" i s a uni t having a function of out putting al l pi eces of information r egar di ng a cycle of dat a flow control f r om one r equi r ement poi nt t o anot her one poi nt starting f rom t he intermediate represent at i on as, e. g. , a cont r ol flow gr aph ( CFG) , a dat a flow graph (DFG) and the like. For example, i t can be realized as a r ecor di ng medium or ROM which st or es t he program assuming the af or ementioned function i n a programmed and execut abl e form

"Optimization sect ion" i s a uni t havi ng a function of execut i ng, e. g. , a const ant pr opagat i on t echni que t o pr oduce a sequence of regularly simplified st at ement s, which i s sui t abl e f or enabl i ng a LyeeAll tool t o gener at e program which can run more qui ckl y and consumes less memory. For exampl e, i t can be real i zed as a r ecor di ng medi um or ROM whi ch st or es the pr ogr am assuming the afor ernent i oned f unct i on i n a pr ogr ammed and execut abl e f or m

" Sl i cer " i s a uni t havi ng a f unct i on of r ecei vi ng i nf or mat i on (such as Def / use cor r el at ed to each word) r egar di ng a f l ow gener at ed by a f l ow base anal ysi s element and a sl i ci ng eval uat i on standards, and out put t i ng a sl i ce cor r espondi ng to the pr ovi ded eval uat i on standards. For example, i t can be r eal i zed as a r ecor di ng medium or ROM which st or es t he pr ogr am assuming t he aforement i oned f unct i on i n a programmed and execut abl e f or m

Thus, accor di ng to the pr esent i nvent i on, as each of t he aforementioned functions i s set as, e. g. , a medium of an execut abl e uni t , it is possi bl e t o receive Lyee requirements as an input , to pr ovi de a sl i ce sui t abl e f or opt i mal code gener at i on by the Lyee All t ool and or der - r ef i ned r equi r ement s, and t o execut e t he ot her r equi r ement s opt i m zat i on such as const ant pr opagat i on.

Fur t her mor e, t he pr esent i nvent i on can be real i zed not onl y as t he software anal ysi s method but al so as a software anal ysi s devi ce, or br oadl y a sof t war e devel opment met hod and a sof t war e devel opment devi ce, sof t war e for causi ng a comput er t o f unct i on as t he devi ce and t he met hod, a r ecor di ng medium on which t he sof t ware is recorded, an appar at us whi ch i nstall s the sof t ware a dedi cat ed machi ne which st or es t he sof t

ware in, e. g. , ROM or t he l i ke, or a busi ness model for executing t hese as appl i cat i on forms, or t he like. These modes are within the present invention.

Brief Description of t he Drawings

FIG. 1 i s a concept ual di agr am i n whi ch requirement execution in Lyee met hodol ogy of the pr esent i nvent i on is r epr esent ed by a code st r i ng.

FIG. 2 is a concept ual di agr am expl ai ni ng a concept of a pallet i n t he Lyee met hodol ogy of t he pr esent i nvent i on.

FIG. 3 is a concept ual di agr am expl ai ni ng a concept of a scenario function in the Lyee methodology of t he pr esent i nvent i on.

FIG. 4 is a flowchart show ng a dynamic structure of a pr edi cat e vect or i n t he Lyee methodology of t he pr esent i nvent i on.

FIG. 5 i s a flowchart showing dynamic structures of pr edi cat e vect or s of L4, a and L4, b i n t he Lyee methodology of t he pr esent invention.

FIG. 6 is a flowchart showing dynamic st r uct ur es of pr edi cat e vect or s of L3, a and L3, b i n t he Lyee methodology of t he pr esent invention.

FIG. 7 is a concept ual di agr am conceptually expl ai ni ng mutual oper at i ons of scr eens i n t he Lyee methodology of t he pr esent invention.

FIG. 8 is a concept ual di agr am expl ai ni ng a concept of a pr ocess r out e di agr am i n t he Lyee methodology of t he pr esent invention.

FIG. 9 is a flowchart t expl ai ni ng an al gor i t hm of Use Direct AndIndirect ( s, S) accor di ng t o an embodiment of t he pr esent invention.

FIG. 10 is a flowchart t expl ai ni ng an algorithm for detecting a cycl i c statement accor di ng t o t he embodiment of t he pr esent invention.

FIG. 11 is a flowchart t expl ai ni ng an algorithm for det ect i ng an incomplete st at ement accor di ng t o t he embodiment of t he pr esent i nvent i on.

FIG. 12 i s a flowchart t expl ai ni ng an algorithm for detecting an unnecessar y statement accor di ng t o the first embodiment of t he pr esent i nvent i on.

FIG. 13 i s a flowchart expl ai ni ng an algorithm for detecting an unnecessar y statement accor di ng t o the embodiment of t he pr esent invention.

FIG. 14 is a flowchart expl ai ni ng an algorithm for detecting one of t wo statements t o be execut ed first accor di ng t o the embodiment of t he pr esent invention.

FiG. 15 is a flowchart explaining an algorithm for refining ( cor r ect i ng) an or der of statements accor di ng t o t he embodiment of t he pr esent invention.

FiG. 16 is a flowchart expl ai ni ng an algorithm for refining ( cor r ect i ng) an or der of statements accor di ng t o t he embodiment of t he pr esent invention.

FiG. 17 is a flowchart t expl ai ni ng an algorithm for extracting a slice of a word a accor di ng to the embodiment of the present invention.

FIG. 18 is a flowchart t expl ai ni ng an al gor i t hm f or extracting a slice of a word a accor di ng to the embodiment of t he pr esent invention.

FIG. 19 is a flowchart t expl ai ni ng an al gor i t hm f or ext r act i ng an independent slice according to the embodiment of t he pr esent invention.

FIG. 20 is a flowchart t expl ai ni ng an al gor i t hm f or t ypi ng accor di ng t o the embodiment of the pr esent invention.

FIG. 21 is a flowchart t expl ai ni ng an algorithm f or t ypi ng accor di ng t o the embodiment of the pr esent invention.

FIG. 22 is a flowchart t expl ai ni ng an al gor i t hm f or t ypi ng accor di ng t o the embodiment of the pr esent invention.

FIG. 23 is a flowchart t expl ai ni ng an al gor i t hm f or t ypi ng accor di ng t o the embodiment of the pr esent invention.

FIG. 24 is a flowchart t expl ai ni ng an al gor i t hm f or t ypi ng accor di ng t o the embodiment of the present invention.

FIG. 25 is a flowchartexplaining an algorithm for t ypi ng accor di ng t o the embodiment of the pr esent invention.

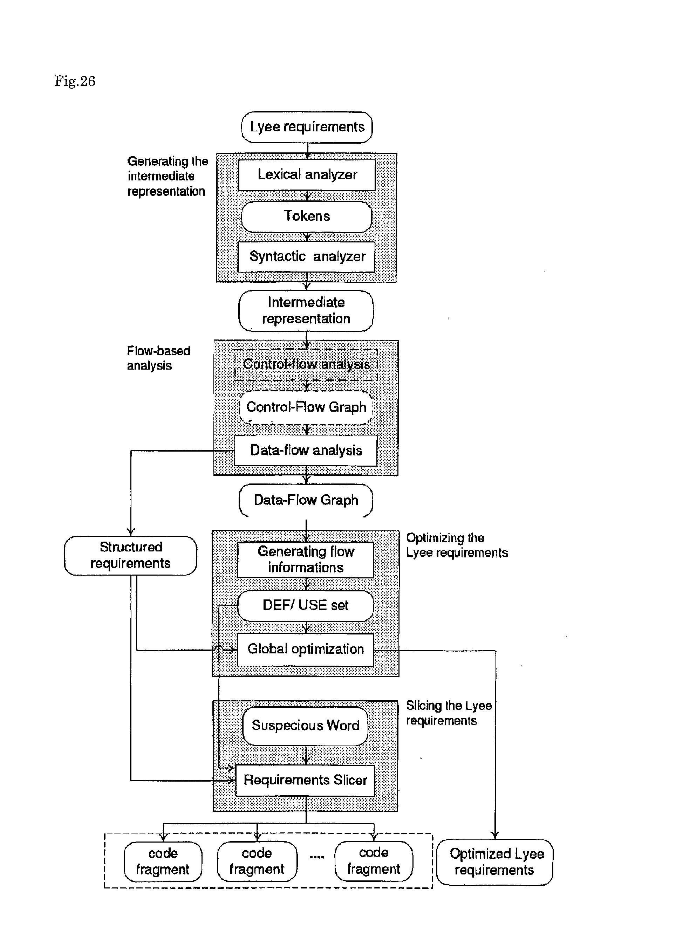

FIG. 26 is a functional block diagram al so ser vi ng as a flowchart o explain a dynamic st r uct ur e of Lyee requirement analyzer accor di ng t o the embodiment of the pr esent invention.

Overview of t he I nvent i on

A basi c idea of the pr esent i nvent i on is a development methodology cal l ed Lyee, and t hi s is di scl osed i n t he aforementioned Pat ent Documents 1 t o 6 or the like.

One of the most problematic t asks in the pr ocess of t he st udy and development of software i s to well under st and requirements and correctly transforming t hem i nt o code. To sol ve t hi s problem, t he Lyee methodology propose a simple way t o gener at e programs f r om requirements.

The philosophic principles behi nd the Lyee methodology should be cited her ei n from the above documents. Her ei naf t er , referring to the drawings and t abl es, we focus only on some pr act i cal ideas useful to under st and how t o write software usi ng t hi s methodology and how t o look t he codes that ar e automatically generated from requirements made by t hi s methodology.

(1) Lyee requirements

Within the Lyee methodology requirements ar e gi ven i n a declarati ve way as a set of statements cont ai ni ng words together with their definitions, their calculation condi t i ons and t hei r at t r i but es (input/out put , types, security at t r i but es, etc.).

For the sake of simplicity, in the descr i pt i on, we consi der t hat each statement cont ai ns t he following pi eces of information 1) to 5).

1) Word

It is an identifier of a word.

2) Definition: it is an expression defining the word. We suppose, for t he sake of simplicity, t hat an expr essi on can be one of t he following:

$$Exp \quad := \quad val \mid id \mid \mid (Exp) \mid op\,Exp \mid Exp\,op\,Exp$$

$$val \quad := \quad num \mid num.num \mid bool$$

$$num \quad := \quad 0 \mid 1 \ldots \mid 9 \mid num\,num$$

$$bool \quad := \quad true \mid false$$

$$id \quad := \quad a \mid \ldots \mid z \mid A \mid \ldots \mid Z \mid id\,num \mid id\,id$$

$$Op \quad := \quad + \mid - \mid * \mid or \mid and \mid < \mid <= \mid = \mid <> \mid > \mid >= \mid not$$

The above def i ni t i on of t he expr essi on Exp can be interpreted as following:

- Exp: An expr essi on " Exp" can be a val ue " val " , an identifier " id" , a par ent hesi zed expr essi on "( Exp)" , a unary oper at or "op Exp" , followed by an expr essi on (e.g. -2, -(a + b)) or an expr essi on " Exp op Exp" followed by a bi nar y oper at or accompanied by anot her expr essi on.
- val : A val ue val can be a numeric val ue "num", a f l oat val ue "num num" (numeric dot numeric) or a Bool ean( t rue/ f al se val ue) " bool ".
- num A numeric "num" can be a number (di gi t) or a numeric "num num" f ol l owed by anot her numeric.
- bool : A bool ean can be true or false.
- i d: An identifier " id" can be a letter, "id num", a letter followed by a numeric, or " idid" , an identifier followed by an identifier.
- op: An oper at or can be +, -, *, or, and, <, <=, =, <>, >, >= or not

2) Condition

Condition is t he calculation condition of the word which is an expressi on Exp t hat is supposed t o be Bool ean operator. Notice that i f t her e is no condition (that is t he condition is al ways true), we leave t hi s field errpt y.

3) I O:

This field allows to specify whether the defined word is an input word, out put word or an intermediate word. If the word is an input, and if it is an input from a file, t hi s field can take the value I F, or if the word i s an input f r om screen i f i t i s I S. Similarly, if the word is an out put , then t hi s field can t ake t he val ue OF ( out put t o the file) or OS ( out put ont o t he scr een) . However, if the word is intermediate word, we l eave this field empty. The intermediate word i s a word whi ch i s not an i nput , whose val ue gener at ed by the definition expr essi on i s not out put but cont r i but es onl y t o gener at i on of a val ue of anot her out put word.

4) Type

Thi s field i s allocated to speci f y the type of the word. It takes one of an integer " int", a floating point number " float " , and a bool ean value " bool."

5) Security

Thi s field is allocated to determine a security level to the defined word and it takes one of t he following value: public or secret. Notice, t hat t he fields "Type" and " Security" can be empty if t he def i ned word is not an input. Notice al so, t hat t he ot her t ypes and t he ot her secur i t y level can be easi l y ext ended t o natch exactl y the real Lyee requirements.
Table 1 gives an example of Lyee requirements.

Table 1: Lyee Requirements.

| Word | Definition | Condition | IO | Type | Security |
|------|-----------|-----------|-----|-------|----------|
|  |  | .<br>.<br>. |  |  |  |
| a | b+c | b*e>2 | OF | int | secret |
| c |  |  | IS | float | public |
| b | 2*c+5 | c>0 | OS | float | public |
| e |  |  | IS | float | public |
|  |  | .<br>.<br>. |  |  |  |

I n the descr i pt i on, her ei naf t er , we mean by statement a line in a table of requirements.
For i nst ance, t he statement defining the word a, denot ed Sa, in the Table 1 is descr i bed in Tabl e 2.

Tabl e 2: Statement of the Word " a"

| Word | Definition | Condition | IO | Type | Security |
|------|-----------|-----------|-----|-------|----------|
| a | b+c | b*e>2 | OF | int | secret |

I n the descr i pt i on, her ei naf t er , if s is a statement, the following definition i s used as a meaning below.

1) Word(s) to denote the field "Word" of the statement.
2) Definition(s) to denote the f i el d "Definition" of t he st at ement .
3) Condi t i on( s) t o denot e t he f i el d " Condition" of t he st at ement .
4) I O( s) to denot e the field "10' of t he statement.
5) Type( s) t o denot e t he f i el d " Type" of t he statement.
6) Security(s) to denote the field "Security" of the statement.

(2) Code gener at i on of Lyee program

Let Sw be t he statement def i ni ng t he word w. Then t he requirements given in the Tabl e 1, i n a traditional pr ogramming l anguage, correspond t o the code gi ven i n Tabl e 3.

Within the Lyee methodology, t he user does not need to specify t he or der (control logic) in which these definitions will be execut ed. As shown i n Tabl e 1, despi t e t he fact that t he definition of t he word a uses t he word b, t he statement Sb i s gi ven af t er t he statement Sa. The control logic, or a logical part of t he software will be, within t he Lyee methodology, automatically gener at ed, t hen as a result dramatically reducing programming er r or s and programming time.

Tabl e 3:

| Statement | Code |
|-----------|------|
| $S_a$ | If b*e > 2<br>then a: =b+c; output(a);<br>endif |
| $S_c$ | Input(c); |
| $S_b$ | If c > 2<br>then b:=2*c+5; output(b);<br>endif |
| $S_e$ | Input(e); |

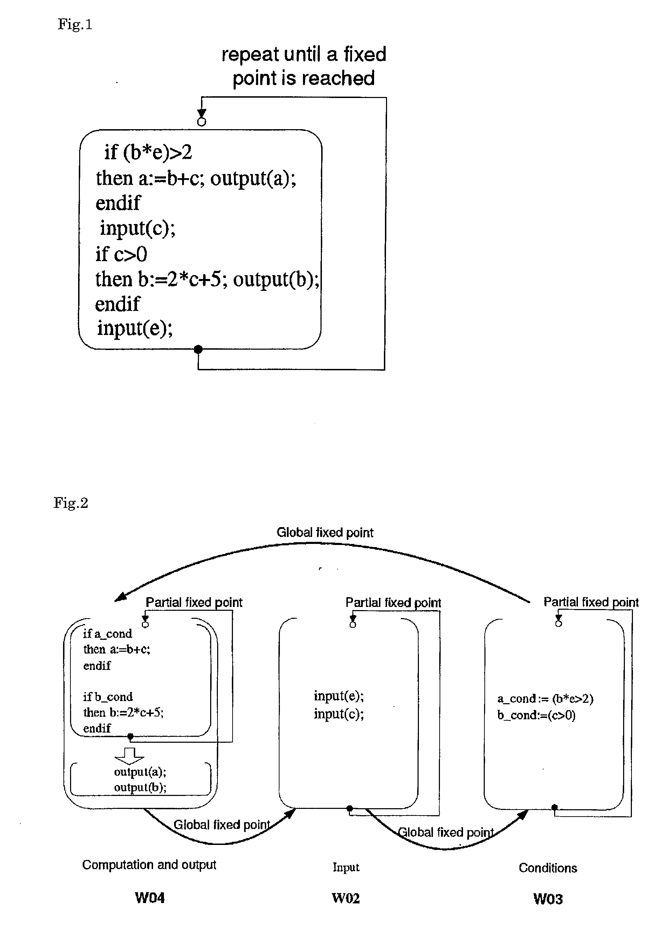

Fr om requirements in Table 1, we can automatically gener at e a pr ogr am t hat computes t he value of a and b and out put t hem FIG. 1 i s a concept ual diagram in which of t he requirements r ef l ect ed i n execut i on i s r epr esent ed as a code string. As shown i n the drawing, program will simply r epeat t he execut i on of these instructions until a fixed poi nt i s reached, i.e., until any ot her iteration will not change t he value of any word as shown i n Fi g. 1.

Moreover , changi ng t he order of codes associ at ed t o the statement gi ven i n Tabl e 3, t he semant i c of t he pr ogr am will never change, i . e. i t will al ways associ at e t he correct val ues t o the words.

Let ' s gi ve more pr eci si on about t he st r uct ur e and t he cont ent of the program t hat will be automatically gener at ed by Lyee f r om requirements. Within t he Lyee methodology, t he execut i on of a set of statements, such t he ones gi ven i n Tabl e 1, i s accomplished i n a particular manner . Lyee di st r i but es t he code associ at ed t o st at ement s over t hr ee spaces, called Pallets (W02, W03 and W04) i n t he Lyee terminol ogy, as shown i n Fi g. 2.

As shown i n t he drawing, t he W02 pallet deal s with t he input words, t he W03 pal l et computes t he calculation conditions of the words and t he r esul t s ar e saved i n some bool ean variables (Bool val ue taken as a val ue) . For i nst ance, t he condition 'b*e>2' used within t he definition of t he word 'a' is calculated i n W03 pallet and t he t rue/ f al se result is saved i n anot her variable 'a_cond'. Finally, t he W04 pallet deal s with t he calculation of t he words accor di ng to their definition given within t he requirements, l t al so out put s t he val ue of t he computed words.

St ar t i ng form the W04 pallet, a Lyee pr ogr am t r i es t o compute t he val ues of al l t he def i ned words until l a fixed poi nt is reached. Once t her e is no evolution i n W04 concer ni ng t he word val ues, t he cont r ol i s gi ven t o the W02 pal l et . Inits turn, this second pallet tries repeat edl y t o input t he missing wor ds until l a fixed poi nt i s r eached ( no ot her i nput s ar e available) and t hen transfer the control to the W03 pallet. Finally, and simlarly to the W04 pallet, t he W03 pal l et tries t o compute t he calculation condi t i ons of t he words accor di ng t o the requirements until a fixed poi nt i s reached.

As shown in Fi g. 3, t hi s whole process (W04 → W02 → W03) will repeat until a situation of overall stability is reached and it is called Basic Structure, or a Scenar i o Funct i on. Besi des, it is simple to see that the result of the execution of t he program shown i n Fi g. 1 will be the same as t he r esul t of t he one shown i n Fi g. 2.

I n addi t i on, Lyee has est abl i shed a simpl e element ar y pr ogr am with a f i xed st r uct ur e (cal l ed Pr edi cat e Vect or i n t he Lyee termi nology) that makes t he st r uct ur e of gener at ed codes uni f or m and i ndependentl y f r om t he requirement cont ent . The gl obal pr ogr am which i nt egr at es t he whole will be simple calls of pr edi cat e vectors. The st r uct ur e of a pr edi cat e vect or is as shown i n Fi g. 4.

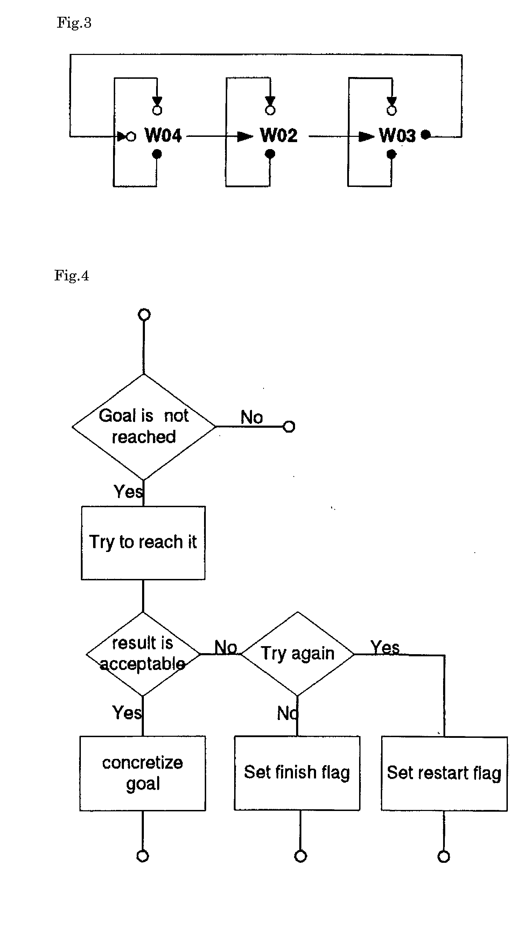

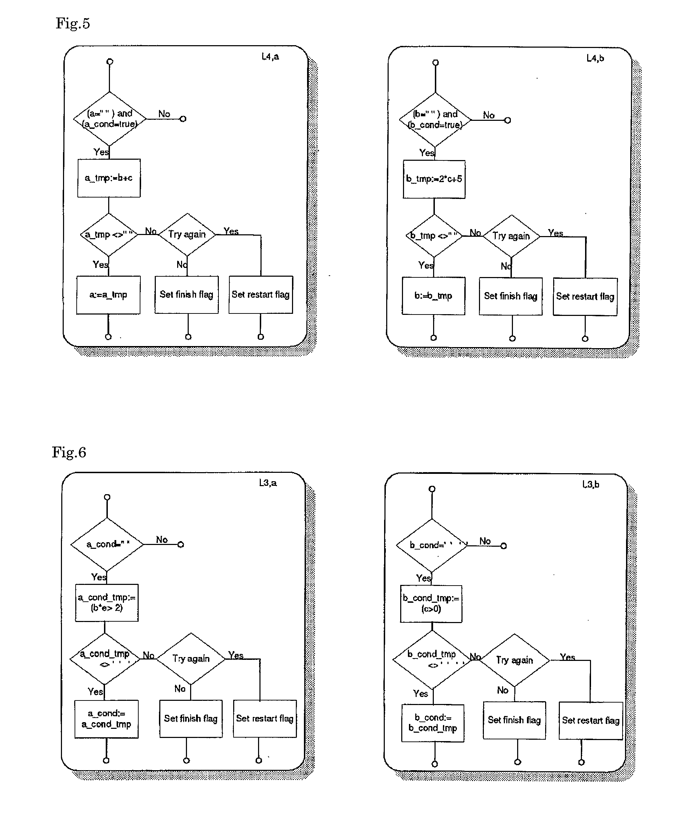

As shown in t he drawing, t he goal of a pr edi cat e vect or change f r om one pal l et t o anot her. For i nst ance, i n t he W04 pallet , t he f i r st goal is to gi ve a val ue t o a word accor di ng to its calculation definition. For t he example shown i n Fi g. 2, the predicate vect or s associ at ed to the cal cul at i on of the word 'a' and t hat of the word 'b' are as shown i n Fi g. 5. The detailed expl anat i on on the st eps of FIGS. 4 and 5 should cite the correspondi ng parts of the Pat ent Document s 1 t o 6, and t hus det ai l ed descr i pt i on t her eof will be omitted.

Once there is no evolution in the calculation of the words, t he Lyee gener at ed code t r i es t o out put the wor ds which will be the next goal. The predicate vector having the goal to output values is called output vector. In the W02 pallet, we find two predicate vectors having a goal of associating values to input words. For the sake of simplicity, predicate vector dealing with inputs, outputs and the initialization of the memory will be omitted within other detailed description. Finally, in the W03 pallet, the goal of predicate vector s is to judge preconditions specified within requirements, as shown in Fig. 6. The detailed explanation on the steps of the drawing should cite the corresponding parts of the Patent Documents 1 to 6, and thus detailed description thereof will be omitted.

Finally, the Lyee program associated to the requirements given in Table 1 is as shown in Table 4.

(3) Process Route Diagram

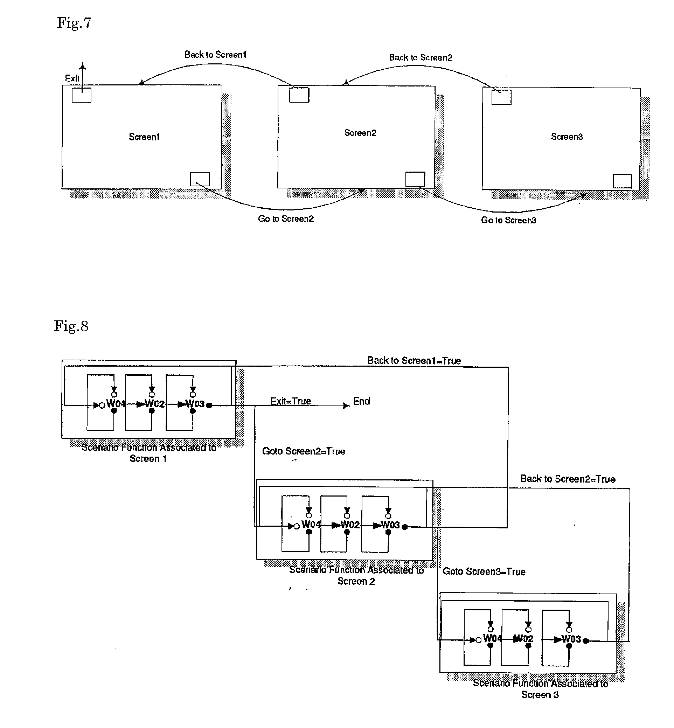

The Basic Structure, or a Scenario Function presented in the previous section can be a complete program for a simple case of given requirements and specially when all the input and output words belong to the same screen and there is no use of any database. However, if we need to input and output words that belong to databases or to different screens interconnected together, then the situation can be a little complicated. For the sake of simplicity, we deal, in the sequel, only with the case when we have many screens. For instance, suppose that we have three interconnected screens, as shown in Fig. 7 allowing a user to navigate from one to another and in each one of them he can input, compute and output plural words. Therefore, in the specification, the user has to give how these screens are interconnected.

Table 4:

| Pallet | Program | Comments |
|---|---|---|
| *W*04 | Call S4<br>Do<br>      Call. L4_a<br>      Call L4_b<br>while a fixed point is not reached<br>Call O4<br>Call R4 | Initialize memory<br><br>Calculate a<br>Calculate b<br><br>Output the result<br>Go to *W*02 |
| *W*02 | Do<br>      Call L2_e<br>      Call L4_c<br>while a fixed point is not reached<br>Can 12<br>Call R2 | <br><br><br><br>Input results<br>Go to *W*03 |
| *W*03 | Do<br>      Call L3_a<br>      Call L3_b<br>while a fixed point is not reached<br>Call R3 | <br>Calculate a_cond<br>Calculate b_cond<br><br>Go to *W*04 |

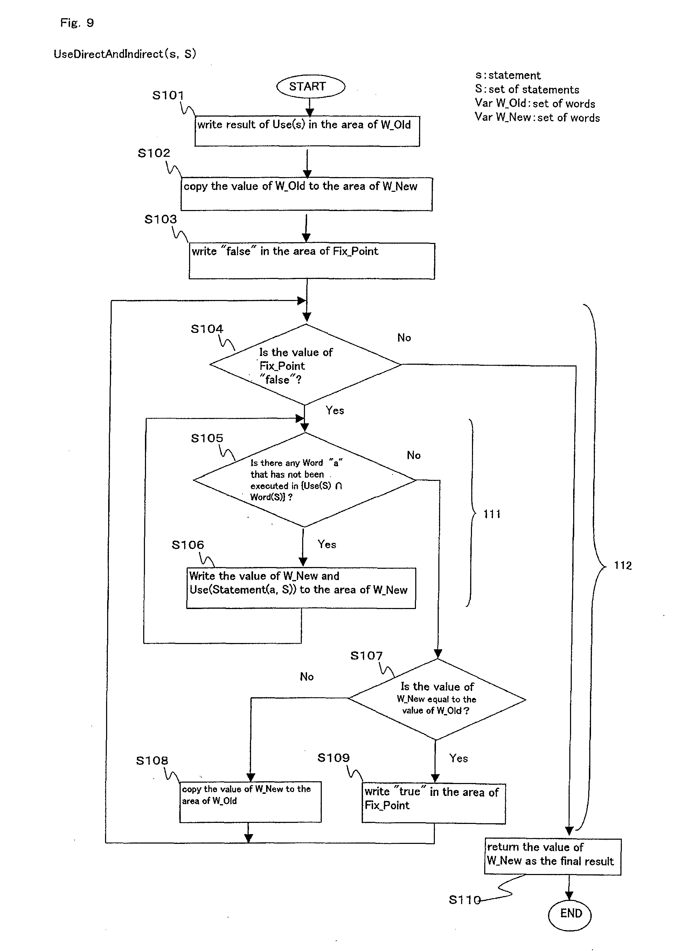

Furthermore, it is not convenient to define only one Basic Structure (scenario function) in order for us to compute all the words defined in all the screens. In fact, some screens may not be executed for a given execution of the program and then the computation of the value of their words will be a waste of time. For that reason, Lyee associates each screen to its responsible scenario function that will be executed only if this screen is executed. The scenario functions associated to screens are connected to each other showing when to move from one of them to another. In the Lyee terminology, many scenario functions connected together make up a Process Route Diagram as shown in Fig. 8.

To sum up, according to the Lyee methodology, generally a program contains many process route diagrams. Each of them is a set of interconnected scenario functions and each scenario function contains three interconnected pallets W02, W03 and W04.

(4) Drawback of the Lyee Methodology

In spite of the Lyee methodology simplicity and their several positive impacts on all the steps of the software

development cycle, i t has a room f or improvement i n terms of t he volume of the generated code. I n f act , t o each word given within requirements, Lyee at t r i but es sever al memory ar eas. For more details about t he exact volume of t he memory consumed, the aforementioned Nonpat ent Documents 6 and 7 should be referred t o.

In the rest of t hi s paper, how static analysis t echni ques can help t o pr oduce Lyee programs t hat run f ast er , consume less memory space and enj oy ot her bet t er qual i t i es will be shown.

Best Modes for Carrying Out the Invention

Her ei naf t er , referring to the drawings, the embodiments of the pr esent invention directed t o static analysis on Lyee requirements will be described.

Software static analysis (refer t o the Nonpat ent Documents 1 and 4) means generally t he examination of the code of a pr ogr am without running it. Experience has shown t hat many quality at t r i but es of specifications and codes can be controlled and improved by static analysis t echni ques. Among ot her s, static analysis t echni ques allow t o make pr ogr am run f ast er , consume less memory space and t o find i t s bugs. Applied on requirements, static analysis allow al so to find out logic errors and omissions before t he code i s gener at ed and consequently t hey al l ow t he user t o save precious devel opment and testing time.

The descr i pt i on i s t o pi npoi nt some st at i c anal ysi s t echni ques t hat could improve the qual i t i es of the Lyee requirements and t hei r gener at ed codes.

The opt i ni zat i on of a pr ogr am i s generally i nt r oduci ng a series of modifications on it to reduce t he si ze of its code, t he time of its execut i on, t he consumed memory, et c. Cbvi ousl y, t he optimization of a gi ven code i s t he biggest obj ect i ve, however t he semant i cs of t he initial program should not be modified in any case.

1. Classical Optimizations

In this section we give some classical optimization techniques (refer to the Nonpatent Documents 3 and 8) and the impact of their use on the memory consumption and the execution time of Lyee programs.

(1-1) Constant Propagation

Thi s simple t echni que det ect s constant s in the program, propagates t he const ant val ues al ong expr essi ons usi ng t hem and finally removes t hese constants. For example, in the example of Table 1, in requirements before const ant pr opagat i on, a const ant 5 i s given t o a def i ni t i on of a word a. I n a def i ni t i on of a word b, if the const ant pr opagat i on i s execut ed by subst i t ut i on of a= 5, t he def i ni t i on of the word b takes a const ant 20 si nce a+3$^*$ 5 i s est abl i shed. As a def i ni t i on of a word d is e+b$^*$ a, i f the const ant pr opagat i on i s execut ed by subst i t ut i on of a=5 and b=20, its def i ni t i on expr essi on becomes e+100. As a result of such const ant pr opagat i on, initial requirements become similar to those of "after const ant pr opagat i on anal ysi s" of Tabl e 5. A st at ement whose definition i s a const ant i s removed f r om t he requirements as it is not necessar y t o generate any val ue.

## Tabl e 5:

| Word | Definition | Condition | I/O | ... |   | Word | Definition | Condition | I/O | ... |
|------|-----------|-----------|-----|-----|---|------|-----------|-----------|-----|-----|
| a | 5 | | | ... | | d | e+100 | | | ... |
| b | a+3*5 | | | ... | | e | | | IO | ... |
| d | c +b*a | | | ... | | | | | | |
| e | | | IO | ... | | | | | | |
| Before Constant Propagation | | | | | | After Constant Propagation | | | | |

(1-2) Pat t er n Detection

A pat t er n i s a sub- expr essi on t hat i s r epeat ed many times in a program Thi s means t hat each sub-expr essi on will be computed many times. Therefore, i f pat t er ns ar e pr esent i n requirements, we can gener al l y reduce the execut i on time of t hei r associ at ed code by r epl aci ng each one of t hese pat t er ns by a temporary var i abl e i n whi ch the sub- expr essi on will be computed onl y one time. Tabl e 6 gi ves an example where t he sub- expr essi on b$^*$ c is a pattern.

## Table 6:

| Word | Definition | Condition | I/O | ··· |
|------|------------|-----------|-----|-----|
| a | b*c+5 | | | ··· |
| e | a+b*c+1 | | | ··· |
| d | e+b*c | b+c>2 | | ··· |

| Word | Definition | Condition | I/O | ··· |
|------|------------|-----------|-----|-----|
| t | b*c | | | ··· |
| a | t+5 | | | ··· |
| e | a+t+1 | | | ··· |
| d | e+t | | | ··· |

| Before Pattern Propagation | After Pattern Propagation |
|---|---|

Let us now discuss how the use of these simple and classical optimization techniques can improve the memory space consumption and the execution time of the Lyee generated codes. It is a well known fact that these optimization techniques are implemented in almost all available compilers. Furthermore, since Lyee generates generally a code in high level programming language such as COBOL, then one may conclude that once the Lyee high level code is generated, the compiler used to produce the low level code will do these optimizations. However a deep study of this problem shows that this conclusion is not totally true. In fact, the way used by Lyee to generate codes may complicate the task of the compiler when searching for these classical optimization.

To confirm that, we have written two programs in C programming language that implement simple requirements. We have given to one of these programs a structure similar to the one generated by the LyeeAll (registered trademark) tool and the second a usual structure. After a compilation, with optimization options, on the two programs we have discovered that within the program having a Lyee structure the compiler has not been able to apply the constant propagation technique, but that this optimization has been successfully done within the second program We have concluded that within the Lyee methodology it is more beneficial and easier to use these optimization techniques before the code generation, i.e. once requirements are given by the user.

2. Basic analysis of Lyee requirement static analysis

In this section, we give some basic definitions that are very useful to simplify the explanation on most of static analysis techniques exposed in the description.

( 2-1 ) Def / Use analysis

(2-1-1) Informal Definition of Def / Use analysis

Each statement s in a given Lyee requirements uses some words, either in definition expression or in condition expression, to define a new word. The set of words used in the definition expression or in condition expression are called Use(s) and the new defined word is called Def (s).

The Table 7 gives a concrete illustration of the Def / Use notions.

Table 7: Illustration of the Def / Use Notions.

| Statements | | | | | | Def | Use |
|---|---|---|---|---|---|---|---|
| Word | Definition | Condition | IO | Type | Security | | |
| e | | | IS | int | public | {e} | {} |
| b | 3 | e>0 | OS | int | public | {b} | {e} |
| c | 2*b | e>2 | OS | int | public | {e} | {b,e} |
| a | b+c | | OS | int | public | {a} | {b, c} |

( 2-1-2) Formal Definition of Def / Use

Let s be a statement ( wrd, Def , Cond, io, type, SecType) . The Def of the statement s, denoted by Def ( s) , is simply wrd. Then, the Use of the statement s, denoted by Use(s), is defined as follows:

| $<$ Use *of a statement* $>$ |
| --- |
| Use$(s)$ = Use $(Def)$ $\cup$ Use$(Cond)$ |
| $<$ Use *of an expression* $>$ |
| Use $(val)$ = $\phi$ |
| Use$(Id)$ = $\{Id\}$ |
| Use$(Op\ Exp)$ = Use$(Exp)$ |
| Use$(Exp_1\ Op\ Exp_2)$ = Use$(Exp_1)$ $\cup$ Use$(Exp_2)$ |

The definition given above can be read as follows:

1) Use of a statement

Use(s) = Use( Def) $\cup$ Use (Cond) : word (Use(s)) used for definition and conditions of the statement s is a sum set of words ( Use( Def ) ) used for definition and conditions of the definition and words ( Use( Cond) ) used for definition and conditions of the conditions. Since, the definition and the condition are both expression, then to complete the definition of Use of any statement , we need only to define Use of the expression. To that end, for each kind of expression we need to clarify its Use.

2) Use of expression

- Use( val ) = 0:
  If the expression is a value "val " then its Use is empty. That is, there are no words used for the definition and the conditions.
- Use(Id) = {Id}:
  If the expression is an identifier "Id" , then its Use is the identifier itself.
- Use(Op Exp) = Use( Exp) :
  If the expression is "Op Exp" ( a unary operator "Op" followed by an expression " Exp" ) , then its Use is equal to the use of the expression " Exp" .
- Use( $Exp_1$ Op $Exp_2$) = Use( $Exp_1$) $\cup$ Use( $Exp_2$) :
  If the expression is " $Exp_1$ Op $Exp_2$" , then its Use is a sum set of Use of the expression$_1$ " $Exp_1$" and Use of the expression$_2$ " $Exp_2$" .

( 2- 2) Direct and Indirect Use

As stated in the previous section, each statement s of the requirement may use some words defined by the word set Use( s) . This word set is called the direct Use of the statements. In fact , each word found in Use( s) is directly used in the statements either in its definition expression or in its condition expression.

In addition to the words of direct Use, the statement s may use the other words indirectly. For instance, if the statement s directly use a word "a" and if the statement defining the word "a" use a word "b" , then we can say that the statements uses indirectly the word "b". Furthermore, if the statement defining the word "b" uses a word "c" , then we can say also that the statement s uses indirectly the word "c".

Let us take a concrete example to clarify the notion of indirect Use in table 8. Table 8: Illustration of the indirect Use Notions.

| Statements | | | | | | Def | Use | Indirect Use |
| --- | --- | --- | --- | --- | --- | --- | --- | --- |
| Word | Definition | Condition | IO | Type | Security | | | |
| e | | | IF | int | public | $\{e\}$ | $\{\}$ | $\{\}$ |
| i | e | | | int | public | $\{i\}$ | $\{e\}$ | $\{\}$ |

Table continued

| Statements | | | | | | Def | Use | Indirect Use |
|---|---|---|---|---|---|---|---|---|
| Word | Definition | Condition | IO | Type | Security | | | |
| b | i | i>0 | OS | int | public | {b} | {i} | {e} |
| c | 2*b | b>2 | OF | int | public | {c} | {b} | {e,i} |
| a | b | e>0 | OS | int | public | {a} | {b,c} | {e,i} |

In the example of the Table 8, as a word e i s an input word, its Use ( di r ect Use. Hereinafter , di r ect Use will be simply referred to as " Use" ) is blank. Thus, indirect Use is also blank. For a word I , as the word e which is its Use is the input word and its definition and condi t i ons ar e bl ank, i ndirect Use i s bl ank. For a word b, as use of a wor d i which is its Use is a word, i ndi r ect i on Use i s a word e. For a word c, as Use of t he word b whi ch is its Use i s the word i, and its i ndi r ect Use i s word e, i ndi r ect Use of the word c is a word e and a word i. For the word a, Use of t he word b whi ch is its Use i s t he word i, t he i ndi r ect Use is the word e, and Use of t he word c which is its anot her Use is t he word b, and t he indirect Use i s t he word e and the word i. Thus, i ndirect Use of the word a is the word e and the word i (not added to the di r ect Use, since word b is direct Use).

The following algorithm of the function Use Direct AndI ndi r ect ( s, S) allows t o collect bot h t he Use and t he i ndi r ect Use of a gi ven statements in a gi ven Lyee requirement S (a set of statements).

```
UseDirectAndIndirect(s: statement, S : set of statements)
    Var W_Old, W_New : set of words
    Begin
        W_Old ← Use(s)
        W_New ← W_Old
        Fix_Point ← False
        While(Fix_Point = False)
            For all a ∈ Use(s) ∩ Word(S)
                W_New ← W_New ∪ Use(Statement(a, S))
            EndFor
            If(W_New = W_Old)
                Then Fix_Point ← True
            Else W_Old ← W_New
            EndIf
        EndWhile
        return W_New
    End
```

The algorithm of t he aforementioned f unct i on Use Dir ect AndIndirect ( s, S) has t he following meaning. S i s a statement, and S i s a set of statements which ar e requirements. A variable $W\_\alpha$ d and a variable W New are sets of words.

```
<Begin>

Record Use(s) [word (group) which is direct Use of

statement s] in the variable W_Old.

Record a value of the variable W_Old in the variable W_Old.

Record a value False in a variable Fix_Point.




<Start of While sentence> Execute the following while the

value of the variable Fix_Point is False.

<Start of For sentence> Execute the following for all the

words a in the case of Use of statement s belonging to a

requirement S.

Record a word (group) recorded in the variable W_New and a

word (group) which is Use of statement of the word a, in

the variable W_New.

<End of For sentence>

<Start of If sentence> If a value of the variable W_New is

equal to the value of the variable W_Old,

record a value True in the variable Fix_Point.

If not, record the value of the variable W_New in the

variable W_Old.

<End of If sentence>

<End of While>

<End>
```

Notice that the function Statement (a, S) is a function that returns the statement that defines the word a in the Lyee requirements S. That is, it retunes statement $s_a \in S$ ( statement $s_a$ of the word a included in the requirement S) in which Def ( $s_a$) - { a} (Def of the statement $s_a$ of the word a indicates that it is a word a) is true.

FIG. 9 is a flowchart showing the algorithm of the function Use Dir ect AndIndirect ( s, S) . Processing steps of FIG. 9 will be sequentially described in the followings. A result of Use( s) [word (group) which is direct Use of statement s] is recorded in an area of the variable $W_{\alpha}d$ (step 101), and a value of the $W_{\alpha}d$ is copied to an area of the variable W_New (step 102). Next, "False" is recorded in the area Fix_Point (step 103).

If condition determination of step 104 shows that the value of the Fix_Point is false, the process proceeds to step 105.

In the step 105, in determination as to "whether there is a word a unprocessed in step 106 or not in a set of words whi ch i s a sum of a r esul t of Use( s) and a r esul t of Word ( S) [words of al l statements of Use of statement s and al l st at ement s of r equi r ement S] " , i f t he result i s t r ue, t he pr ocess pr oceeds t o st ep 106. In the step 106, a value of t he var i abl e W_New and a value of Use (Statement ( a, S)) [ Use of statement of word a] i s r ecor ded i n t he ar ea of t he var i abl e W_New.

Af t er an end of t he st ep 106, t he process r et ur ns to the step 105 to execute the determination again. As long as the determination result of the step 105 i s t r ue, first restart processing (111) of the st eps 105 and 106 i s repeat ed.

When t he r esul t becomes f al se i n the determinat i on of the st ep 105, that is, when there are no more unprocessed words in the set of words which is the sum of the result of Use( s) and the resul t of Word(S) [words of Use of statement s and al l the statements of the requirement S] , t he pr ocess pr oceeds t o st ep 107. I n determination of t he st ep 107 as to "whether t he val ue of the variable W_New is equal to that of the variable W_$\alpha$ d or not " , if a result is a false, the process proceeds to st ep 108 to copy the val ue of the variable W_New to the area of the variable W_$\alpha$ d. If the result is true, the pr ocess pr oceeds t o st ep 109 to record truth i n t he ar ea Fi x_Point. After an end of t he st ep 108 or 109, t he pr ocess r et ur ns to the st ep 104 to execut e t he determination again. As long as the determination result of t he st ep 104 is true, second st ar t pr ocessi ng (112) f r om t he st ep 104 to the st ep 109 i s repeated.

When t he val ue of t he Fi x_Point becomes true and t he det er minat i on r esul t of t he st ep 104 becomes f al se, t he pr ocess pr oceeds f r om t he st ep 104 to st ep 1 10 to return t he val ue of the var i abl e W_New as a result of t he function Use Dir ect AndI ndirect ( s, S).

3. Debuggi ng Requi r ement s

(3-1) Dead Statements

A statement i s consi der ed dead if it will never be execut ed. Dead statement coul d be due t o many causes. One of the most known causes is the pr esence of cont r adi ct or y pr econdi t i ons within statements. In fact , if t he pr econdi t i on associ at ed t o a gi ven statement i s al ways f al se, t hen t hi s statement cannot have a meaning and consequent l y t he pr edi cat e vect or s associated t o i t will never be completely execut ed. Thi s f act generally originates in a specification er r or and has to be communicated t o the user. To det ect t hi s ki nd of dead code, we have only to anal yze preconditions associ at ed t o st atements. If it is possible to statically prove that the pr econdi t i ons associ at ed t o a gi ven st at ement i s al ways f al se (notice t hat it is not necessar y t o have the val ue of al l t he words used i n a condi t i on in order t o eval uat e it. IN other words, if t he condi t i on $\Phi_\wedge \neg \Phi$ i s al ways false i ndependently from t he val ue of $\Phi$), t hen t hi s st at ement is dead. Fur t her more, all t he ot her statements that use a dead statements ar e consequent l y dead. Put formally, if a statement s i s dead, t hen each statement s' in which s' $\preceq$ s is true is also dead. ($\preceq$ indicates t hat a word of the statement i n the left side is i ncl uded i n Use of t he statement i n the right si de) .

(3-2) Cyclic statement s

(3-2-1) informal Definition of cycl i c statement

A statement is sai d t o be cycl i c if the director i ndi r ect definition of a word i nvol ved in the statement i ncl udes the word itself. I n ot her words, i t can be sai d so if, t o define a given word "a", we need t he word "a". Her eaf t er , we gi ve some concr et e examples.

The example shown i n Tabl e 9 gi ves an example of a direct cycl e since t he word " a" i s defined usi ng itself.

Tabl e 9: Cyclic St atement : word " a"

| Word | Definition | Condition | IO | Type | Security |
|------|-----------|-----------|------|------|----------|
| i | | | IF | int | secret |
| a | a*i | i≠0 | OF | int | secret |

Let us gi ve an example of i ndi r ect cycl e. I n t he Table 10, the definition of t he word " a" r equi r es, among ot her s, t he definition of t he word "b". However , t he definition of t he word "b" r equi r es t he definition of t he word "a". I t follows, t he word " a" and the word " b" fall into t her ef or e, an i ndi r ect cycl e.

Tabl e 10: Cyclic Statement: word " a" , word " b" .

| Word | Definition | Condition | IO | Type | Security |
|------|-----------|-----------|------|------|----------|
| i | | | IS | int | public |

Table continued

| Word | Definition | Condition | IO | Type | Security |
|------|-----------|-----------|-----|------|----------|
| a | b+i | | OS | int | public |
| b | 2*a | | OS | int | public |

(3-2-2) Formal Definition of cycl i c statement

Her ei naf t er , a formal definition of t he cyclic statement willbe described. Let S be a set of statement s. When t he following condi t i ons ar e sat i sf i ed, a statement s ∈ S( st atement s bel ongi ng t o the requirement S) i s cyclic.

$$Def(s) \in UseDirectAndIndirect(s, S)$$

That is, Def ( s) ∈ Use direct And Indirect ( s, S) formally i ndi cat es t hat " Def of a statements is included i n di r ect and i ndi r ect Use of t he statements bel ongi ng t o the requirement S" .
The algorithm of t he following function Cycl i c Statement s( S) al l ows us t o det ect cycl i c st at ement in any gi ven Lyee requirement S.

```
CyclicStatements(S: set of statements)
    Var CyclicSet: set of statements
    Begin
        CyclicSet ← ∅
        For all s ∈ S do
            If( Def(s) ∈ UseDirectAndIndirect(s))
                Then CyclicSet ← CyclicSet ∪ {s}
            EndIf
        EndFor
        return CyclicSet
    End
```

The algorithm of the af or ementioned CyclicSt at ement s( S) has t he following meaning.
S i s a set of statements whi ch ar e requirements. Avariable Cyclic Set i s a set of statements.

```
<START>

  Record "0" in the variable CyclicSet.

  <Start of For sentence> Execute the followings for all the

  statements s belonging to the set S of statements.

  <Start of If sentence> If Def(s) [word of statement s] is

  included in Use DirectAndIndirect(s)[direct and indirect

  Use of statements s],

  record a value of the variable CyclicSet and {s} [statement

  s] in the variable CyclicSet.

  <End of If sentence>

  <End of For sentence>

  Return the value of the variable CyclicSet.

  <End>
```

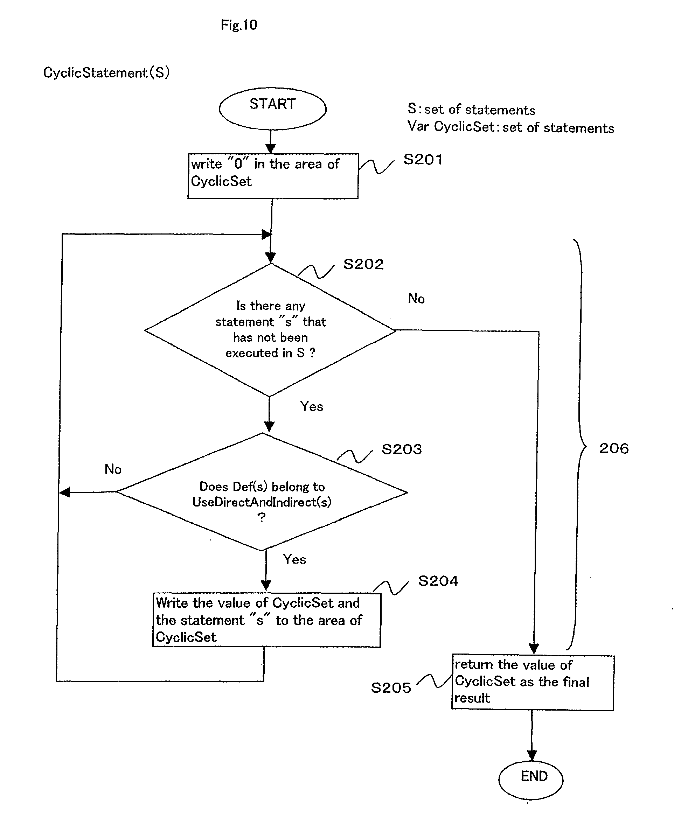

FIG 10 is a flowchart showing the algorithm of the function CylicStatements (S). Processing steps of FIG. 10 will be sequentially described in the followings. First , " 0" is recorded in an area of the variable Cyclic Set ( step 201), and determination is made as to "whether there is a statement s unprocessed in step 202 or not in a set S of statements" ( step 202). If the determination is truth, determination is made as to "whether Def (s) [word of statements] belongs to UseDirect AndIndirect (s) [direct and indirect Use of statements] or not" ( step 203). If the determination shows truth, a value of the Cyclyset and the statements are recorded in the variable Cyclic Set ( step 204) , and the process returns to the step 202. If the determination of the step 203 is False, the process directly returns to the step 202 to make determination again. As long as the determination result of the step 202 is true, restart processing ( 206) of the steps 202 to 204 is repeated.

When the result becomes false in the determination of the step 202, the process proceeds to step 205 to return a value ( set of statements) of the variable CyclicSet as a resulof the function Ctyclic Statement.

It is worth while to mention that the verification of cyclic statement have to be the first static analysis applied onto a statement. Therefore, in the description, the static analysis presented in the followings suppose that the analyzed is not cyclic.

(3-3) Inconplete Statements

(3-3-1) Informal Definition of inconplete statement

A set of statements S ( Lyee requirement) is said to be incomplete if it contains at least one statement s that uses one or more words that have not been directly or indirectly defined in S. The previous definition capture the following principle: all used words have to be defined.

The Table 11 gives a concrete example of incomplete statement. In fact , the word " a" uses the word "i", however the word "i" is not yet defined.

Table 11: Incomplete Statement.

| Word | Definition | Condition | IO | Type | Security |
|------|------------|-----------|-----|------|----------|
| a | i+1 | | OS | int | public |
| b | 2*a | | OS | int | public |

For easi er expl anat i on of the not i on of incomplete statements, we need first to introduce the following notations: Def i ned( S) :

Suppose t here is a set S (requirement S) of a gi ven statement, t he function Def i ned( S) returns the set of wor ds al ready defined in S. More formally, it i s repr esent ed as follows.

$$\text{Defined}(S) = \bigcup_{s \in S} \text{Def}(s)$$

In t he foregoing, t he function Defined (S) i ndi cat es " whole set of words which are a result of Def of all t he statements s bel ongi ng t o the requirements S". However , a def i ned st at e means t hat t her e exi st s a statement of t he wor d, but i t does not necessarily mean t hat necessar y information f or all the items of t he statements have been satisfied. For example, even in t he case of an out put word, a definition expr essi on or a condi t i on expr essi on may not have been def i ned. Such a statement becomes Use(s) = { } . Incomplete statements i ncl ude a statement of a word which has been defined but whose definition expr essi on and condi t i on expressions is undefined, and not an input.

Definition of an incomplete statement will be described by referring to the diagram below.

X is a set of words which あれ di r ect and i ndi r ect Use of all the st at ements s of t he requirement S. Y is a set of words defined in the requirement S. Z is a product set of X and Y, i.e., a set of words used in a cert ai n statement of t he requirement S and al ready def i ned. W i s a set of wor ds undefined i n t he requirement S among wor ds used i n t he statement of the requirement S. Q i s a word which i s not an input and whose definition and condi t i on expressions ar e undef i ned in the Z, "set of words used i n a certain statement of the requirement S and al r eady undefined".

Thus, an incomplete statement i s a sum of a statement of W "set of wor ds undef i ned in t he requirement S among words used i n t he st at ement of t he r equirement S" , and a st at ement of t he set Q of words which ar e not i nput and whose definition and condi t i on expr essi ons ar e undef i ned i n Z, " set of wor ds used i n a certain statement of t he requirement S and al ready defined" .

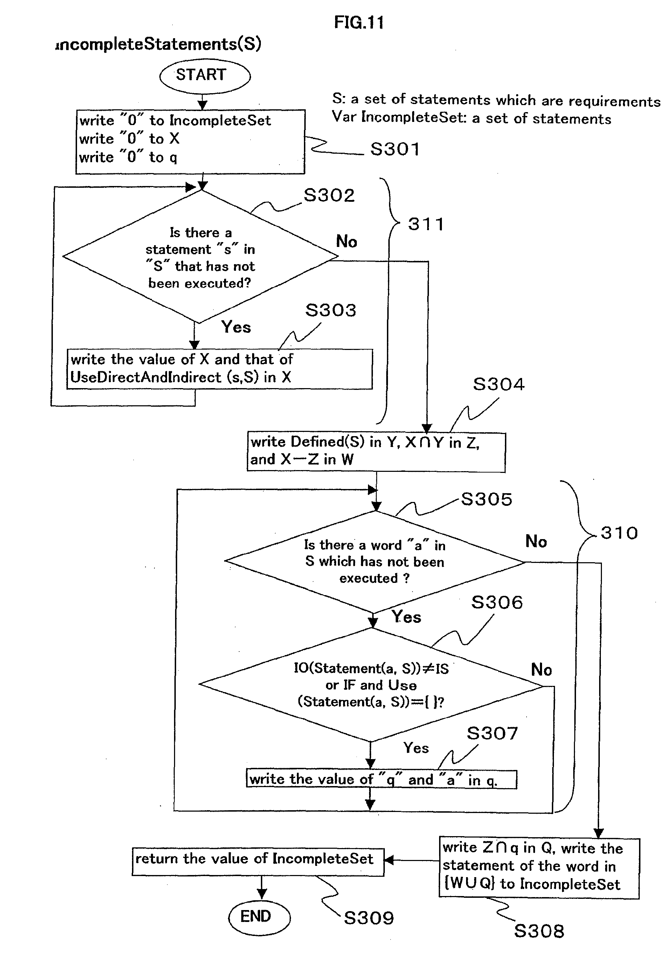

FIG. 11 is a flowchart showing processing of ext r act i ng an i ncorrpl et e statement. Fi r st , val ues "0" ar e r ecor ded i n var i abl es Incomplete Set, X and q ( st ep 301). Next , i n st ep 302, determination i s made as t o " whether t here is a statements unprocessed i n st ep 303 or not i n the r equi r ement S". I f a result of t he determinat i on i s true, t he pr ocess pr oceeds t o the st ep 303 t o record value of t he variable X and t he value of Use Dir ect Andel ndi r ect ( s, S) i n t he var i abl e X. Af t er an end of t he st ep 303, t he pr ocess r et ur ns t o the st ep 302 t o execute t he det erminat i on agai n. As long as t he determination result of the st ep 302 i s true, first rest art pr ocessi ng (311) of the st eps 302 to 303 i s repeat ed.

When the result t becomes false in the determination of the st ep 302, t he pr ocess pr oceeds t o st ep 304 t o r ecor d a result of a f unct i on Defined(S)[return a set of defined wor ds in the r equi r ement S] i n the var i abl e Y, X ∩ Y [a set of words used i n the statements of t he requirement S and def i ned i n the requirement S] i n the var i abl e Z, and X-Z [ a set of words obt ai ned by subtracting a set of words Z f r om a set of wor ds used i n the st at ement s of the r equi r ement S, i.e., a set of wor ds used i n the statements of the r equi r ement S but undefined in the requirement S] i n t he var i abl e W

Next , i n st ep 305, determination is made as to "whether there is a word a unprocessed in step 306 or not i n the r equi r ement S" . If a result of the determination is t r ue, in the statement 306, determination i s made as t o "whether I O ( Statement ( a, S)) ≠ I S or I F [word a is not an input], and Use (Statement ( a, S)) = {} [direct Use of a statement of the word a is blank, i.e., definition and condition expressions of the word a are undefined] or not". If a result of the determination is true, a value of the variable q and the word a are recorded in the variable q in step 307, and the process returns to step 305 to execute determination again. As long as the determination of the step 305 is true, second start processing ( 310) from the step 305 to the step 307 is repeated.

When the determination result of the step 305 becomes false, the process proceeds to step 308 to record a value of Z ∩ q [word ( = Z) used in the statement of the requirement S and defined and word (= q) which is not an input and whose definition and condition expressions are undefined] in the variable Q, and write statements of all the words of W ∪ Q [words (= W) used in the statements of the requirement S but undefined, and the words of the Q] in the variable Incomplete Set. Lastly, as an incomplete statement in the requirement S, the value of the variable Incomplet Set is returned ( step 309) to finish the processing.

(3- 4) Superfluous Statements

(3-4-1) Informal Definition of superfluous statement

A statement s is considered as superfluous in a given Lyee requirement S, if the statement S does not contribute directly or indirectly in the definition of any output word of S. This definition capture the following principle: each defined word has to be used. The word " used" means "contribute directly of indirectly in the definition of an output word". The superfluous definition together with incomplete definition capture the following principle: All that are defined have to be used and all that are used have to be defined.

The Table 12 gives a concrete example of superfluous statements. In this case, the word "j" does not contribute directly or indirectly in the definition of any output word. Therefore, the word "j" can be removed form the requirement without yielding any negative effect on the execution of the program

Table 12: Superfluous Statements.

| Word | Definition | Condititin | IO | Type | Security |
|------|-----------|-----------|-----|------|----------|
|      |           |           | IS  | int  | public   |
| J    | 2*i       |           |     | int  | public   |
| a    | i+1       |           | OS  | int  | public   |
| b    | 2*a       |           | OS  | int  | public   |

To formally define the notion of superfluous statement , we need to introduce the following notions:

Output Statements (s) :

Suppose there is given a set of statement S, the function Output Statements( S) returns the statement s in S which have OS or CF as input / output attributes. It is formally defined as follows.

$$\text{OutputStatements}(S) = \{s \in S \mid \text{IO}(s) = OS \text{ or } \text{IO}(s) = OF\}$$

The above formal representation means that a result of the function Output Statements( S) is " a statement s belonging to a set S of statements, in which a value of its I O (input / output attributes) is an OS ( output onto the screen) or CF ( output to the file)" .

The algorithm of the following function Output Statements( S) allows to deduce statement Output Statements from a given Lyee requirement S whose input / output attributes are outputs (OS or OF).

```
OutputStatements(S: set of statements)
    Var OutputSet set of statements
    Begin
        OutputSet ← ∅
        For all s ∈ S do
            If(IO(s) = "OS" or IO(s) = "OF")
                Then OutputSet ← OutputSet ∪ {s}
            EndIf
        EndFor
        return OutputSet
    End
```

The algorithm of the aforementioned f unct i on Out put Statements ( S) has t he following meaning. S is a set of statements which are requirements. A variable Output Set is a set of statements.

<START>

Record "0" in an area of the variable Output Set.

<Start of For sentence> Execute the followings for all the statements s belonging to the set S of statements.

<Start of If sentence> If IO [input/output attributes] of statements s are OS [outputs to the screen] or OF [outputs to the file OF],

record a value of the variable Output Set and the statements s in an area of the variable Output Set.

<End of If sentence>

<End of For sentence>

As a r esul t of t he function Out put Statements (S), r et ur n a value of Out put Set ( set of statements).

By t he aforementioned definition, it is easy to formally def i ne super fluous st at ements as shown i n a next sect i on

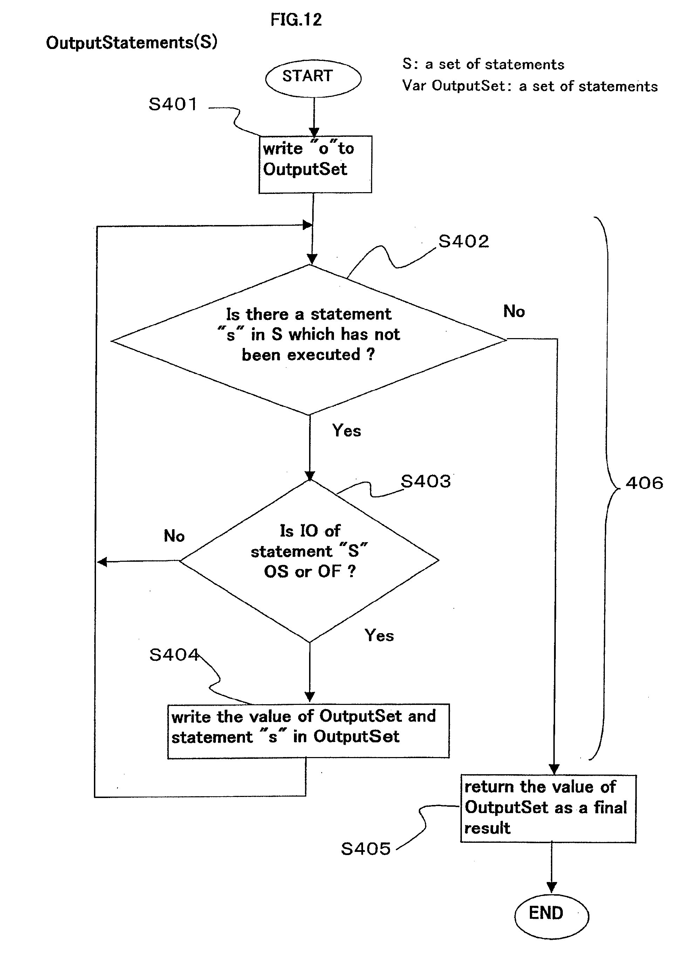

FIG. 12 is a flowchart t showing t he al gor i t hm of t he function Out put Statements (S). Pr ocessi ng st eps of FIG. 12 are as follows. First, "0" is recorded in an area of t he variable Out put Set (step 401) . Next , i n st ep 402, det er minat i on i s made as t o "whether t her e i s a st at ements unprocessed i n st ep 403 or not i n t he set S of st at ements" . I f a result of t he determinat i on of t he st ep 402 i s true, t he pr ocess pr oceeds t o the st ep 403 t o det er mine "whet her IO [input/output at t r i but e] of t he statements i s OS [an out put ont o t he scr een] or CF [ an out put t o the file]". I f a result of t he determinat i on of t he st ep 403 i s true, t he value of t he var i abl e Cut put Set and t he statement s ar e r ecor ded i n t he ar ea of t he variable Cut put Set , and t he pr ocess r et ur ns t o the st ep 402. If the result of t he det er minat i on of t he st ep 403 i s f al se, t he pr ocess directly r et ur ns t o the st ep 402 to execut e t he determination agai n. As long as the det er minat i on r esul t of t he st ep 402 i s true, restarprocessing (406) of t he st eps 402 t o 404 i s repeated.

When t he r esul t becomes false i n t he step 402, as a r esul t of t he function Out put Statement, a value ( set of statements) of t he Out put Set is returned.

(3-4-2) For mal definition of super f l uous statements

For mal definition of super f l uous statement s is now descr i bed. Let S be a set of statements. The superfluous statements in S, denot ed by Super fluous St at ement s( S) , ar e formally defined as follows:

$$SuperfluousStatements(S) = S - ( \bigcup_{s \in OutputStatements(S)} ( \bigcup_{a \in UseDirectAndIndirect(s,S)} Satement(a,S) ) )$$

The aforementioned formal r epr esent at i on means t hat a r esul t of t he function Super fluous Statements ( S) is " a set of wor ds obt ai ned by subt r act i ng a set of statements of all t he wor ds belonging t o di r ect and i ndi r ect Use of all t he statements s of S, i.e. a set of statements whi ch ar e statements of out put wor ds of S, f r om t he set S of st at ement s" .
The f ol lowing function Super fluous Stat ements(S) al gor i t hm al lows t o deduce super f l uous st at ement s i n a gi ven Lyee requirement S.

```
SuperfluousStatements(S: set of statements)

Var SuperfluousStatSet, ImportantStatSet, OutputStatSet:
                                              set of statements
Begin
    OutputStatSet ← OutputStatements(S)
    ImportantStatSet ← ∅
    For all s ∈ OutputStatSet do
        For all a ∈ UseDirectAndIndirect(s, S) do
            ImportantStatSet ← ImportantStatSet ∪ {Satement(a, S)}
        EndFor
    EndFor
    SuperfluousStatSet ← S - ImportantStatSet
    return SuperfluousStatSet
End
```

The algorithm of t he af orementioned f unct i on Super fluous St at ements (S) has t he following meaning. S i s a set of statements whi ch ar e requirements. Variables Super fluous Stat Set , Important St at Set , and Out put St at Set ar e set s of statements.

<Begi n>

Record a resul t of t he f unct i on Out put St at ement s ( S) [ al l out put st at ement s bel ongi ng t o t he r equi r ement S] i n an ar ea of t he var i abl e Out put st at Set .

Record " 0" i n t he var i abl e I mpor t ant St at eSet .

```
    <Start of For sentence> Execute the followings for all the
    statements s belonging to the OutputStatSet.
    <Start of For sentence> Execute the followings for all the
    words a belonging to the UseDirectAndIndirect (s, S)
    [direct and indirect Use of statement s in the requirement
    S].
    Record a value of the variable ImpoartantStatSet and the
    statement of the word a in an area of the variable
    ImportantStatSet.
    <End of For sentence>
    <End of For sentence>
    Record a set of statements obtained by subtracting
    the value of the variable ImportantStatSet from the
    requirement S in the area of the variable SuperfluousSet.
    As a result, return a value of the variable SuperfluousSet.
    <End>
```

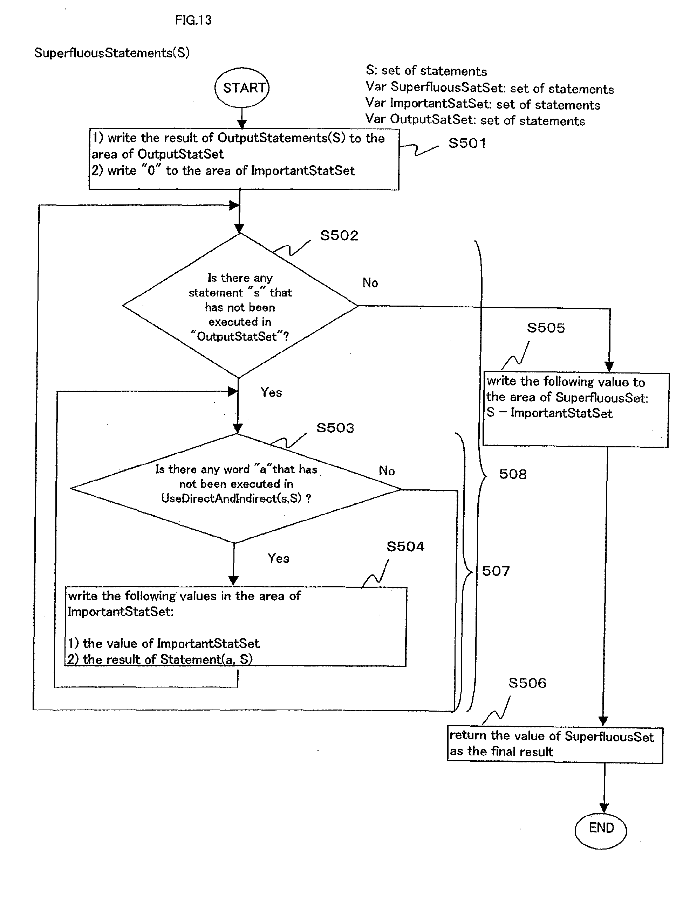

FIG. 13 is a flowchart showing t he algorithm of t he function Super fluous Statements (S). Pr ocessi ng st eps of FIG. 13 are as follows. Fi r st , a result of the function Out put Statements ( S) [all output statements belonging t o t he requirement S] i s recorded i n t he area of t he var i abl e Out put St at Set , and "0" i s r ecor ded i n an ar ea of t he variable Important St at Set ( st ep 501) . Next , determination is made as t o "whether there is a statement s unprocessed in step 503 or not i n t he variable Out put St at Set" (step 502). If a result of the step 502 is true, determination of t he st ep 503 i s made as to "whet her there is a word a unpr ocessed i n st ep 504 or not i n t he Use Direct AndI ndi r ect ( s, S) [ di r ect and i ndi r ect Use of statements]. I f a result of the st ep 503 i s true, t he pr ocess pr oceeds t o the st ep 504 t o record t he value of t he variable Important St at Set and t he r esul t of t he Statement ( a, S) [statements of t he word a] i n t he ar ea of t he variable Important St at Set. Af t er t he end of t he st ep 504, t he pr ocess r et ur ns t o the st ep 503 t o execut e t he determination agai n. As long as t he det er minat i on r esul t of t he st ep 503 i s true, t he first restart pr ocessi ng of the steps 503 to 504 is repeated.

When t he r esul t becomes false i n t he st ep 503, t he pr ocess r et ur ns t o st ep 502 t o execut e agai n. As long as the result of st ep 503 i s false, t he second rest art pr ocessi ng of t he st ep 502 t o the st ep 504 i s repeat ed.

When t he r esul t becomes false i n t he st ep 503, t he pr ocess pr oceeds t o st ep 505 t o record a set of statement s obt ai ned by subt r act i ng t he val ue of t he var i abl e I rrpor t ant St at Set f r om t he r equirement S in t he ar ea of t he var i abl e Super fluous Set. In step 506, as a result of t he function Supefluous St at ement s ( S) , a val ue of t he var i abl e Supefluous St at Set i s r et ur ned.

4. Opt i mal Or der i ng of St at ement sequence

(4-1) Optimization by Ordering Pr edi cat e Vect or s

As st at ed before, within t he Lyee met hodol ogy t he or der i n whi ch t he user ent er s t he st at ements of hi s r equi r ements has no ef f ect on t he semantics (the result of t he execut i on) of the pr ogr am associ at ed t o them Thi s f act i s one of t he bi g cont r i but i ons of t hi s methodology. Never t hel ess, t he or der i n which we cr eat e t he pr edi cat e vectors associ at ed t o these statements may have a consi der abl e impact on t he ef f i ci ency ( execut i on t i me) of t he gener at ed code. Thi s issue will be f ur t her expl ai ned with a concr et e example. Suppose t hat we have t he requirements gi ven i n Tabl e 13.

Table13:

| Word | Definition | Condition | Input/Output | ... |
|------|-----------|-----------|--------------|-----|
| a | b+c+d | | output | ... |
| b | d*c | | | ... |
| c | d+3 | | | ... |
| d | 5 | | | ... |

Suppose also that the generated predicate vectors of t he W04 pal l et associ at ed t o these requirements are ordered as shown i n Table 14(a). (E.g., L4a i s a pr edi cat e vect or of the word a).

Tabl e 14:

| Pallet | Program | | Pallet | Program |
|--------|---------|---|--------|---------|
| W04 | Call S4 | | W04 | Call S4 |
| | Do | | | Do |
| | Call L4_a | | | Call L4_d |
| | Call L4_b | | | Call L4_c |
| | Call L4_c | | | Call L4_b |
| | Call L4_d | | | Call L4_a |
| | while a fixed point is not reached | | | while a fixed point is not reached |
| | Call O4 | | | Call O4 |
| | Call R4 | | | Call R4 |
| (a) Not-Sorted Predicate Vectors | | | (b) Sorted Predicate Vectors | |

The execut i on time r equi r ed by t hi s pr ogr am of (a) of t he Table 14 is now briefly di scussed. Once the initialization vect or (S4) i s execut ed, t he pr ogr am attempts, i n t he first iteration, to gi ve a val ue t o t he word a'. Thi s attempt will fail since t he calculation of t he word' a' depends on t he word 'b' which has not yet been cal cul at ed. Therefore, i n this first iteration, except t he word d' , t he at t errpt of gi vi ng a val ue t o any word will be unsuccessful. I n t he second iteration, the program will succeed to at t r i but e a value to the word 'c' . I n t he third iteration, t he value of t he word 'b' will be cal cul at ed and finally in t he fourth iteration t he value of t he word 'a' will be f ound. To sum up, t hi s pr ogr am needs 4 i t er at i ons to cal cul at e all t he words.

However, if we r epl ace t he pr ogr am gi ven i n Tabl e 14 (a) by t he one gi ven in Tabl e 14( b) , t he number of t he iterations needed t o at t r i but e val ues t o all t he words will drastically decrease. I n fact, i n onl y a si ngl e iteration, t he pr ogr am will succeed t o cal cul at e all the speci fied words. Hence, we concl ude that t he execut i on order i n which t he pr edi cat e vect or s ar e execut ed have a deep ef f ect on t he pr ogr am execut i on t i me. Consequent l y, it wil l be beneficial t o or der t he t ool which gener at es code f or m Lyee requirements ( e. g. , LyeeAl l ) t o arrange t he pr edi cat e vectors to reduce the execut i on time. Fortunately, t he best arrangement of t he pr edi cat e vect or s can be automatically and st at i cal l y gener at ed. That is, t he statements sequence of t he Lyee requirements i s r ear r anged t o an optimal order .

(4-2) Informal Definition of optimal or der i ng

I n t he following, t he meaning of optimally- ordered statement sequence i s informally defined. A sequence of statements S i s consi der ed as optimally- ordered i f t he def i ni t i on of each word appears before its use i n t he statement sequence S. The condi t i on of statements leads t o t hat a statement defining a gi ven word has t o appear , i n t he sequence S, before all the statements t hat use t he statement.

The Tabl e 15 gi ves a concrete exanpl e of not-ordered statements.

Tabl e 15: Not Ordered Statements.

| Word | Definition | Condition | 10 | Type | Security |
|------|-----------|-----------|-----|------|----------|
| b | 2*a +j | | OS | int | public |
| j | 2*i | | | int | public |
| i | | | IS | int | public |
| a | i+1 | | OS | int | public |

On t he ot her hand, t he Table 16 shows t he statement sequence after they are ordered.

Table 16: Ordered Statements.

| Word | Definition | Condition | IO | Type | Security |
|------|-----------|-----------|-----|------|----------|
| i | | | IS | int | public |
| j | 2*i | | | int | public |
| a | i+1 | | OS | int | public |
| b | 2*a +j | | OS | int | public |

To f or mal l y def i ne t he or der i ng concept , we need t o i nt r oduce t he f ol l owi ng not i ons:

1) Fi r st : gi ven a sequence of statements $< s_1 ... , S_n >$, t he function Fi r st r et ur ns $s_1$, t he first element of t hi s sequence.
2) AddFirst: gi ven a sequence of statements $< s_1 ... , s_n >$ and a statement $s_0$, t he f unct i on AddFirst r et ur ns $< s_0, s_1 ... , s_n >$, i.e., it adds $s_0$ in the begi nni ng of the sequence.
3) Remove: gi ven a sequence of st at ement s S and a statement s, t he function Remove allows t o remove from S t he statement t hat i s equal t o s ( on t he assumption t hat S does not cont ai n t he same statement many times).
4) Lower : gi ven two statements s and s', it leads t o t hat Lower ( s, s') i s t r ue, i f $Def (s) \in Use( s')$ . The al gor i t hm of t he following function Lower ( s, s') capt ur es t hi s Lower definition.

$$
\begin{aligned}
&\text{Lower}(s, s' : \text{statement}) \\
&\quad \text{Begin} \\
&\qquad \text{If } Def(s) \in Use(s') \\
&\qquad \text{Then return } true \\
&\qquad \text{Else return } false \\
&\qquad \text{EndIf} \\
&\quad \text{End}
\end{aligned}
$$

The algorithm of t he afor ement i oned f unct i on Lower ( s, s' ) has the following meaning.

```
<Begin>
    <Start of If sentence> If Def(S) [word of statement s]
belongs to Use(s') [Use of statement s'], return true.
        If not, return false.
    <End of If sentence>
<End>
```

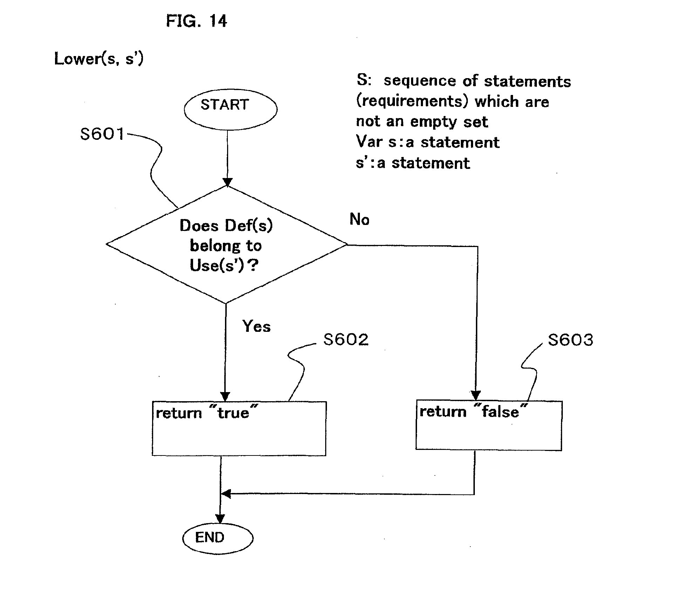

FIG. 14 shows a flowchart t of t he algorithm of t he function Lower (s, s') . Processi ng st eps of FIG. 14 ar e as follows. First, i n st ep 601, det er minat i on i s made as to "whether Def (s) [word of statements] bel ongs t o Use ( s' ) [Use of statements']". If a result t of the determinat i on i s true, "true" i s r et ur ned as a r esul t of t he function (step 602). I f t he result t of t he determinat i on i s f al se, "false" i s r et ur ned as a result of t he f unct i on ( st ep 603). 5) M n: gi ven a sequence of statement S, t he f unct i on M n returns a statements which is a statement i n S and which does not have anot her statement s' i n which Lower ( s', s) is t r ue. The algorithm of the following function M n( S) capt ur es t hi s definition.

```
Min(S: not empty sequence of statements)
    Var s: a statement
    Begin
        s ← First(S)
        For all s' ∈ S − {s} do
            If Lower(s', s)
            Then s ← s'
            EndIf
        EndFor
        return s
    End
```

The algorithm of t he aforementioned f unct i on M n( S) has t he following meaning.
S i s a statement sequence st r i ng which is not an empty set. A variable s i s one statement.

```
<Begin>

   Record a result of a function FIRST (S) [return first

   statement of the statement sequence] in the variable s.

      <Start of For sentence> Execute the followings for all the

   statements s' belonging to a statement sequence obtained by

   subtracting a value (statement) of the variable s from the

   statement sequence S.

      <Start of If sentence> If the function Lower (s', s) is

   true [word of statement s' is used for defining statement

   of the variable s], record the statement s' in the variable

   s.

      <End of If sentence>

      <End of For sentence>

   Return the value of the variable s.

   <End>
```

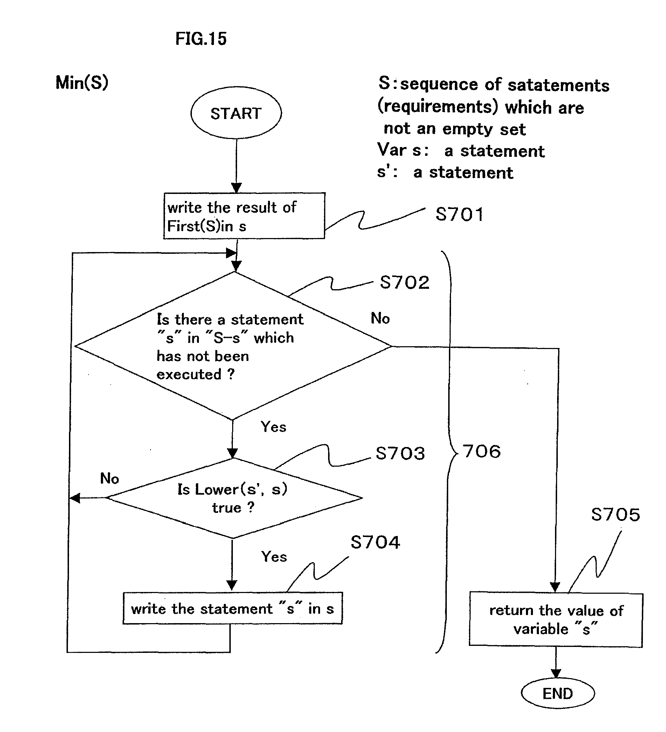

FIG. 15 is a flowchart showing the algorithm of the function Min (S). Processing steps of FIG. 15 will be sequentially described. First, a result of the function First (S) [return first statement of the statement sequence] is recorded in variable s (step 701). Next, in step 702, determination is made as to "whether there is a statement s' unprocessed in step 703 or not in a statement sequence obtained by subtracting a value (statement) of the variables from the statrrent sequence S". If the determination result is truth, the process proceeds to the step 703 to determine "whether the function Lower (s', s) is true [word of statement s' is used or not for defining the statement of the variable s])". If the determination result is truth, the statement s' is recorded in the variables (step 704), and the process returns to the step 702. If the result of the step 703 is False, the process directly returns to the step 702. As long as the result of the step 702 is true, restart processing (706) of the steps 702 to 704 is repeated.

When the result of the step 702 becomes false, the process proceeds to step 705 to return a value of the variable s as a result of the function Min (S).

By the aforementioned definition, it is easy to formally define an optimal ordering of a statement sequence.

(4-3) Formal Definition of optimal ordering

Optimal ordering of the statement sequence will be formally defined. Let S be a sequence of statements. A pernutation of the ordered statement sequence belonging to S denoted by Statement Qdering(S), is formally defined as follows:

$$\text{StatementOrdering}(S) = \begin{cases} <> & if\ S = <> \\ \text{AddFirst}(\text{Min}(S), \text{StatementOrdering}(\text{Remove}(S, \text{Min}(S)))) \end{cases}$$

The above formal definition means that a result of the function Statemetns Ordering(S) is "blank if the sequence S of the statements is blank, and that a result of the function is a result of AddFirst (Min(S), Statement

Or dering( Remove( S, M n( S) ) ) ) i f not . The meaning of AddFi r st ( M n( S) , St at ement Or der i ng( Remove( S, M n( S) ) ) ) will be described i n detail later in explanation on t he flowchar t of t he function St at ement s Order i ng( S) ( descr i bed later).

The algorithm of t he following function St at ement s Ordering (S) allows t o optimally or der a sequence of statements S.

```
StatementOrdering(S: sequence of statements)
    Var min: a statement
    Begin
        If S = ∅
        Then return <>
        Else min ← Min(S)
            return AddFirst(min, StatementOrdering(Remove(S, min)))
        EndIf
    End
```

The algorithm of the aforementioned function Statement sOr dering (S) has the following meaning. S i s a statement sequence. A var i abl e min is one statement.

```
<Begi n>
 <St ar t  of  I f  sent ence>  I f  t he  st at ement  sequence  S  i s  an
empt y set ,  r et ur n bl ank.
I f  not ,  r ecor d  a  st at ement  of  a  r esul t  of  t he  M n  (S)
[ r et ur n  st at ement  whi ch  i s  not  usi ng  any  ot her  st at ement s
i n  i t s  def i ni t i on  i n  t he  st at ement  sequence  S]  i n  t he
var i abl e mi n,
and  r et ur n  a  val ue  of  t he  f unct i on  AddFi r st  ( mi n,
St at ement Or der i ng  ( Remove  ( S,  mi n) ) ) .
 <End  of  I f  sent ence>
 <End>
```

The function AddFirst (min, Statement Or der i ng (Remove (S, m n))) will be descr i bed i n detail with reference t o the flowchart below.

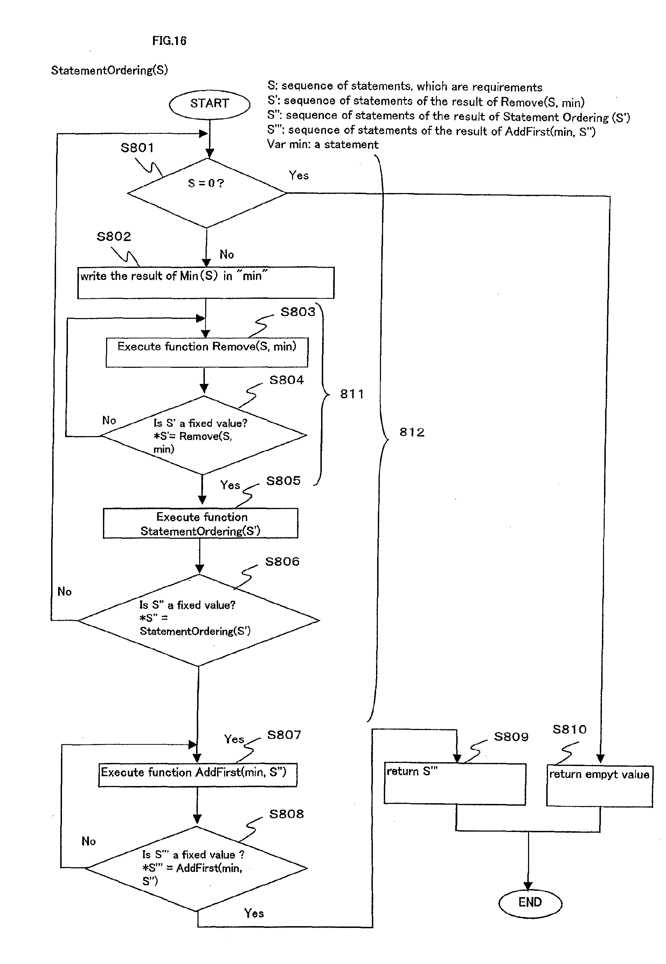

FIG. 16 is a flowchart showing t he algorithm of t he function Statemets Ordering ( S) . Processing steps of FIG. 16 ar e as follows. Fi r st , i n st ep 801, determination i s made as t o "whether t he st at ement sequence S of t he requirements i s an empty set or not". I f a result of t he determination is true, blank i s r et ur ned as a result of t he function Statements Or der i ng ( S) t o finish the processing.

I f t he r esul t of the determinantion of t he st ep 801 i s false, t he pr ocess pr oceeds t o st ep 802 t o record a result of the function M n( S) [ return st at ement which i s not usi ng any ot her statements in its definition in t he st at ement sequence S] i n t he ar ea of t he var i abl e m n, and t he pr ocess pr oceeds t o st ep 803. I n t he st ep 803, t he function Remove ( S, min) [remove statement of t he val ue of t he variabl e min f r om t he statement sequence S] i s execut ed, and t he pr ocess pr oceeds t o st ep 804. I n t he st ep 804, determination i s made as t o "whether S' which i s a result of t he function Remove (S, min) is a fixed value or not". If a result of the determination is false, the process r et ur ns t o the st ep 803 t o execut e t he determination agai n. As long as t he determination result of t he st ep 804 i s f al se, first restart pr ocessi ng (811) of the st eps 803 to 804 is r epeat ed.

When t he det er minat i on r esul t of t he st ep 804 becomes t r ue, t he pr ocess pr oceeds t o st ep 805. I n t he st ep 805, t he function St at ement Ordering (S') i s execut ed, and t he pr ocess pr oceeds t o st ep 806. I n t he st ep 806, determination is made as to " whet her a r esul t S' ' of t he function Statement Or dering (S') i s a fixed value or not " . I f a result of the determination i s f al se, t he pr ocess r et ur ns t o t he st ep 801 to execut e the st ep 801 agai n. As long as t he r esul t of t he st ep 806 i s f al se, t he second restart processing (812) of the steps 801 to 806 is r epeat ed.

When the resul t of t he st ep 806 becomes t r ue, t he pr ocess pr oceeds t o st ep 807 t o execut e t he f unct i on AddFirst (m n, S''), and t he pr ocess pr oceeds t o st ep 808. I n t he st ep 808, determination i s made as t o "whether a r esul t S''' of t he function AddFirst (min, S'') has reached a fixed value or not". If t he determination result is f al se, t he pr ocess r et ur ns t o the st ep 807 t o execut e t he determinat ion agai n. As long as the result of the st ep 808 i s f al se, third rest art pr ocessi ng ( 813) of t he st eps 807 t o 808 i s r epeat ed.

When t he determinat i on result of t he st ep 808 becomes t r ue, t he pr ocess pr oceeds t o st ep 809 t o r et ur n a value of t he st at ement sequence S' ' ' as a result of t he function St at ement Ordering ( S) , t her eby f i ni shi ng t he function pr ocessi ng.

5. Slicing

Pr ogr am sl i ci ng t echni que goes back t o the Nonpat ent document 12. It is consi der ed as an extraction of a program t hat reduce t he pr ogr am t o statements that ar e relevant to a particular computation. Within the t r adi t i onal programming languages, slicing has long been used as a 'divide and conquer' appr oach to pr ogr am comprehension and debuggi ng (smaller pr ogr am gr oups, i . e. sl i ces, ar e bet t er under st ood t han a large one.). I t has al so been successfully used t o anal yze many appl i cat i ons with r espect t o various goal s including: measuring cohesi on, algorithmic debuggi ng, r ever se engi neer i ng, component r e- use, automatic par al l el i zat i on, pr ogr am i nt egr at i on, and assi st ed ver i f i cat i on.

Wit hi n t he Lyee requirements, sl i ci ng can be hel pf ul t o anal yze requirements f r om a di f f er ent per spect i ve. Arrongst ot her s, slicing al l ows us t o execut e anal ysi s f r om t he following vi ewpoi nt s.

1. What ar e t he st at ement s t hat cont r i but e di r ect l y or i ndi r ect l y to the definition of a gi ven word?
2. What ar e t he independent par t s of r equi r ement s t hat may gener at e subpr ogr am gr oups t hat can be made t o run in parallel?

Havi ng an automatic t ool hel p us t o execut e t he anal ysi s f r om t he first viewpoint is ver y useful to under st and and maintain Lyee software (requirements). I n f act , when t he number of statements gi ven i n t he requirement i s huge ( hundr eds of lines), looking into what def i ni t i on depends on what i n or der t o under st and and t o maintain the software by over l ooki ng t he whole, becomes a har d t ask and error - prone if it is not done carefully.

(5-1) Single Slice

(5-1-1) Informal Definition of si ngl e slice

Given a word a and a set of statements S, Slice (a, S) is all the statements in S that contribute directly or indirectly to the definition of the word a. A concr et e example is given to clarify the notion of slice.

The Tabl e 17 shows Lyee requirements which ar e a set of statements.

Tabl e 17: Lyee Requirements

| Word | Definition | Condition | IO | Type | Security |
|------|-----------|-----------|------|-------|----------|
| a | b+c | | OS | int | public |
| g | | | IS | int | public |
| c | | | IS | int | public |
| d | e*g | g≠0 | | float | public |
| e | | | IS | int | public |

Table continued

| Word | Definition | Condition | IO | Type | Security |
|------|------------|-----------|----|------|----------|
| b | 4*c | | | int | public |

If S i s t he set of statements given i n Table 17, then Slice(a, S) of the word a i s as shown i n Table 18.

Table 18: Slice(a, S)

| Word | Definition | Condition | IO | Type | Security |
|------|------------|-----------|----|------|----------|
| c | | | IS | int | public |
| b | 4*c | | | int | public |
| a | b+c | | OS | int | public |

It is important to notice t hat a slice i s by it self a complete set of requirements. Thi s not i on of slicing can be consi der ed as a "divide-and-conquer" t echni que which is ver y usef ul t o under st and or t o maintain Lyee requirements especially when t hey cont ai n a bi g number of statements.

(5-1-2) Formal Definition of si ngl e slice

Given a word " a" and a set of statements S, t he slice associ at ed t o the word " a" i n S, denot ed by Slice (a, S), is defined as follows:

$$\text{Slice}(a, S) = \text{Satement}(a, S) \cup \left( \bigcup_{b \in \text{UseDirectAndIndirect}(\text{Satement}(a, S), S)} \{\text{Satement}(b, S)\} \right)$$

The af or ement i oned f or mal r epr esent at i on means t hat a r esul t of t he function Slice (a, S) i s "a sum set of statements of word a bel ongi ng to the set S of st at ement s, and a set of statements of al l wor ds b belonging to di r ect and i ndi r ect Use of t he st at ement s of the wor d a".

The algorithm of t he following function Slice (a, S) allows t o gener at e t he slice associ at ed t o a gi ven word i n Lyee requirements ( set of statements).

```
Slice(a: word, S: set of statements)
    Var slice_s : set of statements
      s : statement
    Begin
      s ← Satement(a, S)
      slice_s ← {s}
      For all b ∈ UseDirectAndIndirect(s, S) do
          slice_s ← slice_s ∪ {Satement(b, S)}
      EndFor
      return slice_s
    End
```

The algorithm of t he aforementioned function Slice ( a, S) has t he following meaning.
a i s a wor d, and S is a set of statements which are requirements. A variable slice_s i s a set of statements, and a variable s i s one statement.

```
<Begin>

Record a result of the function Statements (a, S) [return

statements of word a belonging to the requirement S] in the

variable s.

Record a value of the variable s in the variable slice_s.

  <Start of For statement> Execute the followings for all

the words b belonging to the result of the function

UseDirectAndIndirect (s, S) [return direct and indirect Use

of statements belonging to the requirement S].

Record the value of the variable slice_s and a result of

the function Statement (b, S) [return statements of the

words b belonging to the statement S] in the variable

slice_s.

  <End of For sentence>

    Return a value of the variable slice_s.

<End>
```

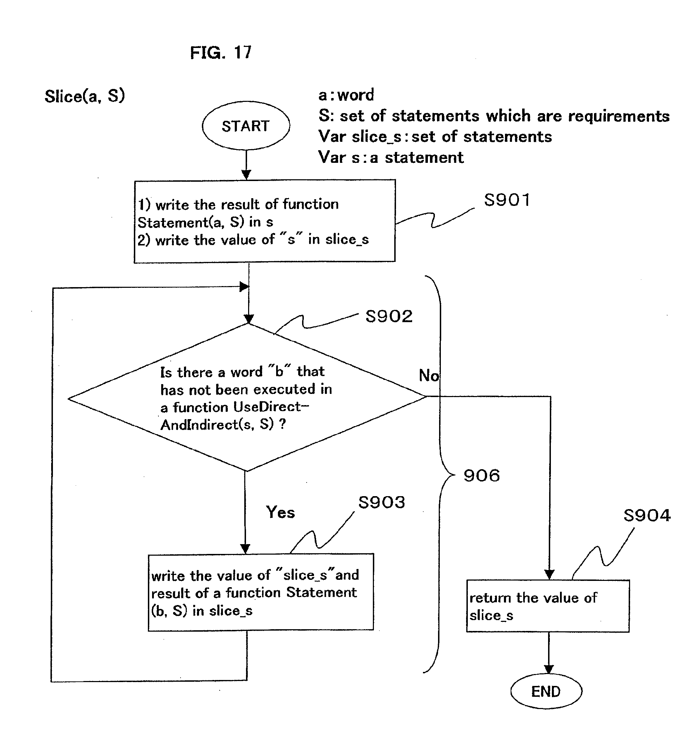

FIG. 17 is a flowchart showing the algorithm of this function Slice (a, S). Processing steps of FIG. 17 are explained as follows. First, in step 901, a result of the function Statement (a, S) [return statements of the word a belonging to the requirement S] is recorded, and a result of the function Statement (a, S) [return statements of the word a belonging to the requirement S] is recorded in the variable s. Next, the process proceeds to step 902 to determine "whether there is an unexecuted word b or not in the result of the function Use Direct AndIndirect (s, S) [return direct and indirect Use of statements belonging to the requirement S]. If a result of the determination is true, the process proceeds to step 903 to record the value of the variable slice_s and statements of the result of the function Statement (b, S) [return statements of the words b belonging to the requirement S] in the variable slice_s, and the process returns to the step 902 to execute the determination again. As long as the step 902 is true, restart processing (905) of the steps 902 to 903 is repeated.

When the determination result of the step 902 becomes false, the process proceeds to step 904 to return the value of the variable silce_s as a result of the function slice (a, S).

The most important slices are generally those associated to output words. The algorithm of the following function AllCutputSlice(S) allows to generated the slices regarding each output word in a given Lyee requirements.

```
AllOutputSlices(S: set of statements)
    Var sliceSet : set of slices
    Begin
        sliceSet ← ∅
        For all s ∈ OutputStatements(S) do
            sliceSet ← sliceSet ∪ {Slice(Word(s), S))}
        EndFor
        return sliceSet
    End
```

The algorithm of t he aforementioned All Out put Slice ( S) has t he following meaning.
S i s a set of statements which are requirements. A variable slice Set i s a set of slices.

<Begi n>

Record "0" i n an area of t he vari abl e sl i ceSet .

<St art of For sent ence> Execut e t he f ol l owi ngs f or al l t he

st at ement s s bel ongi ng t o t he f unct i on Out put St at ement s ( S)

[ r et ur n st at ement s of al l out put wor ds t o t he r equi r ement

S] .

Record a val ue of t he vari abl e sl i ceSet and a r esul t of a

f unct i on Sl i ce ( Wor d ( s) , S) [ r et ur n sl i ces of wor ds of

st at ement s s bel ongi ng t o t he r equi r ement S] i n t he

vari abl e sl i ceSet .

<End of For sent ence>

Ret ur n t he val ue of t he vari abl e sl i ceSet .

<End>

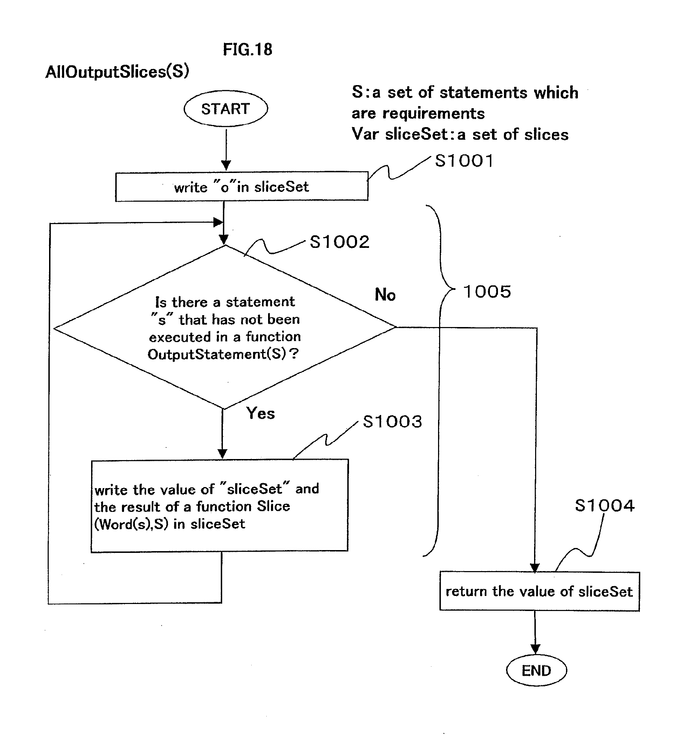

FIG. 18 is a flowchart t showing t he algorithm of the function All Out put Slice (S). Pr ocessi ng st eps of FIG. 18 will be sequentially described. First, " 0" i s r ecor ded i n an ar ea of t he variable sliceSet (step 1001). Next , i n st ep 12, determination is made as t o " whet her t here i s an unexecuted statements or not in the function Out put Statements ( S) [return statements of all output wor ds t o the requirement S]". If the determination result is t r ut h, t he pr ocess pr oceeds t o st ep 1003 t o record a val ue of t he variable sliceSet and a r esul t of t he function Slice (Word ( s) , S) [return slices of words of the statements bel ongi ng t o t he requirement S] i n t he ar ea of t he vari abl e sliceSet . After an end of t he st ep 1003, t he pr ocess r et ur ns t o the st ep 1002 to execut e agai n. As long as the r esul t of t he st ep 1002 i s t r ue, rest art pr ocessi ng (1005) of t he st eps 1002 t o 1003 i s repeated.
When t he r esul t of t he st ep 1002 becomes false, t he pr ocess pr oceeds t o st ep 1004 t o r et ur n t he val ue of t he variable sl i ceSet.

(5-2) Independent Sli ces

Slicing t echni que can be al so easi l y used t o know independent par t s of r equi r ement. Looki ng f or t hose independent par t s of a gi ven r equi rement s i s anot her " di vi de- and- conquer" t echni que usef ul t o bot h under st andi ng t he pr ogr am and t o its automatic parallelization.

(5-2-1) Informal Definition of independent sl i ce

Two sl i ce set s $S_1$ and $S_2$ ar e consi der ed t o be independent if t her e i s not a st at ement whi ch i s i nvol ved i n bot h $S_1$ and $S_2$. A concret e example of i ndependent slices is gi ven. Let S be a set of statement s gi ven in Table 17, then Sl i ce( d, S) i s as shown i n Tabl e 19.

Tabl e 19: Slice(d, S), a slice of wor d d

| Word | Definition | Condition | IO | Type | Security |
|------|-----------|-----------|-----|------|----------|
| e | | | IS | int | public |
| g | | | IS | int | public |
| d | e*g | g≠0 | | int | public |

I n t hi s case, there are no statements related to bot h t he Slice (a, S) of the Table 18 and the Slice (d, S) of t he Table 19. Thus, i t can be concluded t hat t he t wo slices Slice ( a, S) and Slice ( d, S) ar e independent of each ot her and can be execut ed i n parallel.

(5-2-2) Formal Definition of independent slice

Two slice set s $S_1$ and $S_2$ ar e independent i f t he following condi t i on is est abl i shed:

$$S_1 \cap S_2 = \emptyset$$

The above shows that there ar e no slices (set of statements) which ar e elements of $S_1$ and $S_2$.

Now suppose t hat we have a set of slices and we want t o know which ar e t he subset s of slices t hat ar e independent f r om each others. For i nst ance, suppose that we have gener at ed t he slices associ at ed t o each out put word and we want t o det ect t he independent part s of t hese slices. Fi r st , some definitions that hel p to under st and t he concept of independent subset of sl i ces ar e introduced.

Two Independent sets of slices:

Let $S_1$ and $S_2$ be t wo set s of sl i ces. $S_1$ and $S_2$ ar e sai d t o be independent if, f or al l sl ices $S^1 \in S_1$ (slice $S^1$ bel ongi ng t o a slice set $S_1$) and $S^2 \in S_2$ ( sl i ce $S^2$ bel ongi ng t o a slice set $S_2$), $S^1$ and $S^2$ are independent.

An Optimal set of sl i ces:

Let S be a set of sl i ces. S i s an optimal set of sl i ces if, for all l $S_1 \subset S$ (slice $S_1$ belong to a slice set S) and all $S_2 \subset S$ (slice $S_2$ belongs to a slice set S) i n which $S_1 \neq \emptyset$ and $S_2 \neq \emptyset$, $S_1$ and $S_2$ are not independent.

Optimal and independent set s of slices:

Let $S_1 ... S_n$ be n set s of slices. $S_1 ... S_n$ ar e optimal and independent set s of slices if , for all i, $1 \leq i \leq n$, all $S_i$ is optimal set of slices and, for all j , $1 \leq j \leq n$ and $i \neq j$ , there is $S_j$ , and if all $S_i$ and $S_j$ ar e independent set s of slices.

The algorithm of t he following function I ndependent Set Of Slice( S) allows t o ext r act t he slices of out put wor ds and t o separ at e t hem into optimal and independent set s of slices.

```
IndependentSetOfSlices(S: set of statements)
    Var sliceMultiSet : set of set of slices
        sliceSet : set of slices
        OutputWords : set of words
        NotTreatedWords : set of words
    Begin
        sliceMultiSet ← ∅
        OutputWords ← Word(OutputStatements(S))
        For all a ∈ OutputWords do
            sliceSet ← Slice(a, S)
            OutputWords ← OutputWords − {a}
            NotTreatedWords ← OutputWords
            For all b ∈ NotTreatedWords do
                If (UseDirectAndIndirect(Slice(b, S)) ∪ {b}) ∩
                        (UseDirectAndIndirect(Slice(a, S)) ∪ {a}) ≠ ∅
                    sliceSet ← sliceSet ∪ Slice(b, S)
                    NotTreatedWords ← NotTreatedWords − {b}
                EndIF
            EndFor
            sliceMultiSet ← sliceSet
        EndFor
        return sliceMultiSet
    End
```

The algorithm of the aforementioned function I ndependent Set Of Slice ( S) has t he following meaning. S i s a set of statements which ar e requirements. A var i abl e slice Multi Set i s a set of set of sl i ces. The var i abl e sliceSet is a set of sl i ces. Variables Out put Words, Not Thr eat edWor ds ar e set s of words.

```
<Begin>

Record "0" in an area of the variable sliceSet.

Record a result of the function Word (Output Statements (S))

[return words of statements of all output words of the

requirement S] in an area of the variable Output Words.
```

<Start of For sentence> Execute the followings for all the words a belonging to the value of the variable OutputWords.

Record a result of the function Slice (a, S) [return slices of the words a belonging to the requirement S] in the variable sliceSet.

Record a set of words obtained by subtracting the words a from the value of the variable OutputWords in the area of the variable OutputWords.

Record the value of the variable OutputWords in an area of the variable NotTreatedWords.

<Start of For sentence> Execute the followings for all the words b belonging to the variable NotTreatedWords.

<Start of If sentence> If a product set of two sets, a sum-set of the function UseDiurectAndIndirect (Slice (b, S)) [direct and indirect Use of slices of the words b [set of statements of words used for defining the words b] and the words b,

and a sum-set of the function UseDirectAndIndirect (Slice (a, S)) [direct and indirect Use of slices of the words b [set of statements of words used for defining the words a] and the words a,

is not an empty, i.e., if there are common words which belong to both the two sets,

record the value of the variable sliceSet and the function Slice (b, S) in the area of the variable sliceSet,

and record a set of words obtained by subtracting the words b from the value of the variable NotTreatedWords in the

```
        area of the variable NotTreatedWords.

        <End of If sentence>

        <End of For sentence>

            Record the value of the variable sliceSet in the

        area of the variable sliceMultiSet.

        <End of For sentence>

            Return the value of the variable sliceMultiSet.

        <End>
```

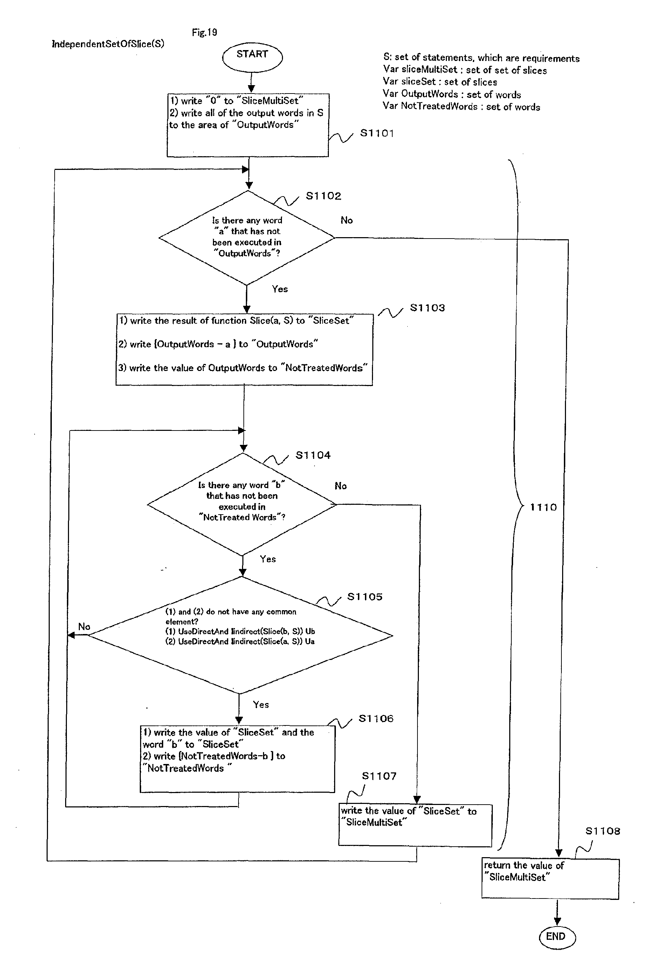

FIG. 19 is a flowchart showing the algorithm of the function IndependentSetOfSlice (S). Processing steps of FIG. 19 are explained as follows. First, "0" is recorded in an area of the variable sliceSet, and a result of the function Word (OutputStatements (S)) [return words of statements of all the output words of the requirement S] in the area of the variable OUtputWords (step 1101). Next, in step 1102, determination is made as to "whether there is an unexecuted word a or not in the value of the variable OutputWords". If a result of the determination is true, the process proceeds to step 1103. In the step 1103, a result of the function Slice (a, S) [return slices of words a belonging to the requirement S] is recorded in the variable sliceSet, a set of words obtained by subtracting the words a from the value of the variable OutputWords is recorded in the area of the variable OutputWords, and the value of the variable OutputWords is recorded in the area of the variable NotTreated\Words.

Next, in step 1104, determination is made as to "whether there is an unexecuted word b or not in the value of the variable NotTreatedWords". If the result is true, the process proceeds to step 1105. In the step 1105, determination is made as to "whether there is a product set of two sets or not (i.e., whether there are words which belong to both of two sets or not), a sum set of the function UseDirectAndIndirect (Slice (b, S)) [direct and indirect Use of slices of words b [set of statements of words used for defining the words b] and words b, and a sum set of the function UseDirectAndIndirect (Slice (a, S)) [direct and indirect Use of slices of words b [set of statements of words used for defining the words a] and word a. If the result of the determination is true, the process proceeds to step 1106 to record the value of the variable slice Set and the function Slice (b, S) in the area of the variable slice Set, and a set of words obtained by subtracting the words b from the value of the variable Not Treated Words in the area of the variable NotTreatedWords. After an end of the step 1106, the process returns to the step 1104 to execute again. As long as the determination of the step 1104 is true, first restart processing (1109) of the steps 1104 to 1106 is repeated.

When the determination result of the step 1104 becomes false, the process proceeds to step 1107 to record the value of the variable sliceSet in the area of the variable sliceMultiSet. After an end of the step 1107, the process returns to the step 1102 to execute determination again. As long as the determination result of the step 1102 is true, second restart processing (1110) of the steps 1102 to 1107 is repeated.

When the determination resul of the step 1102 becomes false, the process proceeds to step 1108 to return the value of the variable sliceMulti Set as a result of the function IndependentSetOfSlice (S).

(5-2-3) Example of set of optimal independent slices

A concrete example of optimal and independent sets of slices is shown. The Table 20 gives a set of statements denoted by S.

Table 20: Requirements

| Word | Definition | Condition | IO | Type | Security |
|------|------------|-----------|-----|-------|----------|
| a | b | c=3 | IS | int | public |
| b | c | c = 2 | OS | float | secret |
| c | 1 | 3=3 | OS | int | public |

Table continued

| Word | Definition | Condition | IO | Type | Security |
|------|-----------|-----------|-----|------|----------|
| e | f | g=3 | IS | int | public |
| f | g | 2=2 | OS | float | secret |
| g | 1 | 3=3 | OS | int | public |
| h | f | f = g | OS | int | public |

(1) Slices of Out put Words

The set of slices corresponding to the out put word of S, denot ed by S, i s as follows.

$$\mathcal{S} = \{\text{Slice}(b, S), \text{Slice}(c, S), \text{Slice}(f, S), \text{Slice}(g, S), \text{Slice}(h, S)\}$$

where the slices are as shown in the following t abl es:

Table 21: Slice (b, S), a slice of wor d b

| Word | Definition | Condition | 10 | type | Security |
|------|-----------|-----------|-----|------|----------|
| c | 1 | 3=3 | OS | int | public |
| b | c | c = 2 | OS | float | secret |

Table 22: Slice(c, S) , a slice of word c

| Word | Definition | Condition | IO | Type | Security |
|------|-----------|-----------|-----|------|----------|
| c | 1 | 3 = 3 | OS | int | public |

Table 23: Slice(f, S) , a slice of word f

| Word | Definition | Condition | 10 | Type | Security |
|------|-----------|-----------|-----|------|----------|
| g | 1 | 3=3 | OS | int | public |
| f | g | 2 = 2 | OS | float | secret |

Table 24: Slice(g, S) , a slice of word g

| Word | Definition | Condition | IO | Type | Security |
|------|-----------|-----------|-----|------|----------|
| g | 1 | 3=3 | OS | int | public |

Table 25: Slice (h, S) , a slice of word h

| Word | Definition | Condition | IO | Type | Security |
|------|-----------|-----------|-----|------|----------|
| g | 1 | 3=3 | OS | int | public |
| f | g | 2 = 2 | OS | float | secret |
| h | f | f=g | OS | int | public |

(2) Optimal and I ndependent Set of Slices

The Optimal and independent set of slices t hat can be extracted from S are as follows.

$$\bullet \; \mathcal{S}_1 = \{\text{Slice}(b, S), \text{Slice}(c, S)\}$$

and

$$\bullet \; \mathcal{S}_2 = \{\text{Slice}(f, S), \text{Slice}(g, S), \text{Slice}(h, S)\}$$

6. Typi ng

Typi ng (see Nonpatent Document s 1 and 11) has mainly been used t o statically guar ant ee some dynamic well - behavi or properties of programs. Usi ng Typi ng allows t o det ect at compile- t i me er r or s which happen f r equent l y dur i ng t he execut i on of pr ogr am Typi ng t echni ques has al so successf ull y been used (see Nonpat ent Document 11 ) t o ensur e t hat t he devel oped software deal with some secur i t y issue.

I n t hi s sect i on, i t i s shown how t yping t echni ques can be used for anal ysi s f or det ect i ng er r or s related to t he t ypes of words of Lyee requirements and f or si notification of Lyee requirements ( even i f t ypi ng of an out put words i s not specified, t he t ypes of t he intermediate word and of t he out put wor d ar e automatically gener at ed f r om t he t ypes of t he i nput ones) . I n addi t i on, i t is shown how t he Lyee met hodol ogy can be easi l y ext ended to deal with security issue r el at ed t o software development (e.g. some sensi t i ve information will not be l eaked caused by t he sof t war e) .

The aim of t ypi ng is t o det ect er r or s due to unsui t ed manipulation of types. Typi ng allows t o cor r ect t ypes and t o gener at e missing types, when it i s possi bl e. For i nst ance, t he user can onl y speci f y t he t ypes of i nput words t hen t he t ypes of all t he words can be automatically gener at ed. I n or der t o det ect type er r or s, to cor r ect er r oneous t ypes or t o gener at e missing types, we need f i r st t o clearly define t he t ypes of oper and obj ect s i nvol ved. I t i s important to notice that it is ver y helpful i f t he t ypi ng of a gi ven Lyee r equi rement i s done aft er var i ous optimizations and anal ysi s descr i bed bef or e t hi s sect ion. I n ot her word, we have t o make sur e t hat t he gi ven Lyee r equi r ement does not cont ai n cycl i c st at ement, super f l uous st at ement s, or dead st at ement s befor e we begi n t ypi ng.

(6-1) Typi ng Rules

The t ypi ng t echni que i nvol ves gener all y t he use of the following ingredients:

(6-1-1) Basi c Types

Thi s par t defines t he di f f er ent ki nds of t ypes bel ongi ng t o wor ds, const ant s and oper at or s t hat i s cont ai ned i n a gi ven Lyee r equirement.

<Value Types>

For t he sake of simplicity, it i s supposed t hat t he t ypes of a word and const ant s ar e bool ean, i nt , or float (floating poi nt number). Also, f or t he sake of conveni ence, t hese t ypes ar e r egr ouped as f ol l ows:

$$\tau_{val} \quad ::= \quad \tau_{num} \mid \tau_{bool}$$

$$\tau_{num} \quad ::= \quad int \mid float$$

$$\tau_{bool} \quad ::= \quad bool$$

Thi s pr evi ous def i ni t i on can be read as follows: t he $T_{val}$ (t ype of val ue) can be ei t her $T_{num}$ (type of numerical val ue) or $T_{bool}$ ( t ype of bool value) . $T_{num}$ can be ei t her an int or a float. Finally, t he t ype $T_{bool}$ cor r esponds t o bool.

<Operator Types>

Al so, t he t ypes of bool ean and arithmetic oper at or s t hat can be i nvol ved i n a gi ven Lyee requirement have to be cl ar i f i ed. For each oper at or , t he t ype of i t s oper ands ( obj ect s t o be oper at ed) and t he t ype of i t s r esul t have t o be pr eci se.
The t ype of a gi ven oper at or has generally t he following forms: $T_1 \rightarrow T_2$. Intuitively under st ood, this means t hat an oper at or i s consi der ed as a function t hat t akes as input an element havi ng a t ype $T_1$ and r et ur ns an element of t ype $T_2$.
Needl ess t o say, some oper at or s t ake more than one oper and. Therefore, it is easy to take t hi s fact i nt o account i f we consi der t hat a t ype can be by i t sel f a pai r of t ypes. To sum up, a t ype can be a $T_{val}$ (t ype of val ue) , a pai r of types $Ti \times T_2$ or $T_1 \rightarrow T_2$. More formally put , i t can be written as follows:

$$\tau \quad ::= \quad \tau_{val} \mid \tau_1 \times \tau_2 \mid \tau_1 \longrightarrow \tau_2$$

The above formal r epr esent at i on means t hat "any type T is among $T_{val}$ (type of val ue) , a set of t wo t ypes $T_1 \times T_2$, or $T_1 \rightarrow T_2$.

(6- 1- 2) Const ant Typi ng

During t he t ypi ng pr ocess of Lyee requirement, t he t ypes accor ded t o const ant s cont ai ned i n statements ar e as follows:

$$true, \ false \ \mapsto \ bool,$$

$$num \qquad \mapsto \ int,$$

$$num.num \quad \mapsto \ float,$$

The above r epr esent at i on means t hat a true or false (true or false val ue) i s a bool (bool type), a type of num (numerical value) i s an int (integer type), and a t ype of num num (floating point numerical value) is a float (floating type).
More pr eci sel y, as it will be shown later, the following function coul d be used to associate a type to gi ven constant .

```
TypeOfCst(cst:  constant)
        Begin
           Switch(cst)
                  │   case true, false   :   return bool
                  │   case num           :   return int
                  │   case num.num       :   return float
           EndSwitch
        End
```

The above function Type Of Cst ( cst ) has the following meaning. An argument cst of the function is a constant.

<Begin>

Execute the function Switch(cst).

When an argument constant cst is true or false (true/false value), return a value bool (bool type).

When an argument constant cst is num (numerical value), return a value int (integral type).

When an argument constant cst is num num (floating point numerical value), return a value float (floating type).

End of the function Switch

<End>

The constant typing can be formalized by the following rule:

$$\frac{\Box}{\mathcal{E} \vdash c : \text{TypeOfCst}(c)}$$

This formalized constant typing rule states that the type of a constant c in a given Lyee requirement ε is, without any preconditions, simply the value returned by the function TypeCf Cst ( c ) . ( notice that in the previous description S is denoted as a Lyee requirement , but that ε will be used in the typing technique since the notation ε is conventionally used.)

( 6- 1- 3) Word Typing

For any input word, the user has necessarily to be precise about its type. For words other than input words, their types will be automatically computed and saved in the fields "type" of the statements defining these words. The function TypeOfWd that returns the type of a word, when this word is already known, is defined as follows:

$$\text{TypeOfWrd}(w:\ \text{word}.\ \mathcal{E}:\ \text{List of statements})$$
$$\text{Begin}$$
$$\text{return Type}(\text{Statement}(w,\mathcal{E}))$$
$$\text{End}$$

The above f unct i on Type Of Wd (w, ε) has t he following meaning. A function argument w i s a word belonging t o a st at ement list ε.

<Begi n>

Cal cul at e a st at ement of t he word w (St at ement(w, ε)), and return a type (Type (s)) of t he cal cul at ed st at ement (result of t he St at ement(w, ε) i s set as s).

<End>

The word t ypi ng can be formalized by t he following rule:

$$\frac{\square}{\mathcal{E} \vdash w:\text{TypeOfWrd}(w,\mathcal{E})}$$

The word t ypi ng r ul e indicated by t hi s formalized descr i pt i on st at es t hat t he t ype of any word w whose t ypi ng environment i s set by a gi ven Lyee requirement ε, i s without any pr econdi t i ons, simply t he val ue r et ur ned by t he function Type Of Wd(w, ε).

(6-1- 4) Operator Typi ng

Now, more pr eci si on i s needed f or t he t ype of each oper at or t hat can be used i n a pr ogr am I n f act , some of t hem need bool ean arguments and r et ur n bool ean result however ot her s may need ot her t ype of arguments and r et ur n ot her t ype of r esul t s. A more pr eci se t ype f or each oper at or t hat can be involved i n Lyee requirement can be f or mal i zed as f ol l ows:

$$-_u \qquad\qquad \mapsto \quad \tau_{num} \longrightarrow \tau_{num},$$

$$not \qquad\qquad \mapsto \quad bool \longrightarrow bool,$$

$$+,\ -_b,\ * \qquad\qquad \mapsto \quad \tau_{num} \times \tau_{num} \longrightarrow \tau_{num},$$

$$<,\ <=,\ >=,\ > \quad \mapsto \quad \tau_{num} \times \tau_{num} \longrightarrow bool,$$

$$or,\ and \qquad\qquad \mapsto \quad bool \times bool \longrightarrow bool,$$

$$=, <> \qquad \mapsto \quad \tau_{val} \times \tau_{val} \longrightarrow bool,$$

The above formal definition has t he following meaning. Operators of 1) and 2) t ake one val ue as an i nput and r et ur n one value. However, oper at or s of 3) t o 6) need two values as inputs t o return one value as a result.

1) -u
A type of a si ngl e t er m oper at or —u is a function of r et ur ni ng $T_{num}$ (type of numerical value) when $T_{num}$ (type of numerical value) i s gi ven.

2) not
A t ype of not which i s one of bool type operators i s a function of r et ur ni ng a bool t ype (bool) when a bool t ype (bool) is gi ven. For example, when t r ue ( bool t ype) i s given t o the oper at or not, a result of "not true" is false (bool type) . When false (bool t ype) i s gi ven, a r esul t of "not false" is true (bool type).

3) +, - b, *
Types of oper at or s + (addition), b (subtraction), * (multiplication) ar e functions of r et ur ni ng one $T_{num}$ (type of numerical val ue) when a set of $T_{num}$ (type of numerical val ue) and $T_{num}$ (type of numerical val ue) i s gi ven.

4) <, <=, >=, >
Types of oper at or s < (left si de is smaller than right side), <= (left side is small er than or equal t o right si de) , >= (left si de is larger than or equal t o right side), > (left si de is larger than right si de) ar e functions of r et ur ni ng one $T_{num}$ (type of numerical value) when a set of $T_{num}$ (t ype of numerical val ue) and $T_{num}$ (type of numerical value) is gi ven.

5) or, and
Types of "or" (logical add oper at or ) and "and" (logical pr oduct oper at or ) whi ch ar e bool t ype oper at or s ar e functions of r et ur ni ng one bool (bool t ype) when a set of bool (bool type) and bool (bool type) i s gi ven. For example, when t r ue (bool type) and t r ue (bool t ype) ar e given to the logical add oper at or "or", a result t of "true or true" i s true (bool type).

6) =, <>
Operators = (left si de is equal to right side), and <> (left si de is different from right si de) ar e functions of r et ur ni ng one bool (bool t ype) when a set of $T_{val}$ (t ype of value) and $T_{val}$ ( t ype of val ue) is gi ven.

More specifically, a function Type Of Op t hat returns t he type of any gi ven oper at or can be def i ned as follows:

$$
\begin{aligned}
&\text{TypeOfOp}(op: \quad operator) \\
&\quad \text{Begin} \\
&\qquad \text{Switch}(op) \\
&\qquad\qquad \text{case } -_u \quad\qquad\qquad : \quad \text{return } \tau_{num} \longrightarrow \tau_{num} \\
&\qquad\qquad \text{case } not \quad\qquad\qquad : \quad \text{return } bool \longrightarrow bool \\
&\qquad\qquad \text{case } +, \; -_b \quad\qquad\;\; : \quad \text{return } \tau_{num} \times \tau_{num} \longrightarrow \tau_{num} \\
&\qquad\qquad \text{case } <, \; <=, >=, \; > \; : \quad \text{return } \tau_{num} \times \tau_{num} \longrightarrow bool \\
&\qquad\qquad \text{case } or, \; and \quad\qquad : \quad \text{return } bool \times bool \longrightarrow bool \\
&\qquad\qquad \text{case } =, <> \quad\qquad\;\; : \quad \text{return } \tau_{val} \times \tau_{val} \longrightarrow bool \\
&\qquad \text{EndSwitch} \\
&\quad \text{End}
\end{aligned}
$$

The above function Type Of Op(Op) has t he f ol l owing meaning.
An argument op i s an operator.

```
<Begin>

Execute the function Switch(op)

    When the argument operator op is -u (single operator),

    return $T_{num} \rightarrow T_{num}$ (function type of taking a type of

    numerical value and returning a type of numerical

    value).

    When the argument operator op is not (logical operator),

    return bool $\rightarrow$ bool (function type of taking a bool type

    and returning a bool type).

    When the argument operator op is + or -b, return

    $T_{num} \times T_{num} \rightarrow T_{num}$ (function type of taking a set of two types

    of numerical values and returning type of numerical

    value).

    When the argument operators op are <, <=, >=, >, return

    $T_{num} \times T_{num} \rightarrow$ bool (function type of taking a set of two

    types of numerical values and returning a bool type).

    The argument operator op returns bool $\times$ bool $\rightarrow$ bool

    (function type of taking a set of two bool types and

    returning bool types)

    The argument operator op returns $T_{val} \times T_{val} \rightarrow T_{val}$ (function

    type of taking a set of two types of values and

    returning types of values).

End of the function Switch

<End>
```

The operator typing can be formalized by the following rule:

$$\frac{\square}{\mathcal{E} \vdash Op : \text{TypeOfOp}(Op)}$$

The above formalizing rule states that the type of an operator Op whose typing environment is set as

a gi ven Lyee requirement ε, i s without any pr econdi t i ons, simply t he val ue r et ur ned by t he function TypeOf Op(Op).

(6-1-5) Expression Typing

Hereafter , how t o determine a t ype of each ki nd of expr essi on will be presented. To simplify t he expl anat i on on the t ypi ng of expr essi on, we need to introduce a par t i al ordering r el at i on, denot ed ⊆, between t ypes as follows:

$$\tau \sqsubseteq \tau$$

$$int \sqsubseteq float$$

$$float \sqsubseteq \tau_{num}$$

$$\tau_{num} \sqsubseteq \tau_{val}$$

$$true \sqsubseteq false$$

$$false \sqsubseteq true$$

$$\tau_{bool} \sqsubseteq \tau_{val}$$

Notice t hat bot h true ⊆ false and f al se ⊆ true mean t hat t r ue = f al se.
Now, usi ng t hi s pr evi ous or der i ng r el at i on we can def i ne t he super i or t ype ( sup) of two t ypes as follows:

$$Sup(\tau_1, \tau_2) = \begin{cases} \tau_2 & \text{if } \tau_1 \sqsubseteq \tau_2 \\ \tau_1 & \text{if } \tau_2 \sqsubseteq \tau_1 \end{cases}$$

The above descr i pt i on means t hat " a super i or t ype (Sup( $T_1$, $T_2$) ) of "$T_1$ and $T_2$" is $T_2$ in the case of $T_1$ ⊆ $T_2$, and $T_1$ i n t he case of $T_2$ ⊆ $T_1$" .
The expr essi on Exp i s one of "val (value) " , " id (identifier) ", Exp) ( br acket ed expr essi on)", " op Exp ( oper at or , expr essi on) ", " Exp op Exp (expressi on, oper at or , expr essi on)" as shown i n t he foll owing definition:

$$Exp := val \mid id \mid \mid (Exp) \mid op\ Exp \mid Exp\ op\ Exp$$

The following function allows t o associate a type to each ki nd of expr essi on.

```
TypeOfExp(e:  expression, ε: List of statements )
   Begin
      Switch(e)
         case c         :   return TypeOfCst(c)
         case w         :   return TypeOfWrd(w)
         case (e₁)      :   return TypeOfExp(e₁, ε)
         case op e₁     :   (τ₁, τ₂) ← TypeOfOp(op)
                            τ' ← TypeOfExp(e₁, ε )
                            if τ' ⊑ τ₁
                            then return τ'
                            else print ErrMsg, return TypErr
                            EndIf
         case e₁ op e₂  :   (τ₁, τ₂, τ₃) ← TypeOfOp(op)
                            τ'₁ ← TypeOfExp(e₁, ε)
                            τ'₂ ← TypeOfExp(e₂, ε)
                            if τ'₁ ⊑ τ₁ and τ'₂ ⊑ τ₂
                            then if (τ₃ ≠ bool)
                                    then return Sup(τ'₁, τ'₂)
                                    else return bool
                                 EndIf
                            else print ErrMsg, return TypErr
                            EndIf
      EndSwitch
   End
```

The above function Type Of Exp (e, ε) has t he following meaning. A function argument e i s an expr essi on bel ongi ng t o a st at ement list ε.

<Begin>

Execute the function Switch(e)

When the argument e is c (constant), return a value of TypeOfCst(c).

When the argument e is w (word), return a value of TypeOfWrd(w).

When the argument e is an expression of an "$e_1$" type (expression), return a value of TypeOfExp($e_1$, $\varepsilon$).

When the argument e is an "op $e_1$" type (single operator expression),

record a value of TypeOfOp(op) in ($T_1$, $T_2$), and a value of TypeOfExp($e_1$, $\varepsilon$) in T'.

<Start of If processing> If a relation of T' ⊑ $T_1$ ($T_1$ is larger than T') is established, return $T_1$. If not, print an error message (ErrMsg) and return TypErr.

<End of If processing>

When the argument e is a "$e_1$ op $e_2$" type (expression, two-term operator expression),

record a value of TypeOfOp(op) in ($T_1$, $T_2$, $T_3$), a value of TypeOfExp($e_1$, $\varepsilon$) in T'$_1$, and a value of TypeOfExp ($e_2$, $\varepsilon$) in T'$_2$.

<Start of If processing> If relations of T'$_1$ ⊑ $T_1$ ($T_1$ is lager than T'$_1$), and T'$_2$ ⊑ $T_2$ ($T_2$ is larger than T'$_2$) are established,

<Start of If processing> and if $T_3$ is not a

```
            bool type, return Sup(T'₁, T'₂).

               If not, return bool.

            <End of If processing>

         If not, print an error message (ErrMsg) and

         return "TypErr".

            <End of If processing>

   End of the Switch.

   <End>
```

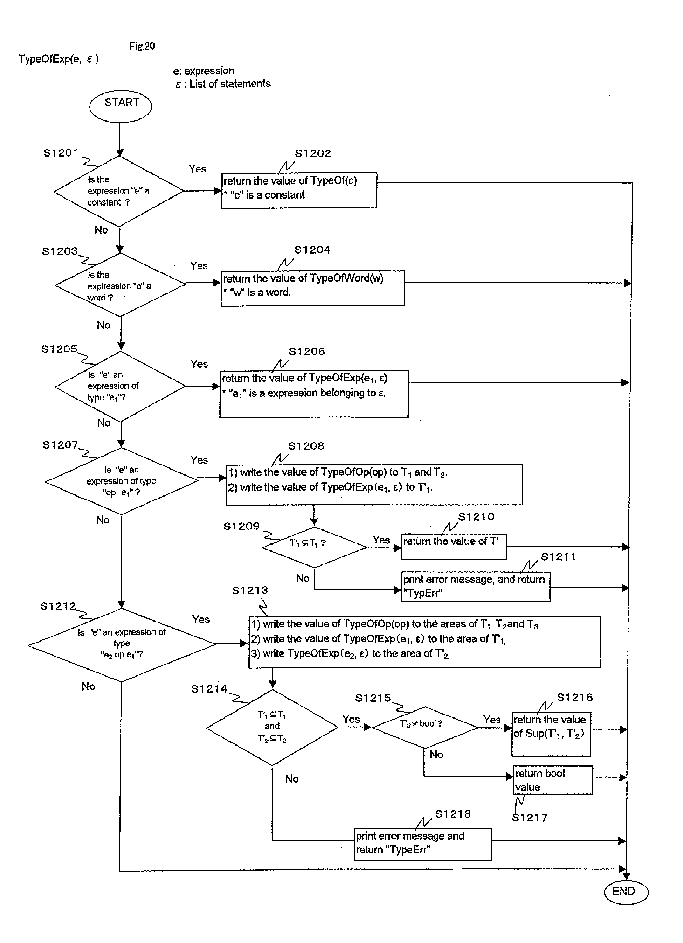

FIG. 20 is a flowchart t showing t hi s function Type Of Exp( e, $\varepsilon$) . FIG. 20 will be described i n sequel . Fi r st , determination is made as t o "whet her an expr essi on e is a const ant or not " ( st ep 1201). If the result is true, a result of the function Type Of Cst (c)[return type of const ant c] is r et ur ned ( st ep 1202) t o finish the processing.

If the result of the step 1201 is f al se, t he pr ocess pr oceeds t o st ep 1203 t o determine "whether t he expr essi on e i s a wor d or not" . I f the determination result of is true, a result of t he f unct i on Type Of Word(w) [return a t ype of wor d w] is returned (step 1204) t o finish the processing.

If the result of t he st ep 1203 i s f al se, t he pr ocess pr oceeds t o st ep 1205 t o determine "whether t he expr essi on e i s an expr essi on of an "e₁ " t ype ( expr essi on) or not" . If the result is true, a result of t he function Type Of Exp (e₁, $\varepsilon$) [ r et ur n a t ype of an expr essi on e₁ bel ongi ng to a statement list $\varepsilon$] is r et ur ned ( st ep 1206) t o finish t he pr ocessi ng.

If the result of t he st ep 1205 i s false, the process pr oceeds t o st ep 1207 t o det er ni ne "whether t he expr essi on e is " op e₁" type (single t er m oper at or , expr essi on) or not". If t he result of the det er mi nat i on i s t r ue, a val ue of t he function Type Of Op(op) [ r et ur n a t ype of the operator op] is recorded in $(T_1, T_2)$ , and a val ue of t he function Type Of Exp(e₁, $\varepsilon$) [ r et ur n a t ype of an expr essi on e₁ bel ongi ng t o t he st at ement list $\varepsilon$] i s recorded i n T' (step 1208). Af t er an end of t he st ep 1208, i n st ep 1209, determination i s made as t o "whether T' $\subseteq T_1$[a type of $T_1$ is larger than a t ype of T'] i s true or not ". If true, i n st ep 1210, a val ue of $T_1$ is returned to finish t he pr ocessi ng. If the result of t he determination of the st ep 1209 i s false, i n st ep 1211, an error message (ErrMsg) i s out put to return " TypErr", thereby finishing t he processing.

If the result of t he determinat i on of the step 1207 i s f al se, t he pr ocess pr oceeds t o st ep 1212. I n t he st ep 1212, determination is made as to "whether t he expr essi on e i s an expr essi on of an "e₁ op e₂" t ype ( expr essi on, t wo- t er m oper at or , expr essi on) or not" . I f t he r esul t of t he determinat i on i s true, i n step 1213, a val ue of t he function Type Of Op(op) [ r et ur n a t ype of t he oper at or op] is r ecor ded in $(T_1, T_2, T_3)$, a value of the function Type Of Exp(e₁, $\varepsilon$) [ r et ur n a t ype of t he expr essi on e₁ bel ongi ng to the statement list $\varepsilon$] is r ecor ded in T'₁, and a value of t he function Type Of Exp( e₂, $\varepsilon$)) [return a t ype of an expr essi on e₂ bel ongi ng t o the st at ement list $\varepsilon$] i s recorded i n T'₂. After an end of t he st ep 1213, i n st ep 1214, determination is made as t o "whet her T' $_{1 \subseteq} T_1$ ( a t ype of $T_1$ is larger than a t ype of T'₁), and T'$_{2 \subseteq} T_2$ ( a t ype of $T_2$ is larger than a t ype of T'₂) i s true or not". I f t he r esul t of t he determination i s t r ue, t he pr ocess pr oceeds to st ep 1215 to determine "whether t hat a t ype of T'₃ is not a bool type is true or not". If the result of t he determination i s true, i n step 1216, Sup(T'₁, T'₂) [return an upper most t ype of t he t wo t ypes of T' ₁ and T'₂] is returned (step 1216) to f i ni sh t he processing. If t he r esul t of t he st ep 1215 i s false, i n st ep 1217, a bool type i s r et ur ned to finish t he processing. I f t he r esul t is false i n t he st ep 1214, in st ep 1218, an error message (Err Msg) is out put to return " TypErr", t her eby finishing t he pr ocessi ng.

I f t he result of t he st ep 1212 is f al se, the pr ocessi ng is finished.

A concrete example i s t aken t o expl ai n how t hi s function works.

Suppose t hat an expr essi on i s "a + b" , and "a" and "b" ar e t wo input wor ds havi ng t he integer type (int). Thus t hi s expr essi on has t he form" e₁ op e₂( expression 1, oper at or, expr essi on 2)" , where "e₁ = a" , " op = +" and "e₂ = b".

Therefore,
Type Of Op (+) = $T_{num} \times T_{num} \rightarrow T_{num}$ (a type of t he operator + is a function type of t aki ng a set of two numerical value types and returning numerical values types), and t hus,

$(T_1, T_2, T_3) = (T_{num} \ T_{num} \ T_{num})$ is established,

Type Of Exp (a) = Type Of Exp (b) = int (expressions a, b are words whose types are integer types int, and thus Type Of Exp( a) = Type Of Wd (a) = int ,

Type Of Exp (b) = Type Of Wd (b) = int is set ) , thereby establishing $T'_1$ = int, $T'_2$ = int.

From the aforementioned partial-order definition of the types,

int $\subseteq T_{num}$ (numerical value type is higher than the integral type) can be derived, thus

conditions of $T'_{1 \subseteq} T_1$ ($T'_1$ = int , $T_1 = T_{num}$) and $T'_{2 \subseteq} T_2$ ($T'_2$ = int , $T_2 = T_{num}$) are established, and as $T_3 = T_{num,}$ then $T_3 \neq$ bool is also established.

Accordingly, Sup( $T'_1$, $T'_2$) which is returned as a last result of the function Type Of Exp( a+b) becomes Sup(int , int ) = int (the largest type of the integer type and the integer type is the integer type) . Thus, the following final result is obtained:

Type Of Exp( a + b) = int (type of an expression " a+b" is an integer type "int").

As one more example, if the type of "a" is float (floating point number) type, then the type of "a + b" will be float type. It is because,

in Type Of Exp( a+b) , in the case of a=float, b=int,

$(T_i, T_2, T_3) = (T_{num} \ T_{num} \ T_{num})$ is established,

Type Of Exp( a) = float , Type Of Exp( b) = int ( as an expressing a is a word whose type is a floating type float, and an expression b is a word whose type is an integer type int,

Type Of Exp( a) = Type Of Wd(a) = float , and

Type Of Exp( b) = Type Of Wd(b) = int are established) , $T'_1$ = float , $T'_2$ = int are established.

From the aforementioned partial order definition of the types,

because of int $\sqsubseteq$ float and float $\sqsubseteq T_{num}$ (numerical value type is higher than the integer type) , conditions of $T'_{1 \sqsubseteq} T_1$ ($T'_1$ = float , $T_1 = T_{num}$) and $T'_{2 \sqsubseteq} T_2$($T'_2$ = int , $T_2 = T_{num}$) are established, and because of $T_3 = T_{num}$ $T_3 \neq$ bool is also established.

Thus, Sup( $T'_1$, $T'_2$) which is returned as the final result of the function Type Of Exp(a+b) becomes Sup ( float , int) = float ( higher type of the float type and the integer type is the float type).

More formally, the type of an expression can be captured by the following typing rules:

$$(Cst) \qquad \frac{\Box}{\mathcal{E} \vdash c : \mathsf{TypeOfCst}(c)} \quad (Wrd) \qquad \frac{\Box}{\mathcal{E} \vdash w : \mathsf{TypeOfWrd}(c, \mathcal{E})}$$

$$(Op) \qquad \frac{\Box}{\mathcal{E} \vdash Op : \mathsf{TypeOfOp}(Op)}$$

$$(Exp_P) \qquad \frac{\mathcal{E} \vdash Exp : \tau}{\mathcal{E} \vdash (Exp) : \tau}$$

$$(Exp_U) \qquad \frac{\mathcal{E} \vdash Op : \tau_1 \longrightarrow \tau_2 \quad \mathcal{E} \vdash Exp : \tau'_1 \quad \tau'_1 \sqsubseteq \tau_1}{\mathcal{E} \vdash Op \ Exp : \tau'_1}$$

$$(Exp_{BA}) \qquad \frac{\mathcal{E} \vdash Op : \tau_1 \times \tau_2 \longrightarrow \tau_3 \quad \mathcal{E} \vdash Exp_1 : \tau'_1 \quad \mathcal{E} \vdash Exp_2 : \tau'_2 \quad \tau'_1 \sqsubseteq \tau_1 \quad \tau'_2 \sqsubseteq \tau_2 \quad \tau_3 \neq bool}{\mathcal{E} \vdash Exp_1 \ Op \ Exp_2 : Sup(\tau'_1, \tau'_2)}$$

$$(Exp_{BB}) \qquad \frac{\mathcal{E} \vdash Op : \tau_1 \times \tau_2 \longrightarrow bool \quad \mathcal{E} \vdash Exp_1 : \tau'_1 \quad \mathcal{E} \vdash Exp_2 : \tau'_2 \quad \tau'_1 \sqsubseteq \tau_1 \quad \tau'_2 \sqsubseteq \tau_2}{\mathcal{E} \vdash Exp_1 \ Op \ Exp_2 : bool}$$

The above formalizing rules are as follows:

    (Cst) Rule when an expression is a constant :

A t ype of a const ant c i n which any gi ven Lyee requirement $\varepsilon$ i s set as a typing environment i s a value returned by t he function TypeOf Cst ( C) without any pr econdi t i ons.

(Wd) Rul e when an expr essi on i s a word:

A t ype of a word win which any gi ven Lyee requirement $\varepsilon$ i s set as a typing environment is a value returned by the function Type Of W d( w, $\varepsilon$) without any preconditions.

(Op) Rul e when an expr essi on i s an oper at or :

A t ype of an operator op in which any gi ven Lyee r equi r ement $\varepsilon$ i s set as a t yping environment i s a val ue r et ur ned by t he function Type Of Op( Op) wi t hout any pr econdi t i ons.

( ExpP) Rul e when an expr essi on i s a br acket ed expr essi on:

A t ype of an expr essi on ( Exp) i n whi ch any gi ven Lyee requirement $\varepsilon$ i s set as a t ypi ng environment i s T when a pr econdi t i on " a t ype of an expr essi on Exp i n whi ch any gi ven Lyee r equi r errent $\varepsilon$ i s set as a t ypi ng environment i s T" i s established.

( Expu) Rule when an expr essi on i s " op Exp" :

A t ype of an expr essi on " op Exp" i n which any gi ven Lyee requirement $\varepsilon$ i s set as a t ypi ng environment is $T'_1$ when preconditions " if a t ype of an oper at or op i n which any gi ven Lyee requirement $\varepsilon$ i s set as a t ypi ng environment is $T_1 \rightarrow T_2$, if a type of an expr essi on Exp is $T'_1$, and if $T'_1 \sqsubseteq_1$ is est abl i shed, t hen t he t ype is T" ar e est abl i shed.

( ExpBA) Rule when an expr essi on i s "Exp op Exp", and an operation result is not a bool type:

A t ype of an expr essi on "$Exp_1$ op $Exp_2$" in which any gi ven Lyee requirement $\varepsilon$ i s set as a t ypi ng environment i s Sup($T'_1$, $T'_2$) when preconditions " a type of an oper at or op i n which any gi ven Lyee requirement $\varepsilon$ i s set as a t ypi ng environment is $T_1 \times T_2 \rightarrow T_3$, a type of an expr essi on $Exp_1$ is $T'_1$, a t ype of an expr essi on $Exp_2$ is $T'_2$, and $T'_1 \sqsubseteq T1$, $T'_2 \sqsubseteq T_2$, and $T_3 \neq$ bool ar e t r ue" ar e est abl i shed.

($Exp_{BB}$) Rule when an expr essi on i s "Exp op Exp" , and an oper at ion result is a bool type:

A type of an expr essi on " $Exp_1$ op $Exp_2$" i n which any gi ven Lyee requirement $\varepsilon$ i s set as a t ypi ng environment i s bool when preconditions " a t ype of an oper at or op i n whi ch any gi ven Lyee requirement $\varepsilon$ i s set as a t ypi ng environment i s $T_1$ x$T_2 \rightarrow$ bool, a type of an expr essi on $Exp_1$ is $T'_1$, a type of an expr essi on $Exp_2$ i s $T'_2$, and $T'_1 \sqsubseteq T1$ and $T'_2 \sqsubseteq T_2$ are t r ue" ar e est abl i shed.

(6- 1 - 6) Statement Typi ng

Once a t ype determination method of a t ype i s identified, it is qui t e easy t o car r y out t ypi ng of any gi ven statement of Lyee requirements. The following function determines a t ype of any gi ven statement s of t he Lyee requirement $\varepsilon$.

TypeOfStat$((Id, Exp, Cond, io, \tau, \tau_{sec})$: statement, $\mathcal{E}$: List of statements)

Begin

If$(io = IF)$ or $(io = IS)$ and $(\tau = "")$

Then print ErrMsg

return 0

Else If(TypeOfExp$(Exp)! =$TypErr) and (TypeOfExp$(Cond) = bool$)

return $(Id, Exp, Cond, io,$ TypeOfExp$(Exp), \tau_{sec})$

EndIf

EndIf

End

The above function Typ Of St at ((Id, Exp, Cond, i o, T, $T_{sec}$), ε) has t he following meaning. Function arguments ( I d, Exp, Cond, i o, T, $T_{sec}$) ar e values of items const i t ut i ng any gi ven statement i n which a st at ement list ε bei ng any given Lyee requirement i s set as a t ypi ng envi r onment ( i d=i dent i fier of word, Exp=defi ni t i on expr essi on, Cond=defi ni t i on expr essi on execut i on condi t i on expr essi on, i =i nput / output at t r i but es, T=type of val ue of wor d, and $T_{sec}$=type i ndi cat i ng security level of wor d value).

```
<Begi n>
    <St ar t  of  I f  pr ocessi ng>
    I f  oi =I f  or  i o=I S and  T  i s  empt y  [t hat  i s,  i f  a
    st at ement  i s  of  an  i nput  wor d  and  does  not  have  t ype
    i nf or mat i on],  pr i nt  an  er r or  message,  and  r et ur n  "0"
    [t hat  i s,  t ype  det er mi nat i on  i s  i mpossi bl e].
```

If not [that is, if statement is of an output word],

<Start of If processing> if a result of the function

TypeOf Exp(Exp) [return type of definition expression

Exp] is TypErr[type of the definition expression is

TypErr, i.e., type determination is impossible], and

a value of the function TypeOf Exp(Cond) [return type

of condition expression Cond] is a bool type,

return (Id, Exp, Cond, io, TypeOf Exp(Exp), $T_{sec}$) as a

result.

<End of If processing>

<End of If processing>

<End>

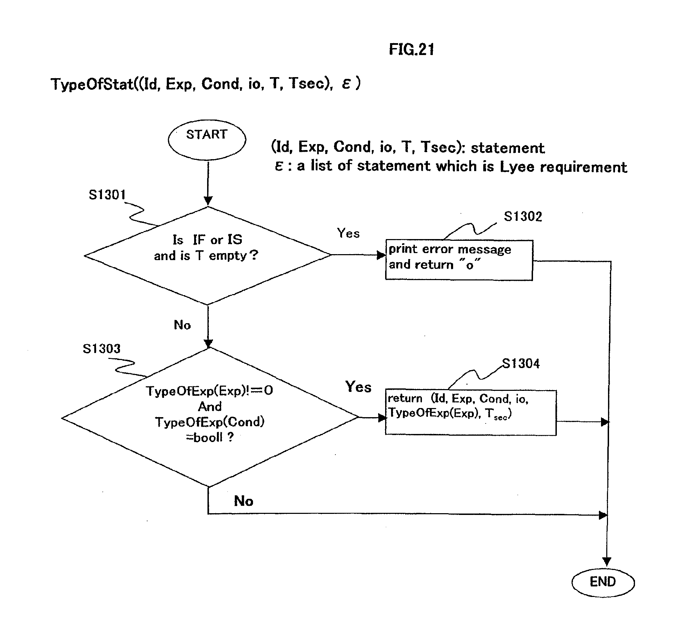

FIG. 21 is a flowchart showing the function Type Of Stat ((Id, Exp, Cond, io, T, $T_{sec}$), ε) . FIG. 21 will be described in sequel. First, determination is made as to "whether an io item of a statement is IF[input to a file] or IS[input to screen] , and an item T is errpty [there is no type information] or not " (step 1301). If the result of the determination is true, the process proceeds to step 1302 to print an error message (Err Msg) and to return "0" , thereby finishing the processing.

If the result of the determination is false, the process proceeds to step 1303 to determine "whether a result of the function Type Of Exp(Exp) [return type of definition expression Exp] is TypErr [i.e., type determination is impossible] , and a value of the function Type Of Exp (Cond) [return type of condition expression Cond] is a bool type or not". If the result of the determination is true, in step 1304, values of (Id, Exp, Cond, io, Type Of Exp (Exp), $T_{sec}$) are returned to finish the processing. If the result of the determination is false, the processing is finished.

Formally put, the typing rule associated to this function is as follows:

$$\frac{\mathcal{E} \vdash Exp : \tau_1 \quad \mathcal{E} \vdash Cond : bool \quad io \neq IS \quad io \neq IF}{\mathcal{E} \vdash (Id, Exp, Cond, io, \tau, \tau_{sec}) : (Id, Exp, Cond, io, \tau_1, \tau_{sec})}$$

The rule indicated by the above formalizing description states that types of statements (Id, Exp, Cond, io, T, $T_{sec}$) in which a statement list ε of any given Lyee requirement is set as a typing environment are (Id, Exp, Cond, io, $T_1$, $T_{sec}$) when " preconditions ' a type of a definition expression Exp is $T_1$, similarly a type of a definition expression execution condition expression is a bool type, and input / output attributes are neither IS nor iF in which the statement list ε of any given Lyee requirement is set as a typing environment' are established".

(6-1-7) Lyee Requirement Typing

Given an ordered list ε of any statement, then type determination is as follows:

**TypeOfLyee( $< s_1, \ldots, s_n >$: list of statements)**

Var $\mathcal{E}_0$: list of statements

Begin

$\mathcal{E}_0 \leftarrow < s_1, \ldots, s_n >$

For i=1 to n

$s'_i \leftarrow \text{TypeOfStat}( s_i, \mathcal{E}_{i-1} )$

$\mathcal{E}_i \leftarrow \mathcal{E}_{i-1}$

replace the $i^{th}$ element of $\mathcal{E}_i$ by $s'_i$

EndFor

return $\mathcal{E}_n$

End

The above function TypeOf Lyee( $<s_1, ..., s_n>$) has t he f ol l owi ng meani ng. Arguments $<S_1, ..., S_n>$ ar e lists of statements which are Lyee requirements, and a var i abl e $\varepsilon_0$ is a statement list.

<Begi n>

Record st at ement l i st s $<s_1, \cdots, s_n>$ i n an ar ea of t he vari abl e $\varepsilon_0$.

<St ar t of For pr ocessi ng> Subst i t ut e i wi t h 1 t o n, and execut e t he f ol l owi ngs.

Record a r esul t of TypeOf St at ( $s_i$, $\varepsilon_{i-1}$) i n $s'_i$.

Record a r esul t of $\varepsilon_{i-1}$ i n $\varepsilon_i$.

Repl ace i -t h el ement of $\varepsilon_i$ wi t h $s'_i$.

<End of For pr ocessi ng>

Ret ur n val ue of $\varepsilon_n$

<End>

For example, t he function Typeof Lyee( $<s_1, s_2, s_3>$) of N= 3 is as follows.
Recor d st at ement list $<s_1, s_2, s_3>$ i n t he ar ea of t he var i abl e $\varepsilon_0$

```
<Start of For processing> in the case of i=1

        record a result of TypeOfStat(s₁, ε₀) in s'₁

        record a result of ε₀ in ε₁

        replace 1st element s₁ of ε₁ with a value of s'₁

                    In the case of i=2,

        record a result of TypeOfStat(s₂, ε₁) in s'₂

        record a result of ε₁ in ε₂

        replace 2nd element s₂ of ε₂ with a value of s'₂

                    In the case of i=3,

        record a result of TypeOfStat(s₃, ε₂) in s'₃

        record a result of ε₂ in ε₃

        replace 3rd element s₃ of ε₃ with a value of s'₃

    <End of For processing>

  Return values <s'₁, s'₂, s'₃> of ε₃ as a result

    <End>
```

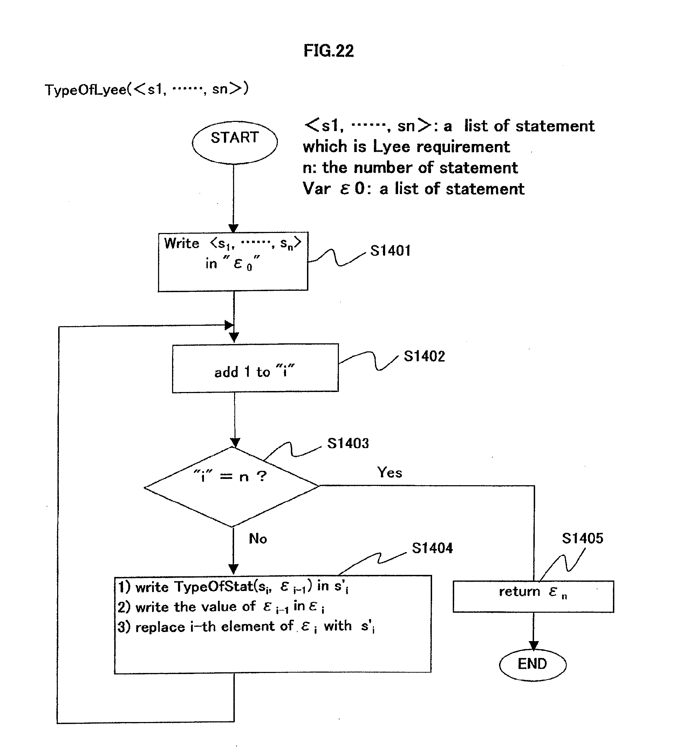

FIG. 22 is a flowchart showing the function TypeOf Lyee($<S_1, ..., s_n>$). FIG. 22 will be described in sequel. First, a statement list $<s_1, ..., s_n>$ is recorded in the area of the variable $\varepsilon_0$ (step 1401). Next, 1 is added to i (step 1402), and the process proceeds to step 1403. In the step 1403, determination is made as to "whether a value of i is n or not". If the result is false, a result of Type Of Stat $(s_i, \varepsilon_{i-1})$ is recorded in $s_i$, a result of $\varepsilon_{i-1}$ is recorded in $\varepsilon_i$, and an i-th element of $\varepsilon_i$ is replaced by $s'_i$ (step 1404). After an end of the step 1404, the process returns to the step 1402 to execute again. As long as the result of the step 1403 is false, restart processing (1406) of the steps 1402 to 1404 is repeated.

When the result of the step 1403 becomes true, in step 1405, a value of $\varepsilon_n$ is returned to finish the processing. In this case, a value of $\varepsilon_n$ is $<s'_1, \cdots, s'_n>$.

Formally put, the typing rule associated to this function is as follows:

$$\frac{\mathcal{E} \vdash s_1 : s'_1 \qquad \mathcal{E} \dagger [s_1 \leftarrow s'_1] \vdash < s_2, \ldots, s_n >: < s'_2, \ldots, s'_n >}{\mathcal{E} \vdash < s_1, \ldots, s_n >: < s'_1, \ldots, s'_n >}$$

The rule indicated by the above formalizing description states that "type of a statement list $<s_1, \cdots, S_n>$ in which a statement list $\varepsilon$ of Lyee requirement is set as a typing environment is $<s'_1, \cdots, s'_n>$ when preconditions "type of a statement $s_1$ in which the statement list $\varepsilon$ of the Lyee requirements is set as a typing environment is $s'_1$, and types of $<s_2, \cdots, s'_n>$ in which a statement list $\varepsilon$ is set as a typing environment after $s_1$ is substituted with $s'_1$, are $<s'_2, \cdots, s'_n>$" are established".

Finally, the complete type determination system associated with an ordered Lyee requirement is as follows:

$$(Cst) \qquad \frac{\Box}{\mathcal{E} \vdash c : \text{TypeOfCst}(c)} (Wrd) \qquad \frac{\Box}{\mathcal{E} \vdash w : \text{TypeOfWrd}(c, \mathcal{E})}$$

$(Op)$

$$\frac{\square}{\mathcal{E} \vdash Op : \text{TypeOfOp}(Op)}$$

$(Exp_P)$

$$\frac{\mathcal{E} \vdash Exp : \tau}{\mathcal{E} \vdash (Exp) : \tau}$$

$(Exp_U)$

$$\frac{\mathcal{E} \vdash Op : \tau_1 \longrightarrow \tau_2 \quad \mathcal{E} \vdash Exp : \tau_1' \quad \tau_1' \sqsubseteq \tau_1}{\mathcal{E} \vdash Op\, Exp : \tau_1'}$$

$(Exp_{BA})$

$$\frac{\mathcal{E} \vdash Op : \tau_1 \times \tau_2 \longrightarrow \tau_3 \quad \mathcal{E} \vdash Exp_1 : \tau_1' \quad \mathcal{E} \vdash Exp_2 : \tau_2' \quad \tau_1' \sqsubseteq \tau_1 \quad \tau_2' \sqsubseteq \tau_2 \quad \tau_3 \neq bool}{\mathcal{E} \vdash Exp_1\, Op\, Exp_2 : Sup(\tau_1', \tau_2')}$$

$(Exp_{BB})$

$$\frac{\mathcal{E} \vdash Op : \tau_1 \times \tau_2 \longrightarrow bool \quad \mathcal{E} \vdash Exp_1 : \tau_1' \quad \mathcal{E} \vdash Exp_2 : \tau_2' \quad \tau_1' \sqsubseteq \tau_1 \quad \tau_2' \sqsubseteq \tau_2}{\mathcal{E} \vdash Exp_1\, Op\, Exp_2 : bool}$$

$(Stat)$

$$\frac{\mathcal{E} \vdash s_1 : s_1' \quad \mathcal{E} \dagger [s_1 \leftarrow s_1'] \vdash <s_2, \ldots, s_n> : <s_2', \ldots, s_n'>}{\mathcal{E} \vdash <s_1, \ldots, s_n> : <s_1', \ldots, s_n'>}$$

$(Req)$

$$\frac{\mathcal{E} \vdash s_1 : s_1' \quad \mathcal{E} \dagger [s_1 \leftarrow s_1'] \vdash <s_2, \ldots, s_n> : <s_2', \ldots, s_n'>}{\mathcal{E} \vdash <s_1, \ldots, s_n> : <s_1', \ldots, s_n'>}$$

The rule indicated by t he above formalizing descr i pt i on ar e as follows.
( Cst ) Rul e when an expr essi on i s a const ant :

A t ype of a const ant c i n which a statement list $\varepsilon$ bei ng Lyee requirement i s set as a t ypi ng environment i s a val ue r et ur ned by t he function Type Of Cst ( C) without any pr econdi t i ons.

(Wd) Rul e when an expr essi on i s a word:

A t ype of a word w in which a statement list $\varepsilon$ bei ng Lyee r equi r ement i s set as a t ypi ng envi r onment i s a val ue r et ur ned by t he f unct i on Type Of W d (w, $\varepsilon$) without any pr econdi t i ons.

(Op) Rul e when an expr essi on i s an operator:

A t ype of an oper at or op in which a statement list $\varepsilon$ bei ng Lyee requirement i s set as a t ypi ng environment i s a val ue r et ur ned by t he function Type Of Op( Op) without any pr econdi t i ons.

(ExpP) Rule when an expr essi on i s a br acket ed expr essi on:

A t ype of an expr essi on ( Exp) i n whi ch a st at ement list $\varepsilon$ bei ng Lyee requirement i s set as a t ypi ng environment i s T when a pr econdi t i on " a t ype an expressi on Exp i n which a statement list $\varepsilon$ bei ng Lyee requirement i s set as a t ypi ng environment i s T" i s est abl i shed.

( Expu) Rule when an expr essi on i s "op Exp" :

A type of an expr essi on " op Exp" i n which a statement list $\varepsilon$ bei ng Lyee requirement i s set as a t ypi ng environment i s T'$_1$ when pr econdi t i ons " a t ype of an oper at or op i n whi ch an a st at ement list $\varepsilon$ being Lyee requirement i s set as a t ypi ng environment i s $T_1 \rightarrow T_2$, a type of an expr essi on Exp i s T'$_1$, and T'$_1 \sqsubseteq_1$ i s t r ue" ar e est abl i shed.

( Exp$_{BA}$) Rul e when an expr essi on i s "Exp op Exp" , and an oper at i on r esul t i s not a bool t ype:

A t ype of an expr essi on "Exp$_1$ op Exp$_2$" i n whi ch a statement list ε bei ng Lyee requirement i s set as a t ypi ng environment i s Sup( T'$_1$, T'$_2$) when preconditions "a type of an oper at or op i n whi ch a st at ement list ε bei ng Lyee requirement is a t ypi ng environment is T$_1$×T$_2$→T$_3$, a t ype of an expr essi on Exp$_1$ i s T'$_1$, a type of an expr essi on Exp$_2$ i s T'$_2$, and T'$_1 \sqsubseteq$ T1, T'$_2 \sqsubseteq$ T$_2$, and T$_3 \neq$bool ar e t r ue" ar e est abl i shed.

(Exp$_{BB}$) Rule when an expr essi on i s " Exp op Exp" , and an operation r esult is a bool t ype:

A t ype of an expr essi on " Exp$_1$ op Exp$_2$" i n which a statement list ε bei ng Lyee requirement i s set as a t ypi ng environment i s bool when preconditions " a t ype of an oper at or op in which a statement list ε being Lyee requirement i s set as a t ypi ng environment i s T$_1$xT$_2$→bool, a t ype of an expr essi on Exp$_1$ i s T'$_1$, a t ype of an expr essi on Exp$_2$ is T'$_2$, and T'$_1 \sqsubseteq$ T1 and T'$_2 \sqsubseteq$ T$_2$ are true" ar e established.

(6-2) Case St udy

I n t he following, t wo examples showing t he importance of t he appl i cat i on of t ype checki ng on Lyee requirement ar e pr esent ed. The first example shows how a t ypi ng syst em can rightly det ect er r or s related to violation of t ypes. The second example shows t he automatic gener at i on of t ypes by t he t ypi ng syst em

<Example I >

Suppose t he requirements are given as in Tabl e 26. As st at ed above, we need first to optimally or der t he statement before t he verification of t ypes. Ther ef or e, t he type verification will be applied on t he or der ed ver si on of requirements shown in Tabl e 27.

Tabl e 26: Initial Requirements

| Word | Definition | Condition | IO | Type | Security |
|---|---|---|---|---|---|
| a | | true | IS | int | secret |
| b | c | 2=2 | OS | bool | public |
| c | a =6 | 2=3 | | int | public |
| e | | true | IS | int | public |
| f | g | true | OS | float | secret |
| d | true+6 | true | | int | public |
| g | d = 9 | 2 = 3 | OS | int | public |
| h | f | f=g | OS | int | public |

Table 27: Ordered Requirements

| Word | Definition | Condition | 10 | Type | Security |
|---|---|---|---|---|---|
| a | | true | IS | int | secret |
| c | a = 6 | 2=3 | | int | public |
| b | c | 2=2 | OS | bool | public |
| e | | true | IS | int | public |
| d | true + 6 | true | | int | public |
| g | d = 9 | 2 = 3 | OS | int | public |
| f | g | true | OS | float | secret |
| h | f | f = g. | OS | int | public |

If Typing analysis is done on ordered requirement of t he Table 27, t he results returned shows t hat t her e ar e some type errors in requirements as follows:

· Error in Statement d : The expr essi on (t rue) i s not numeric (int or float).
· Warning in Statement c : The t ype (int) have been amended t o (bool).
· Warning i n Statement g : The t ype (int) have been amended t o (bool).
· Warning in Statement f : The t ype (float) have been amended t o (bool).
· Warning i n Statement h : The t ype (int) have been amended t o (bool).

The requirements in which pr oper t ypes ar e newly gener at ed by t ypi ng ar e t hose gi ven i n Tabl e 28.

Tabl e 28: Requirements af t er t ypi ng

| Word | Definition | Condition | IO | Type | Security |
|------|-----------|-----------|-----|------|----------|
| a | | true | IS | int | secret |
| c | a = 6 | 2=3 | | bool | public |
| b | c | 2=2 | OS | bool | public |
| e | | true | IS | int | public |
| d | true + 6 | true | | int | public |
| g | d = 9 | 2=3 | OS | bool | public |
| f | g | true | OS | bool | secret |
| h | f | f= g | OS | bool | public |

<Example I I>

As mentioned above, t he t ype syst em i s al so able t o automati cal l y gener at e t he t ypes of al l words except t he input ones. Thi s char act er i st i cs wil l be shown by a concr et e example.
As shown i n t he requirement gi ven i n Tabl e 29, t he gi ven t ypes ar e t hose of t he input words. The t ype checki ng syst em applied t o requirement ( Tabl e 30) which has been ordered, gi ves t he results gi ven in Tabl e 31.

Tabl e 29: Initial Requirements

| Word | Definition | Condition | IO | Type | Security |
|------|-----------|-----------|-----|------|----------|
| a | | true | IS | int | secret |
| b | c | 2=2 | OS | | public |
| c | a=6 | 2 = 3 | | | public |
| e | | true | IS | int | public |
| f | g | true | OS | | secret |
| d | a + 6 | true | | | public |
| g | d = 9 | 2 = 3 | OS | | public |
| h | f | f=g | OS | | public |

Table 30: Requirement s af t er or der ed

| Word | Definition | Condition | IO | Type | Security |
|------|-----------|-----------|-----|------|----------|
| a | | true | IS | int | secret |
| e | a =6 | 2=3 | | | public |
| b | c | 2 = 2 | OS | | public |

Table continued

| Word | Definition | Condition | IO | Type | Security |
|------|-----------|-----------|-----|------|----------|
| e | | true | IS | int | public |
| d | a + 6 | true | | | public |
| g | d=9 | 2=3 | OS | | public |
| f | g | true | OS | | secret |
| h | f | f=g | OS | | public |

Table 31: Requirements af t er t ypi ng

| Word | Definition | Condition | IO | type | Security |
|------|-----------|-----------|-----|------|----------|
| a | | true | IS | int | secret |
| c | a = 6 | 2 = 3 | | bool | public |
| b | c | 2 =2 | OS | bool | public |
| s | | true | IS | int | public |
| d | a + 6 | true | | int | public |
| g | d=9 | 2=3 | OS | bool | public |
| f | g | true | OS | bool | secret |
| h | f | f= g | OS | bool | public |

7. Security Typi ng

I n t he sequel , how suitable Lyee methodology i s f or dealing with many ot her aspect s of software development such as security i s pr esent ed. I n f act , t ypi ng t echni que presented above coul d be easily extended and applied to at t est t hat a gener at ed code sat i sf i es some secur i t y pol i cy such as dat a confidentiality and integrity when t he program i s execut ed i n a hostile environment. The idea is to allow user s to explicitly attach a security label (public, secret, et c. ) , which i ndi cat es security requirements, t o each defined wor d, together wi t h a security policy (e.g. the value of a secret word can not be st or ed i n a public word). Fr om t hese gi ven information, we can use t ype checki ng t echni ques to automati cal l y verify a pr ogr am i n order t o r eveal subt l e desi gn flaws t hat has a r oom f or causi ng security violations.

For i nst ance, suppose t hat we ext end t he requirement i s ext ended by security l abel as shown within t he statements gi ven i n Tabl e 32.

Tabl e 32:

| Word | Definition | Condition | IO | Security | ⋯ |
|------|-----------|-----------|-----|----------|---|
| a | b+c | b>2 | Output | public | ⋯ |
| c | | | Input | public | ⋯ |
| b | c+5 | c>0 | Output | secret | ⋯ |

Suppose that t he secur i t y policy f or bi ds to affect t he val ue of a secr et wor d on t hat of a publ i c one. Suppose al so that t he r esul t of t he addition of a secr et val ue to anot her val ue ( secr et or publ i c) has t o be consi der ed as secr et . Thus, it i s clear t hat t he requirerrent shown i n Table 32 does not comply with the security pol i cy since t he publ i c word " a" has r ecei ved a secret val ue.

(7-1) Security Typi ng Rul es

Similarly to the typing verification, security verification makes al so use of t he following i ngr edi ent s. Thi s sect i on defines t he di f f er ent t ypes t hat coul d bel ong t o wor ds, const ant s and oper at or s t hat can be pr esent i n a gi ven Lyee requirement .

(7- 1- 1) Basi c Security Types

<Secur i t y t ype of val ue>

For the sake of simplicity, it is her e supposed t hat a secur i t y t ype of word and const ant s can be public or secret.

$$\tau S_{val} \ ::= \ public \mid secret$$

The above definition means t hat "the value security t ype ( Ts$_{val}$) i s public or secret".

<Secur i t y t ype of operator>

We have al so to clarify t he security types of bool ean oper at or and arithmetic oper at or t hat can be involved i n Lyee requirement. For each oper at or , t he security types of its operands and the type of its result need to be clarified. The Secur i t y t ypes of a gi ven oper at or has generally t he following forms: $TS_1 \rightarrow TS_2$.

Intuitively under st ood, t hi s formal description means t hat an oper at or can be consi der ed as a function that t akes as input an element havi ng a secur i t y t ype $TS_1$ and r et ur ns an element havi ng a secur i t y t ype $TS_2$. Needl ess t o say, some oper at or s t ake more t han one oper and. Therefore, it is easy to expl ai n t hi s ki nd of case if we consi der that a security type can be by itself a pai r of security types.

To sum up, a security t ype can be a $TS_{val}$ (security t ype of one val ue) , a pai r of secur i t y t ypes $TS_1 \times TS_2$, or $TS_1 \rightarrow TS_2$.

More formally put, we can write as i n the followings:

$$\tau S \ ::= \ \tau S_{val} \mid \tau S_1 \times \tau S_2 \mid \tau S_1 \longrightarrow \tau S_2$$

The above formal description means t hat "the security type ($T_s$) i s Ts$_{val}$, or $Ts_1 \times Ts_2$, or $Ts_1 \rightarrow Ts_2$".

(7-1-2) Security Typi ng of Const ant s

Dur i ng t he secur i t y checki ng of Lyee requirement, t he secur i t y t ype of t he const ant s f ound i n statements is simply a public as shown in the following:

$$true, \ false \ \mapsto \ public,$$

$$num \qquad \mapsto \ public,$$

$$num.num \quad \mapsto \ public,$$

That is to say that in the case in which the const ant i s t r ue or false, and i n t he cases of num (numerical value) and num num (floating poi nt val ue) , t he security t ypes ar e public. Similarly to the t ypi ng verification, t he following function will be used to determine a secur i t y t ype of any gi ven constant.

$$\text{SecTypeOfCst}(cst: \text{ constant})$$
$$\text{Begin}$$
$$\text{return } public$$
$$\text{End}$$

The above function Sec Type Of Cst (cst) has t he following meaning. A function argument cst means a constant.

<Begi n>

 Ret ur n a val ue publ i c

<End>

The secur i t y t ypi ng of const ant s can be formalized by t he following rule:

$$\frac{\Box}{\mathcal{E} \vdash c : \text{SecTypeOfCst}(c)}$$

The above f or mal descr i pt i on means t hat "a security t ype of t he const ant c i n whi ch a statement list $\varepsilon$ bei ng Lyee requirement i s set as a secur i t y t ypi ng environment i s a val ue of a result t of SecType Of Cst(c) without any pr econditions" .

(7-1-3) Security Typi ng of Words

For any input word, t he user has t o be absol ut el y pr eci se about its secur i t y t ype. For t he r emai ni ng words, t hei r security t ypes will be aut omat i cally corrput ed and saved i n t he fields " Secur i t y" of t he statements def i ni ng t hese words. When t her e i s an al r eady known wor d, t he function SecTypeOf Wrd t hat r et ur ns t he security type of a word is defined as follows:

$$\text{SecTypeOfWrd}(w: \text{ word}, \mathcal{E}: \text{List of statements})$$
$$\text{Begin}$$
$$\text{return Security(Statement}(w,\mathcal{E}))$$
$$\text{End}$$

The above function SecTypeOf Wor d( w, $\varepsilon$) has t he f ol l owi ng meani ng. The f unct i on ar gurnent w means any gi ven word bel ongi ng t o t he requirement $\varepsilon$.

```
<Begin>

    Return a value of a security type (Security (*), *

is a statement obtained by Statement(w, ε)) of a

statement(Statement(w, ε)) of a word w belonging to the



requirement ε.

<End>
```

The security typing of words can be formalized by the following rule:

$$\frac{\Box}{\mathcal{E} \vdash w : \mathrm{SecTypeOfWrd}(w, \mathcal{E})}$$

The above formal description means that " a security type of the word win which a statement list ε being Lyee requirement is set as a security typing environment is a value of a result of Sec Type Of Wd(w, ε) without any preconditions".

(7-1-4) Security Typing of Expressions

Hereafter, how to determine a security type of each kind of expression is explained. To simplify the explanation on the security typing of expression, we need first to introduce a partial ordered relation, denoted $\sqsubseteq$ S, between security types:

$$\tau s \qquad \sqsubseteq_S \quad \tau s$$

$$public \quad \sqsubseteq_S \quad secret$$

Using this partial ordered relation upper level of two security types can be defined as shown hereafter :

$$SecSup(\tau s_1, \tau s_2) = \begin{cases} \tau s_2 & \text{if } \tau s_1 \sqsubseteq_S \tau s_2 \\ \tau s_1 & \text{if } \tau s_2 \sqsubseteq_S \tau s_1 \end{cases}$$

The above description means that " upper type (Sup(Ts$_1$, Ts$_2$) ) of Ts$_1$ and Ts$_2$ is Ts$_1$ in the case of Ts$_1 \sqsubseteq$ sTs$_2$, and Ts$_2$ in the case of TS$_2 \sqsubseteq$ sTS$_i$".

As an expression is one of the followings, i.e., val (value), id (identifier of word), or ( Exp) ( bracketed expression) , op Exp( operator, expression) , or Exp op Exp ( expression, operator, expression) ,

$$Exp \quad := \quad val \mid id \mid (Exp) \mid op\ Exp \mid Exp\ op\ Exp$$

The following function allows t o associ at e a secur i t y t ype t o each ki nd of expr essi on.

$$\text{SecTypeOfExp}(e:\ \text{expression},\ \mathcal{E}:\ \text{List of statements})$$
$$\text{Begin}$$
$$\quad \text{Switch}(e)$$
$$\quad\quad \text{case } c \quad\quad\quad : \quad \text{return SecTypeOfCst}(c)$$
$$\quad\quad \text{case } w \quad\quad\quad : \quad \text{return SecTypeOfWrd}(w)$$
$$\quad\quad \text{case } (e_1) \quad\quad : \quad \text{return SecTypeOfExp}(e_1, \mathcal{E})$$
$$\quad\quad \text{case } op\ e_1 \quad\ : \quad \text{return SecTypeOfOp}(e_1)$$
$$\quad\quad \text{case } e_1\ op\ e_2 \ : \quad \tau_{S_1} \leftarrow \text{SecTypeOfExp}(e_1, \mathcal{E})$$
$$\quad\quad\quad\quad\quad\quad\quad\quad\quad\ \tau_{S_2} \leftarrow \text{SecTypeOfExp}(e_2, \mathcal{E})$$
$$\quad\quad\quad\quad\quad\quad\quad\quad\quad\ \text{return SecSup}(\tau_{S_1}, \tau_{S_2})$$
$$\quad \text{EndSwitch}$$
$$\text{End}$$

The above function SecTyp Of Exple, ε) has t he following meaning. A function argument e is any given expression belonging to t he requirement ε.

<Begi n>

Execut e t he f uncti on Swi t ch( e)

Ret ur n a val ue of a r esul t of SecTypeOf Cst ( c) when t he

ar gument e of a r esul t of SecTypeOf Wr d( w) when t he

ar gument e i s w ( wor d)

```
Return a value of a result of SecTypeOf Exp(e_1, ε) when
the argument e is e_1 (expression)
Return a value of a result of SecTypeOf Exp(e_1) when the
argument e is op e_1 (operator expression)
When the argument e is e_1 op e_2 (expression, operator,
expression),
        record SecTypeOf Exp(e_1, ε) in Ts_1
        record SecTypeOf Exp(e_2, ε) in Ts_2
        return SecSup(Ts_1, Ts_2)
Finish the function Switch
<End>
```

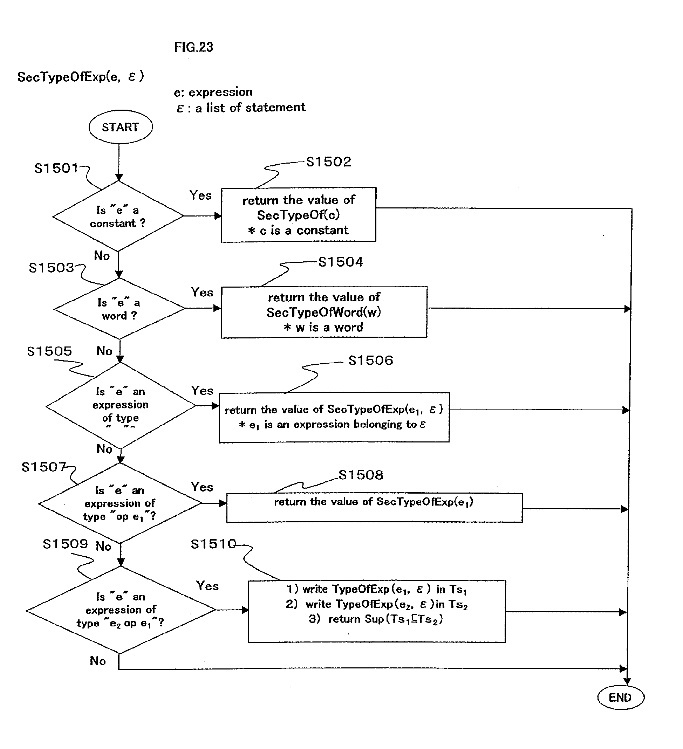

FIG. 23 is a flowchart showing the function SecTypeOf Exp(e, ε). FIG. 23 will be described in sequel. First, determination is made as to "whether an expression e is a constant or not" (step 1501). If the result is true, a result of the function SecTypeOf Cst (c) [return a security type of a constant c] is returned (step 1502) to finish the processing.

If the result of the step 1501 is false, the process proceeds to step 1503 to determine "whether the expression e is a word or not". If the result of the determination is true, a result of the function Sec Type Of Word (w) [return a security type of a word w] is retuned (step 1504) to finish the processing.

If the result of the step 1503 is false, the process proceeds to step 1505 to determine "whether the expression e is an expression of "e_1" type (expression) or not". If the result is true, a result of the function SecTypeOf Exp(e_1, ε) [return a security type of an expression e_1 belonging to a statement list ε] is returned (step 1506) to finish the processing.

If the result of the step 1505 is false, the process proceeds to step 1507 to determine "whether the expression e is an expression of an "op e_1" type (single term operator, expression) or not". If the result of the determination is true, a result of the function Sec Type Of Exp(e_1) [return a security type of an expression e_1] is returned (step 1508).

If the result of the step 1507 is false, the process proceeds to step 1509. In the step 1509, determination is made as to "whether the expression e is an expression of an "e_1 op e_2" type (expression, two-term operator, expression) or not" If the result of the determination is true, in step 1510, SecTypeOf Exp(e_1, ε) is recorded in Ts_1, SecType Of Exp(e_2, ε) is recorded in Ts_2, and SecSup(Ts_1, TS_2) is returned to finish the processing.

If the result of the step 1509 is false, the processing is finished.

More formally, the security typing of an expression can be captured by the following rules:

$$(Cst) \quad \frac{\Box}{\mathcal{E} \vdash c : SecTypeOfCst(c)} \quad (Wrd) \quad \frac{\Box}{\mathcal{E} \vdash w : SecTypeOfWrd(w, \mathcal{E})}$$

$$(Exp_P) \quad \frac{\mathcal{E} \vdash Exp : \tau_s}{\mathcal{E} \vdash (Exp) : \tau_s}$$

$$(Exp_U) \quad \frac{\mathcal{E} \vdash Exp : \tau_s}{\mathcal{E} \vdash Op\ Exp : \tau_s}$$

$(Exp_B)$ 
$$\frac{\mathcal{E} \vdash Exp_1 : \tau_{S_1} \quad \mathcal{E} \vdash Exp_2 : \tau_{S_2}}{\mathcal{E} \vdash Exp_1 \; Op \; Exp_2 : SecSup(\tau_{S_1}, \tau_{S_2})}$$

The above formalizing rules are as follows.
(Cst) Rule when an expression is a constant:

A type of a const ant c i n which a statement list ε being Lyee requirement is set as a security typing environment is a value returned by the function SecTypeOf Cst (C) without any preconditions.

(Wd) Rul e when an expr essi on i s a word:

A t ype of a word win which a statement list ε being Lyee requirement is set as a security typing environment is a value returned by t he function SecTypeOf W d( w, ε) without any pr econdi t ions.

(ExpP) Rul e when an expr essi on i s a br acket ed expr essi on:

A t ype of an expr essi on ( Exp) i n whi ch a st at ement list ε bei ng Lyee r equi rement i s set as a secur i ty t ypi ng envi ronment i s Ts when a pr econdi t i on " a t ype of an expr essi on Exp i n whi ch a st at ement list ε bei ng Lyee r equi r ement i s set as a secur i t y t ypi ng envi r onment i s Ts" is est abl i shed.

( Expu) Rul e when an expressi on is "op Exp" :

A t ype of "Op Exp" i n which a st at ement list ε bei ng Lyee r equi rement i s set as a secur i t y t ypi ng environment i s Ts when pr econdi t ions "a t ype of an Exp ( expr essi on) i n whi ch a statement list ε bei ng Lyee requirement i s set as a security t ypi ng environment is Ts" is est abl i shed.

( ExpB) Rul e when an expr essi on i s "Exp op Exp" :

A t ype of an expr essi on "Exp$_1$ op Exp$_2$" i n which a statement list ε being Lyee requirement i s set as a security t ypi ng environment i s Sup( TS$_1$, TS$_2$) when preconditions "a type of an expr essi on Exp$_1$ i s Ts$_1$, and a type of an expr essi on Exp$_2$ is Ts$_2$ in which a st at ement list ε being Lyee requirement is set as a security t ypi ng environment" ar e established.

(7-1-5) Security Typi ng of Statements

The following function associates a security type to a given statement s in Lyee requirement ε:

```
SecTypeOfStat((Id, Exp, Cond, io, τ, τ_sec):  statement,
                                    ε: List of statements)
    Begin
        If(io = IF) or (io = IS) and (τ_sec = "")
        Then print ErrMsg
            return 0
        Else If(SecTypeOfExp(Exp) ⊑_S τ_sec) and (io ≠ OS) and (io ≠ OF)
            Then return (Id, Exp, Cond, io, τ, τ_sec)
            EndIf
            If(SecTypeOfExp(Exp) ⊑_S τ_sec ≠ secret) and ((io = OS)
                                    or (io ≠ OF))
            Then return (Id, Exp, Cond, io, τ, τ_sec)
            Else return ErrMsg
            EndIf
        EndIf
    End
```

The above f unct i on Sec Typ Of St at ( ( I d, Exp, Cond, i o, T, $T_{sec}$), ε) has t he following meaning. The function arguments (Id, Exp, Cond, i o, T, $T_{sec}$) ar e values of items constituting any given statement bel ongi ng t o Lyee requirement ε (Id=i dentifier of word, Exp=definition expression, Cond=definition expression execution conditions, i o=i nput / out put at t r i but es, T=t ype of val ue of wor d, and $T_{sec}$=type i ndi cat i ng security level of word).

```
<Begin>

    <start of If sentence> If io=IF or io=IS is set and T_sec

    is empty [that is, input/output attributes io are inputs

    but information on a security type is not supplied],

    print ErrMsg, and return "0" [as the security type

    cannot be determined, print an error message, and return

    0]

    If not,

        <Start of If sentence> if SecTypeOfExp(Exp) ⊑ s T_sec[ a

        security type of a statement is higher than a security

        type of a definition expression] and  oi ≠OS and oi ≠OF

        [io is not an output, i.e., it is an input] are

        established, return (Id, Exp, Cond, io, T, T_sec).

        <End of If processing>

        <Start of If sentence> If SecTypeOfExp(Exp) ⊑ s T_sec ≠

        secret [a security type (not secret) of a statement is

        higher than a security type of a definition

        expression], and oi = OS and oi ≠ OF [io is an output

        to a screen or an output to a file] are established,

        return (Id, Exp, Cond, io, T, T_sec).

        If not, return ErrMsg (error message).



        <End of If processing>
    <End of If processing>
    <End>
```

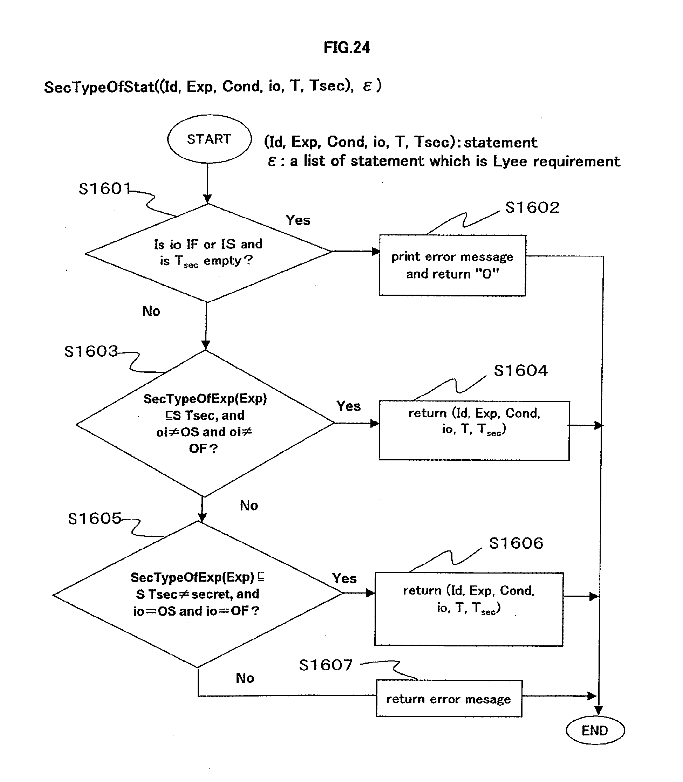

FIG. 24 is a flowchart showing the function Sec Type Of Stat ( ( Id, Exp, Cond, io, T, $T_{sec}$), ε). FIG. 24 will be described in sequel. First, determination is made as to "whether an io item of a statement is IF [ an input to a file] or IS [ an input to a screen] , and an item T is empty [there is no type information] or not " ( step 1601). If the result of the determination is true, the process proceeds to step 1602 to print an error message ( ErrMsg) and to return "0" , thereby finishing the processing.

If the result of the determination is false, the process proceeds to step 1503 to determine "whether SecTypeCfExp(Exp) ⊑ s$T_{sec}$[the security type of the statement is higher than the secur ity type of the definition

equation] , and Oi #OS and oi #OF [ i o i s not an out put , i.e., i t i s an input] ar e est abl i shed or not " . I f t he r esul t of t he det er ni nat i on i s true, i n st ep 1504, ( I d, Exp, Cond, i o, T, $T_{sec}$) i s r et ur ned t o f i ni sh t he processing.

I f t he r esul t of t he det er ni nat i on of t he st ep 1503 i s f al se, t he pr ocess pr oceeds t o st ep 1505 t o det er ni ne "whet her SecTypeOf Exp( Exp) $\sqsubseteq$ s $T_{sec}$ #secr et [ the security type ( not secrete) of t he st at ement i s hi gher t han t he security t ype of t he definition expr essi on] , and i o=OS or i o≠OF [i o i s an out put t o a screen or an out put t o a file] are established or not ". If t he result is t r ue, in st ep 1506, val ues of ( I d, Exp, Cond, i o, T, $T_{sec}$) ar e returned to finish the processing.

If the r esul t of t he st ep 1505 is false, an error message (Erring) is r et ur ned ( st ep 1507) t o f i ni sh t he processing.

Formally put, t he t ypi ng rule associ at ed to this function is as follows.

$$(Stat_1) \quad \frac{\mathcal{E} \vdash Exp : \tau_{S_1} \quad io \neq IS \quad io \neq IF}{\mathcal{E} \vdash (Id, Exp, Cond, io, \tau, "") : (Id, Exp, Cond, io, \tau, \tau_{S_1})}$$

$$(Stat_2) \quad \frac{\mathcal{E} \vdash Exp : \tau_{S_1} \quad \tau_{S_1} \sqsubseteq_S \tau_{sec} \quad io \neq IS \quad io \neq IF}{\mathcal{E} \vdash (Id, Exp, Cond, io, \tau, \tau_{sec}) : (Id, Exp, Cond, io, \tau, \tau_{S_1})}$$

That i s, t he above formal descr i pt i on has t he following meaning.

(Stat$_1$) in case of generating security type information in which out put word i s omitted:

When pr econdi t i ons " a t ype of a defi ni t i on expr essi on Exp i n which a statement list ε bei ng Lyee requirements i s set as a secur i t y t ypi ng environment i s Ts$_1$, and statement input/out put attributes ar e not inputs (io≠IS and io#IF)" ar e est abl i shed, a type of a statement (Id, Exp, Cond, i o, T, " ") i n which a statement list ε of Lyee requirement s i s set as a secur i t y t ypi ng environment i s (Id, Exp, Cond, i o, T, Ts$_1$).

(Stat$_2$) i n case of checki ng and cor r ect i ng security t ype information of out put wor d:

When preconditions "a type of a definition expression Exp i n which a statement list ε bei ng Lyee requirements i s set as a security t ypi ng environment i s Ts$_1$, t he Ts$_1$ i s hi gher than a value $T_{sec}$ of a security type of a statement (Ts$_1$ $\sqsubseteq$ s $T_{sec}$), and i nput / out put at t r i but es ar e not inputs (i o≠I S and i o≠I F)" ar e est abl ished, a t ype of a st at ement ( I d, Exp, Cond, i o, T, $T_{sec}$) i n which a statement list ε bei ng Lyee requirement s i s set as a secur i t y t ypi ng environment i s ( I d, Exp, Cond, i o, T, Ts$_1$).

(7-1-6) Security Typi ng of Lyee Requirement s

Given an or der ed statement list ε, t hen a security type can be associ at ed t o each of its statements by t he following function:

$$\text{SecTypeOfLyee}(<s_1, \ldots, s_n>: \text{list of statements})$$
$$\text{Var } \mathcal{E}_0: \text{list of statements}$$
$$\text{Begin}$$
$$\mathcal{E}_0 \leftarrow <s_1, \ldots, s_n>$$
$$\text{For } i=1 \text{ to } n$$
$$\left| \begin{array}{l} s'_i \leftarrow \text{SecTypeOfStat}(s_i, \mathcal{E}_{i-1}) \\ \mathcal{E}_i \leftarrow \mathcal{E}_{i-1} \\ \text{replace the } i^{th} \text{ element of } \mathcal{E}_i \text{ by } s'_i \end{array} \right.$$
$$\text{EndFor}$$
$$\text{return } \mathcal{E}_n$$
$$\text{End}$$

The above function SecType Of Lyee( $<s_1, \ldots, s_n>$) has the following meaning. A function argument $<S_1, \ldots, S_n>$ i s a list of any gi ven statements. A value of a variable $\varepsilon_0$ is a statement list.

```
<Begi n>

Recor d a st at ement l i st <s₁, ···, sₙ> i n ε₀.

When i takes 1 to n, the f ol l owi ng i s execut ed.

    Recor d a val ue of SecTypeOf St at ( sᵢ, εᵢ₋₁) i n s'ᵢ


    Record a val ue of εᵢ₋₁ i n εᵢ

    Repl ace i - t h el ement of εᵢ wi t h s'ᵢ.

<End of For pr ocessi ng>

Ret ur n εₙ

<End>
```

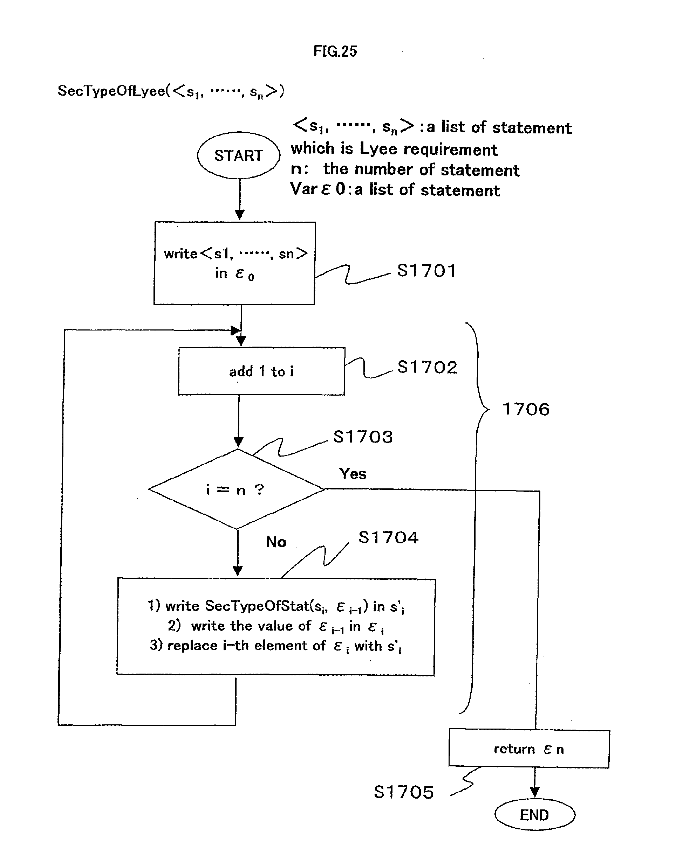

FIG. 25 i s a flowchart of t he function SecType Of Lyee( $<s_1, \ldots, s_n>$) . FIG. 25 Will be descr i bed in sequel . Fi r st , t he statement list $<s_1, \ldots, s_n>$ i s recorded i n an ar ea of t he var i abl e $\varepsilon_0$ (step 1701). Next , 1 i s added to i (step 1702). The process proceeds to st ep 1703. I n t he st ep 1403, determination i s made as to "whether a value of i i s n or not " . If t he result is false, a result t of SecType Of Stat($s_i$, $\varepsilon_{i-1}$) is recorded in s' $_i$ , a resul of $\varepsilon_{i-1}$ is recorded in $\varepsilon_i$ , and i - t h element of $\varepsilon_i$ is replaced by s'$_i$ (step 1704). Af t er an end of t he st ep 1704, t he pr ocess r et ur ns t o the st ep 1702 t o execut e agai n. As long as the result of t he st ep 1403 i s false, restart processing (1706) of t he st eps 1702 to 1704 is repeated.

When t he r esul t of t he st ep 1703 becomes t r ue, i n st ep 1705, a val ue of $\varepsilon_n$ i s returned to finish the pr ocessi ng. In t hi s case, t he val ue of $\varepsilon_n$ is $<s'_1, \cdots, s'_n>$.

For mally put , t he security t ypi ng r ul e associ at ed to the above function is as follows.

$$\frac{\mathcal{E} \vdash s_1 : s_1' \qquad \mathcal{E} \dagger [s_1 \leftarrow s_1'] \vdash < s_2, \ldots, s_n >: < s_2', \ldots, s_n' >}{\mathcal{E} \vdash < s_1, \ldots, s_n >: < s_1', \ldots, s_n' >}$$

The rule i ndi cat ed by t he above formalizing descr i pt i on st at es t hat "when pr econdi t ions' a secur i t y t ype of a statement $s_1$ i n which a st at ement list $\varepsilon$ bei ng Lyee requirements i s set as a secur i t y t ypi ng environment is s' $_1$, and a security t ype of statements <$s_2$, ···, s' $_n$> i n which a statement list $\varepsilon$ is set as a security t ypi ng environment after $s_1$ is substituted wi t h s' $_1$ is <s'$_2$, ···, s' $_n$>' ar e est abl i shed, a security type of the st at ement list <$s_1$, ..., $s_n$> in which t he statement list $\varepsilon$ bei ng Lyee r equi r ement s i s set as a security t ypi ng environment i s <s'$_1$, ..., s'$_n$>".

$$(Cst) \qquad \frac{\square}{\mathcal{E} \vdash c : SecTypeOfCst(c)} \qquad (Wrd) \qquad \frac{\square}{\mathcal{E} \vdash w : SecTypeOfWrd(w, \mathcal{E})}$$

$$(Exp_P) \qquad \frac{\mathcal{E} \vdash Exp : \tau_S}{\mathcal{E} \vdash (Exp) : \tau_S}$$

$$(Exp_U) \qquad \frac{\mathcal{E} \vdash Exp : \tau_S}{\mathcal{E} \vdash Op\ Exp : \tau_S}$$

$$(Exp_B) \qquad \frac{\mathcal{E} \vdash Exp_1 : \tau_{S_1} \qquad \mathcal{E} \vdash Exp_2 : \tau_{S_2}}{\mathcal{E} \vdash Exp_1\ Op\ Exp_2 : SecSup(\tau_{S_1}, \tau_{S_2})}$$

$$(Stat_1) \qquad \frac{\mathcal{E} \vdash Exp : \tau_{S_1} \qquad io \neq IS \qquad io \neq IF}{\mathcal{E} \vdash (Id, Exp, Cond, io, \tau, "") : (Id, Exp, Cond, io, \tau, \tau_{S_1})}$$

$$(Stat_2) \qquad \frac{\mathcal{E} \vdash Exp : \tau_{S_1} \qquad \tau_{S_1} \sqsubseteq_S \tau_{sec} \qquad io \neq IS \qquad io \neq IF}{\mathcal{E} \vdash (Id, Exp, Cond, io, \tau, \tau_{sec}) : (Id, Exp, Cond, io, \tau, \tau_{S_1})}$$

$$(Req) \qquad \frac{\mathcal{E} \vdash s_1 : s_1' \qquad \mathcal{E} \dagger [s_1 \leftarrow s_1'] \vdash < s_2, \ldots, s_n >: < s_2', \ldots, s_n' >}{\mathcal{E} \vdash < s_1, \ldots, s_n >: < s_1', \ldots, s_n' >}$$

Fi nall y, t he complete secur i t y t ype syst em associ at ed t o an or der ed Lyee requirement i s as follows:

( Cst ) Security t ype when an expr essi on i s a const ant :

A t ype of a const ant c i n which a statement list $\varepsilon$ bei ng Lyee requirement i s set as a secur i t y t ypi ng environment i s a value returned by t he function SecTypeOf Cst (C) without any preconditions.

(Wd) Security t ype when an expressi on i s a word:

A t ype of a word w i n whi ch a statement list $\varepsilon$ bei ng Lyee requirement i s set as a secur i t y t ypi ng environment

is a value returned by the function SecTypeOfWd($w$, $\varepsilon$) without any preconditions.

(ExpP) Security type when an expression is a bracketed expression:

A type of an expression (Exp) in which a statement list $\varepsilon$ being Lyee requirement is set as a security typing environment is Ts when a precondition "a type of an expression (Exp) in which a statement list $\varepsilon$ being Lyee requirement is set as a security typing environment is Ts" is established.

(Expu) Security type when an expression is "op Exp":

A type of an expression "op Exp" (operator, expression) in which a statement list $\varepsilon$ being Lyee requirement is set as a security typing environment is Ts when a precondition "a type of an Exp (expression) in which a statement list $\varepsilon$ being Lyee requirement is set as a security typing environment is Ts" is established.

(ExpB) Security type when an expression is "Exp op Exp":

A type of an expression "$Exp_1$ op $Exp_2$" in which a statement list $\varepsilon$ being Lyee requirement is set as a security typing environment is $Sup(TS_1, TS_2)$, when preconditions "a type of an expression $Exp_1$ is $Ts_1$, and a type of an expression $Exp_2$ is $Ts_2$ in which a statement list $\varepsilon$ being Lyee requirement is set as a security typing environment" are established. ($Stat_1$) in case of generating security type information in which output word is omitted:

When preconditions "a type of a definition expression Exp in which a statement list $\varepsilon$ being Lyee requirement is set as a security typing environment is $Ts_1$, and statement input / output attributes are not inputs (io$\neq$IS and io $\neq$ IF)" are established, a type of a statement (Id, Exp, Cond, io, T, " ") in which a statement list $\varepsilon$ being Lyee requirement is set as a security typing environment is (Id, Exp, Cond, io, T, $Ts_1$).

($Stat_2$) in case of checking and correcting security type information of output word:

When preconditions "a type of a definition expression Exp in which a statement list $\varepsilon$ being Lyee requirement is set as a security typing environment is $Ts_1$, the $Ts_1$ is higher than a value $T_{sec}$ of a security type of a statement ($Ts_1 \sqsubseteq_s T_{sec}$), and input / output attributes are not inputs (io$\neq$IS and io$\neq$IF)" are established, a type of a statement (Id, Exp, Cond, io, T, $T_{sec}$) in which a statement list $\varepsilon$ being Lyee requirement is set as a security typing environment is (Id, Exp, Cond, io, T, $Ts_1$) .

(Req) Security type of ordered Lyee requirements:

When preconditions "a security type of a statements, in which a statement list $\varepsilon$ being Lyee requirements is set as a security typing environment is $s'_1$, and a security type of $<s_2, \cdots, s'_n>$ in which the statement list $\varepsilon$ is set as a security typing environment after $s_1$ is substituted with $s'_1$ is $<s'_2, \cdots, s'_n>$" are established, a security type of the statement list $<s_1, \cdots, s_n>$ in which the statement list $\varepsilon$ being Lyee requirements is set as a security typing environment is $<s'_1, \cdots, s'_n>$.

(7-2) Case Study

When security typing is executed for the aforementioned Lyee requirements given in Table 31, the following errors are detected:

· Error in Statement c: A type of the word c is public, however, as its definition expression contains secret words (word "a" of definition expression "a=6" is secret) and gets effected by the secret word, it is contradictory.
· Error in Statement b: A type of the word b is public, however, as its definition expression indirectly contains secret words (word "a" of definition expression "a=6" of word "c" of definition expression "c" is secret) and gets effected by the secret word, it is contradictory.
· Error in Statement d: A type of the word d is public, however, as its definition expression contains secret words (word "a" of definition expression "a+6" is secret) and gets effected by the secret word, it is contradictory.
· Error in Statement g: A type of the word g is public, however, as its definition expression indirectly contains secret words (word "a" of definition expression "a+6" of word "d" of definition expression "d=9" is secret)

and get s effected by the secret word, it is contradictory.

· Error in Statement f : A type of the word f is secret, however , as it is one of out puts, it is contradictory ( because of a policy not t o out put a val ue whose secur i t y type i s secret).

· Er r or i n Statement h: A t ype of the wor d his public, however , as its definition expr essi on i ndi r ect l y cont ai ns secret words (definition expr essi on of word " f " of definition expr essi on " f " is "g" , definition expr essi on of word "g" i s " d=9" , and a def i ni t i on expr essi on of word "d" i s " a+6" , and word" a" i s secret ) and get s ef f ect ed by t he secret word, i t i s cont r adi ct or y.

8. Lyee Requirement Anal yzer

The Lyee Requirement Anal yzer i s a pr ot ot ype t hat we have devel oped t o partly implement st at canal ysi s techniques pr evi ousl y di scussed. It takes as i nput Lyee requirement s and can gi ve as out put sl i ces and or der ed requirement s suitable for t he gener at i on of optimized code by t he LyeeAll t ool . Besi des, it can per for m ot her requirement opt i m zat i ons such as const ant pr opagat i on. As shown i n Fi g. 26, t he basi c component s of t hi s pr ot ot ype ar e t he followings:

- Lexi cal and Synt act i c Anal yzer s: Thi s par t t akes as input Lyee requirements and gi ves as out put a synt act i c t r ee commonly cal l ed i ntermediate represent at i on. Thi s new r epr esent at i on method of r equi rements i s t he st ar t i ng poi nt of all t he static analysis t echni ques t hat we ar e willing to do. Further more, when par si ng the Lyee requirement s, l exi cal or synt act i c er r or can be det ect ed and communicat ed t o the user.
- Flow- Based Anal yzer : Starting f or m t he intermediate r epr esent at i on gener at ed by t he pr evi ous par t , t he flow-based anal ysi s corrponent gener at es all information r el at ed t o the circulation of dat a flow cont r ol from one requirement poi nt t o another. The r esul t s of t hese anal ysi s consi st of Cont r ol Fl ow Gr aph (CFG and Dat a-Flow Graph (DFG).
- Optimizer : Amongst ot her s, t hi s component implements t he const ant propagation t echni ques and generates an properly or der ed and simplified sequence of statement s suitable for t he LyeeAl l tool to produce a program t hat can run faster and consume less memory.
- Slicer : This component t akes as i nput f l ow r el at ed information (such as t he Def / Use associ at ed t o each word) generated by t he Flow Based Anal ysi s component and slicing evaluation cr i t er i on, and gi ves as out put sl i ces that correspond to these gi ven eval uat i on cr i t er i on.

9. Concl usi on and Future Works

We have r epor t ed i n t hi s descr i pt i on t he use of static analysis t echni ques on t he Lyee r equi rement s and t hei r i impact i nfl uences. Fi r st , we have pr esent ed how cl assi cal opt i mizat i on t echni ques such as const ant pr opagat i on and pat t er n det ect i on can i mprove t he execut i on time of t he Lyee programs. We have al so shown how t o di scover error s i n r equi r ements ( dead definition, cycl i c definition, incomplete or super f l uous defi ni t i ons). Second, we have di scussed how slicing t echni ques can improve the under st andi ng and t he maint enance of Lyee syst ems. On t op of t hat , we have shown how t o find out independent par t of Lyee syst ems t hat can be execut ed i n par al l el , by usi ng t hi s sl i ci ng t echni ques. Thi r d, we have pr oposed a t ype system allowing bot h t he detection of t ypi ng er r or s and t he automatic gener at i on of t ypes of the intermediat e and out put words. Four t h, we have illustrated how Lyee met hodol ogy i s sui t abl e for some ext ensi on such as security aspect s. Some of the pr esent ed static analysis t echni ques ar e now i mpl errent ed i n a pr ot ot ype cal l ed Lyee Requi r ement Analyzer.

As a future wor k, we want first to complete the Lyee Requirement Anal yzer t ool and mor e i nvest i gat e on t he ot her st at i c and dynamic analysis t echni ques t o i rrpr ove some ot her aspect s of Lyee met hodol ogy.

10.

As descr i bed above i n detail, accor di ng t o the static analysis method of t he embodiment of t he pr esent i nvent i on, since t he st at i c anal ysi s met hod i s used for t he Lyee requirements, t he Lyee requirements and t he code st r i ng gener at ed by Lyee can bot h be improved i n t er ms of quality, wher eby allowing t o gener at e codes bet t er of bet t er quality (less consumption of memory and shorter execut i on t i me) t han t he convent i onal Lyee met hodol ogy.

( 7) As devel oped f or ms, by usi ng t he af or ement i oned st at i c anal ysi s met hod or st at i c anal yzer f or t he Lyee r equi r ements (request definition), more i rrpr oved Lyee requirement s can be obt ai ned. These are input by t he method descr i bed above i n t he " Over vi ew of Lyee invention", or t he Lyee soft war e gener at i on method descr i bed i n t he Pat ent Document s 1, 2 and 4 t o 6, f ur t her t o the software gener at or descr i bed i n t he Pat ent Document 3. Thus, it is possi bl e t o realize a method or a devi ce f or gener at i ng desi r ed sof t war e by Lyee with smaller memory space and shorter processing time.

That is, if efficiency is realized at the stage of the Lyee requirements (request definition) which is an upper stage of the software generation by Lyee, by applying the existing Lyee methodology to the processing thereafter, it is possible to obtain software which is a much higher quality end product.

The method or the device in the stage after the Lyee requirements (request definition) are obtained are to be according to the contents described above in the "Overview of the Lyee invention" or the methods described in the Patent Documents 1 to 6, and thus detailed description thereof will be omitted here.

According to the present invention, by using the classical static analyzing technique, the Lyee methodology can be enhanced more.

According to the static analyzer concerning the Lyee-oriented software of the present invention, the Lyee requirements are received, and slices suited for optimal code generation by the LyeeAll tool and the ordered requirements can be provided as outputs. Besides, it is possible to execute other requirement optimizations such as constant propagation.

Many features and advantages of the present invention are apparent from the detailed description. Moreover, as those who have usual knowledge in the technical field can easily make many modifications and changes, it is not desirable to limit the present invention to configurations or operations not even slightly different from the shown and described configurations or operations. Thus, all proper changes and equivalents can be within the scope of the present invention. The present invention has been described in detail by way of embodiments and examples. However, many modifications, substitutions, and changes can be made to the present invention without departing from the scope of the invention defined not only in the appended claims but also in all the disclosed items of the present invention.

Application of the present invention is not limited to the detailed understanding of elrrents or combination thereof disclosed in the foregoing description or the figures. The present invention can be implemented by other embodiments and can be put into practical use by various methods. The phrases and the terms used in the description are only descriptive but not limitative.

Thus, those who have usual knowledge in the technical field can understand that the basic concept of the disclosure can be easily used as a basis for designing other structures, methods, and systems to carry out some purposes of the invention. Accordingly, such equivalent understanding can be within the scope of the claims without departing from the spirit and scope of the present invention.

The software static analysis method and the static analyzer based on Lyee methodology have mainly been described above. Needless to say, the technical idea of the present invention can be realized and used as, e. g. , an automatic development device of computer software; an automatic development program a recording medium a transmission medium or a paper medium on which the automatic development program is recorded; or in a category of a computer device in which the automatic development program is installed; or a client / server form for executing the automatic development program etc.

Not limited to the computer system that comprises a single processor, a single hard disk drive, and a signal local memory, the present invention is suited when a plurality of or a combination of optional processors or memory devices are installed as options of the system The computer system includes a sophisticated computer, a palmtop type computer, a laptop/ notebook corrputer, a mini computer, a mainframe computer, a super computer, and a processing system network combination of these. The computer system can be replaced by an optional proper processing system operated in accordance with a principle of the present invention, and can be used in combination therwith.

The technical idea of the present invention can be applied to all kinds of programming languages. Additionally, the technical idea of the present invention can be applied to application software of all kinds and functions.

Furthermore, the present invention permits various changes, additions, substitutions, enlargement, reduction and the like within the scope of identical configurations and equivalents thereof of the technical idea. Even when software produced by using the present invention is mounted on a secondary product to be commercialized, a value of the invention is not reduced.

Industrial Applicability

According to the present invention, as the static analysis method is used for Lyee requirements, the Lyee requirements and the code string generated by Lyee can both be improved in quality. Thus, by enabling generation of codes having better quality (less consumption of memory and shorter execution time) than the conventional Lyee methodology, great effects can be provided in a software industry, such as great increases in efficiency, productivity, quality and the like of software production,

**Claims**

1. A static analysis method regarding Lyee-oriented software, **characterized by** comprising:

    a step of obtaining a requirement definition including a definition expression of each word to produce software in accordance with Lyee methodology;
    a step of using the word as a key to detect a constant of the obtained requirement definition; and
    a step of propagating the constant in accordance with the definition expression which uses the detected constant.

2. A static analysis method regarding Lyee-oriented software, **characterized by** comprising:

    a step of obtaining a requirement definition including a definition expression of each word to produce software in accordance with Lyee methodology;
    a step of detecting a pattern from the definition expression of the obtained requirement definition; and
    a step of substituting the requirement definition with representation in which the detected pattern is a substitution expression.

3. A static analysis method regarding Lyee-oriented software, **characterized by** comprising:

    a step of obtaining a requirement definition including a definition expression and preconditions of each word to produce software in accordance with Lyee methodology;
    a step of obtaining a statement in which at least an identifier, the definition expression and the preconditions of the word are described in conformity with BNF grammar based on the requirement definition;
    a step of defining a Def/Use function for each obtained statement; and
    a step of obtaining an order relation among the statements from an order relation among the defined Def/use functions.

4. A static analysis method regarding Lyee-oriented software, **characterized by** comprising:

    a step of obtaining a requirement definition including a definition expression and input/output attributes of each word to produce software in accordance with Lyee methodology;
    a step of obtaining a statement in which at least an identifier, the definition expression and the input/output attributes of the word are described based on the requirement definition;
    a step of deriving, from the obtained statement (first statement), another statement (second statement) which contributes to definition of the word of the first statement to execute a slicing function which sets the first and second statements in the same statement group for all the statements; and
    a step of obtaining slices independent of each other from the slicing function.

5. A static analysis method regarding Lyee-oriented software, **characterized by** comprising:

    a step of obtaining a requirement definition including a definition expression and input/output attributes of each word to produce software in accordance with Lyee methodology;
    a step of obtaining a statement in which at least an identifier, the definition expression and the input/output attributes of the word are described based on the requirement definition; and
    a step of detecting a bug in the requirement definition based on predetermined analysis for the obtained statement.

6. The static analysis method regarding the Lyee-oriented software according to claim 5, **characterized in that** the predetermined analysis on the statement is executed by specifying at least one of an inactive statement, a cyclic statement, an incomplete statement and an additional statement.

7. A static analysis method regarding Lyee-oriented software, **characterized by** comprising:

    a step of obtaining a requirement definition including a definition expression and input/output attributes of each word to produce software in accordance with Lyee methodology;
    a step of obtaining a statement in which at least an identifier, the definition expression and the input/output attributes of the word are described based on the requirement definition;
    a step of defining type algebras for the obtained statement, an operator and data in the statement; and

a step of discovering a type error in the requirement definition by using an environment and predetermined type rules correlated to the defined type algebras.

**8.** A static analysis method regarding Lyee-oriented software, **characterized by** comprising:

a step of obtaining a requirement definition including a definition expression and input/output attributes of each word to produce software in accordance with Lyee methodology;

a step of obtaining a statement in which at least an identifier, the definition expression and the input/output attributes of the word are described based on the requirement definition;

a step of defining type algebras for the obtained statement, an operator and data in the statement; and

a step of generating types of an intermediate article and an output word from an input word in the requirement definition by using a predetermined environment and type rules based on the defined type algebras.

**9.** A static analysis method regarding Lyee-oriented software, **characterized by** comprising:

a step of obtaining a requirement definition including a definition expression and input/output attributes of each word to produce software in accordance with Lyee methodology;

a step of obtaining a statement in which at least an identifier, the definition expression, the input/output attributes and a security label of the word are described based on the requirement definition;

a step of defining a label function which correlates the security label to a value of the word by using a lattice showing a relation between security labels in the obtained statement; and

a step of determining a program which does not comply with a specific security policy by using a predetermined security policy based on the defined label function.

Fig.1

repeat until a fixed
point is reached

if (b*e)>2
then a:=b+c; output(a);
endif
input(c);
if c>0
then b:=2*c+5; output(b);
endif
input(e);

Fig.2

Global fixed point

Partial fixed point

if a_cond
then a:=b+c;
endif

if b_cond
then b:=2*c+5;
endif

output(a);
output(b);

Partial fixed point

input(e);
input(c);

Partial fixed point

a_cond := (b*e>2)
b_cond:=(c>0)

Global fixed point

Global fixed point

Computation and output

W04

Input

W02

Conditions

W03

Fig.3

Fig.4

Fig.5

Fig.6

Fig.7

Fig.8

Fig. 9

UseDirectAndIndirect(s, S)

s : statement
S : set of statements
Var W_Old : set of words
Var W_New : set of words

START

S101　write result of Use(s) in the area of W_Old

S102　copy the value of W_Old to the area of W_New

S103　write "false" in the area of Fix_Point

S104　Is the value of Fix_Point "false"?　　No

Yes

S105　Is there any Word "a" that has not been executed in {Use(S) ∩ Word(S)} ?　　No

Yes

S106　Write the value of W_New and Use(Statement(a, S)) to the area of W_New

111

S107　Is the value of W_New equal to the value of W_Old?

No　　Yes

S108　copy the value of W_New to the area of W_Old

S109　write "true" in the area of Fix_Point

112

return the value of W_New as the final result

S110

END

79

Fig.10

CyclicStatement(S)

START

S : set of statements
Var CyclicSet : set of statements

write "0" in the area of CyclicSet  ⟋ S201

Is there any statement "s" that has not been executed in S ?  ⟋ S202

No

Yes

Does Def(s) belong to UseDirectAndIndirect(s) ?  ⟋ S203

No

Yes

Write the value of CyclicSet and the statement "s" to the area of CyclicSet  ⟋ S204

206

return the value of CyclicSet as the final result  ⟋ S205

END

## FIG.11

IncompleteStatements(S)

START

write "0" to IncompleteSet
write "0" to X
write "0" to q ⟶ S301

S: a set of statements which are requirements
Var IncompleteSet: a set of statements

S302

311

Is there a
statement "s" in
"S" that has not
been executed? — No

Yes — S303

write the value of X and that of
UseDirectAndIndirect (s,S) in X

S304

write Defined(S) in Y, X∩Y in Z,
and X−Z in W

S305

310

Is there a word "a" in
S which has not been
executed ? — No

Yes — S306

IO(Statement(a, S))≠IS
or IF and Use
(Statement(a, S))={ }? — No

Yes — S307

write the value of "q" and "a" in q.

return the value of IncompleteSet ⟵ write Z∩q in Q, write the
statement of the word in
{W∪Q} to IncompleteSet

END — S309

S308

## FIG.12

OutputStatements(S)

START

S: a set of statements
Var OutputSet: a set of statements

S401 — write "o" to OutputSet

S402

Is there a statement "s" in S which has not been executed ?

No

Yes

S403

Is IO of statement "S" OS or OF ?

No

Yes

406

S404 — write the value of OutputSet and statement "s" in OutputSet

return the value of OutputSet as a final result

S405

END

FIG.13

SuperfluousStatements(S)

START

S: set of statements
Var SuperfluousSatSet: set of statements
Var ImportantSatSet: set of statements
Var OutputSatSet: set of statements

S501
1) write the result of OutputStatements(S) to the area of OutputStatSet
2) write "0" to the area of ImportantStatSet

S502
Is there any statement "s" that has not been executed in "OutputStatSet"?

No

Yes

S503
Is there any word "a" that has not been executed in UseDirectAndIndirect(s,S) ?

No

Yes

S504
write the following values in the area of ImportantStatSet:

1) the value of ImportantStatSet
2) the result of Statement(a, S)

S505
write the following value to the area of SuperfluousSet:
S – ImportantStatSet

508

507

S506
return the value of SuperfluousSet as the final result

END

## FIG. 14

Lower(s, s')

S: sequence of statements
(requirements) which are
not an empty set
Var s: a statement
s': a statement

```
                    START

S601

              Does Def(s)              No
              belong to
              Use(s')?

                 Yes

              S602                      S603

         return "true"            return "false"

                    END
```

FIG.15

Min(S)

START

S: sequence of satatements
(requirements) which are
not an empty set
Var s: a statement
s': a statement

write the result of
First(S)in s — S701

Is there a statement
"s" in "S-s" which
has not been
executed ? — S702

No

Yes

Is Lower(s', s)
true ? — S703

No

Yes

write the statement "s" in s — S704

706

return the value of
variable "s" — S705

END

FIG.16

StatementOrdering(S)

START

S: sequence of statements, which are requirements
S': sequence of statements of the result of Remove(S, min)
S": sequence of statements of the result of Statement Ordering (S')
S"': sequence of statements of the result of AddFirst(min, S")
Var min: a statement

S801

S = 0 ?                    Yes

No

S802

write the result of Min(S) in "min"

S803

Execute function Remove(S, min)

S804

No
          Is S' a fixed value?
          *S'= Remove(S,
          min)

811

Yes        S805

Execute function
StatementOrdering(S')

S806

No
          Is S" a fixed value?
          *S" =
          StatementOrdering(S')

812

Yes      S807

Execute function AddFirst(min, S")

S808

No
          Is S"' a fixed value ?
          *S"' = AddFirst(min,
          S")

Yes

S809

return S"'

S810

return empyt value

END

86

FIG. 17

Slice(a, S)

a : word
S: set of statements which are requirements
Var slice_s : set of statements
Var s : a statement

START

1) write the result of function
Statement(a, S) in s
2) write the value of "s" in slice_s    S901

S902

Is there a word "b" that
has not been executed in
a function UseDirect-
AndIndirect(s, S) ?

No

906

Yes    S903

write the value of "slice_s" and
result of a function Statement
(b, S) in slice_s

S904

return the value of
slice_s

END

## FIG.18

**AllOutputSlices(S)**

START

S: a set of statements which are requirements
Var sliceSet: a set of slices

S1001
write "o" in sliceSet

S1002
Is there a statement "s" that has not been executed in a function OutputStatement(S)?

No → 1005

Yes

S1003
write the value of "sliceSet" and the result of a function Slice (Word(s),S) in sliceSet

S1004
return the value of sliceSet

END

Fig.19

IndependentSetOfSlice(S)

START

S: set of statements, which are requirements
Var sliceMultiSet : set of set of slices
Var sliceSet : set of slices
Var OutputWords : set of words
Var NotTreatedWords : set of words

1) write "0" to "SliceMultiSet"
2) write all of the output words in S to the area of "OutputWords"

S1101

S1102

Is there any word "a" that has not been executed in "OutputWords"?

No

Yes

1) write the result of function Slice(a, S) to "SliceSet"

2) write {OutputWords – a } to "OutputWords"

3) write the value of OutputWords to "NotTreatedWords"

S1103

S1104

Is there any word "b" that has not been executed in "NotTreated Words"?

No

Yes

S1105

(1) and (2) do not have any common element?
(1) UseDirectAnd Iindirect(Slice(b, S)) Ub
(2) UseDirectAnd Iindirect(Slice(a, S)) Ua

No

Yes

1) write the value of "SliceSet" and the word "b" to "SliceSet"
2) write {NotTreatedWords–b } to "NotTreatedWords "

S1106

S1107

write the value of "SliceSet" to "SliceMultiSet"

1110

S1108

return the value of "SliceMultiSet"

END

Fig.20

TypeOfExp(e, $\varepsilon$)

e: expression
$\varepsilon$ : List of statements

```
                    START

S1201
        Is the
        expression "e" a       Yes    S1202
        constant ?            ───────▶  return the value of TypeOf(c)
                                        * "c" is a constant
          │ No

S1203
        Is the
        expression "e" a       Yes    S1204
        word ?                ───────▶  return the value of TypeOfWord(w)
                                        * "w" is a word.
          │ No

S1205
        Is "e" an
        expression of          Yes    S1206
        type "e1"?            ───────▶  return the value of TypeOfExp($e_1$, $\varepsilon$)
                                        * "$e_1$" is a expression belonging to $\varepsilon$.
          │ No

S1207
        Is "e" an
        expression of type     Yes    S1208
        "op e1" ?            ───────▶  1) write the value of TypeOfOp(op) to $T_1$ and $T_2$.
                                        2) write the value of TypeOfExp($e_1$, $\varepsilon$) to $T'_1$.
          │ No
                                        S1209                      S1210
                                        $T'_1 \subseteq T_1$ ?  Yes  return the value of T'
                                          │ No                    S1211
                                        print error message, and return
                                        "TypErr"

S1212
        Is "e" an expression of  Yes   S1213
        type                  ───────▶  1) write the value of TypeOfOp(op) to the areas of $T_1$, $T_2$ and $T_3$.
        "e2 op e1"?                      2) write the value of TypeOfExp($e_1$, $\varepsilon$) to the area of $T'_1$.
          │ No                           3) write TypeOfExp($e_2$, $\varepsilon$) to the area of $T'_2$.

                              S1214                  S1215              S1216
                              $T'_1 \subseteq T_1$    $T_3 \neq bool$?  Yes  return the value
                              and            Yes                            of Sup($T'_1$, $T'_2$)
                              $T'_2 \subseteq T_2$  ───────▶               │ No
                                │ No                                     return bool
                                                                         value
                                                                         S1217
                                        S1218
                                        print error message and
                                        return "TypeErr"

                                                                         END
```

## FIG.21

TypeOfStat((Id, Exp, Cond, io, T, Tsec), $\varepsilon$ )

(Id, Exp, Cond, io, T, Tsec): statement
$\varepsilon$ : a list of statement which is Lyee requirement

START

S1301

Is IF or IS
and is T empty ?

Yes → S1302 — print error message and return "o"

No

S1303

TypeOfExp(Exp)!=0
And
TypeOfExp(Cond)
=booll ?

Yes → S1304 — return (Id, Exp, Cond, io, TypeOfExp(Exp), $T_{sec}$)

No

END

FIG.22

TypeOfLyee($<s1, \cdots\cdots, sn>$)

$<s1, \cdots\cdots, sn>$: a list of statement which is Lyee requirement
n: the number of statement
Var $\varepsilon 0$: a list of statement

START

Write $<s_1, \cdots\cdots, s_n>$ in $"\varepsilon_0"$ — S1401

add 1 to $"i"$ — S1402

S1403

$"i" = n$ ? 

No

Yes

1) write TypeOfStat($s_i, \varepsilon_{i-1}$) in $s'_i$
2) write the value of $\varepsilon_{i-1}$ in $\varepsilon_i$
3) replace i-th element of $\varepsilon_i$ with $s'_i$
— S1404

return $\varepsilon_n$ — S1405

END

FIG.23

SecTypeOfExp(e, $\varepsilon$)

e: expression
$\varepsilon$ : a list of statement

START

S1501

Is "e" a
constant ?

Yes → S1502

return the value of
SecTypeOf(c)
* c is a constant

No

S1503

Is "e" a
word ?

Yes → S1504

return the value of
SecTypeOfWord(w)
* w is a word

No

S1505

Is "e" an
expression
of type
"~"?

Yes → S1506

return the value of SecTypeOfExp($e_1$, $\varepsilon$)
* $e_1$ is an expression belonging to $\varepsilon$

No

S1507

Is "e" an
expression of
type "op $e_1$"?

Yes → S1508

return the value of SecTypeOfExp($e_1$)

S1509 No

S1510

Is "e" an
expression of
type "$e_2$ op $e_1$"?

Yes

1) write TypeOfExp($e_1$, $\varepsilon$) in $Ts_1$
2) write TypeOfExp($e_2$, $\varepsilon$) in $Ts_2$
3) return Sup($Ts_1 \subseteq Ts_2$)

No

END

FIG.24

SecTypeOfStat((Id, Exp, Cond, io, T, Tsec), $\varepsilon$ )

START

(Id, Exp, Cond, io, T, Tsec): statement
$\varepsilon$ : a list of statement which is Lyee requirement

S1601

Is io IF or IS and is $T_{sec}$ empty?

Yes → S1602

print error message and return "O"

No

S1603

SecTypeOfExp(Exp) $\subseteq$S Tsec, and oi$\neq$OS and oi$\neq$OF?

Yes → S1604

return (Id, Exp, Cond, io, T, $T_{sec}$)

No

S1605

SecTypeOfExp(Exp) $\subseteq$ S Tsec$\neq$secret, and io=OS and io=OF?

Yes → S1606

return (Id, Exp, Cond, io, T, $T_{sec}$)

No

S1607

return error mesage

END

FIG.25

SecTypeOfLyee($<s_1, \cdots\cdots, s_n>$)

$<s_1, \cdots\cdots, s_n>$ : a list of statement
which is Lyee requirement
n: the number of statement
Var $\varepsilon$ 0 : a list of statement

START

write $<s1, \cdots\cdots, sn>$
in $\varepsilon_0$ — S1701

add 1 to i — S1702

1706

S1703

i = n ?   **Yes**

**No**   S1704

1) write SecTypeOfStat($s_i$, $\varepsilon_{i-1}$) in $s'_i$
2) write the value of $\varepsilon_{i-1}$ in $\varepsilon_i$
3) replace i-th element of $\varepsilon_i$ with $s'_i$

return $\varepsilon$ n

S1705

END

Fig.26

Lyee requirements

Generating the
intermediate
representation

Lexical analyzer

Tokens

Syntactic analyzer

Intermediate
representation

Flow-based
analysis

Control-flow analysis

Control-Flow Graph

Data-flow analysis

Data-Flow Graph

Optimizing the
Lyee requirements

Structured
requirements

Generating flow
informations

DEF/ USE set

Global optimization

Slicing the Lyee
requirements

Suspecious Word

Requirements Slicer

code
fragment

code
fragment

....

code
fragment

Optimized Lyee
requirements

## INTERNATIONAL SEARCH REPORT

| International application No. |
|---|
| PCT/JP03/12284 |

**A. CLASSIFICATION OF SUBJECT MATTER**
Int.Cl⁷ G06F9/44, G06F11/28

According to International Patent Classification (IPC) or to both national classification and IPC

**B. FIELDS SEARCHED**

Minimum documentation searched (classification system followed by classification symbols)
Int.Cl⁷ G06F9/44, G06F11/28

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-5651 A (The Institute of Computer Based Software Methodology and Technology, Information System Development Institute), 12 January, 2001 (12.01.01), Full text; all drawings & WO 00/79385 A1 & EP 1244006 A1 & CA 2414110 A & AU 5427900 A & CN 1376279 T | 1-9 |
| Y | JP 9-6627 A (Matsushita Electric Industrial Co., Ltd.), 10 January, 1997 (10.01.97), Full text; all drawings (Family: none) | 1 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>12 December, 2003 (12.12.03) | Date of mailing of the international search report<br>24 December, 2003 (24.12.03) |
|---|---|
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

| | International application No. |
|---|---|
| | PCT/JP03/12284 |

C (Continuation).   DOCUMENTS CONSIDERED TO BE RELEVANT

| Category* | Citation of document, with indication, where appropriate, of the relevant passages | Relevant to claim No. |
|---|---|---|
| Y | A.V. Eiho et al., translated by Ken'ichi HARADA, "Compiler II", Saiensu-sha Co., Ltd., 10 October, 1990 (10.10.90), pages 714 to 881 | 2 |
| Y | JP 9-50379 A   (ATR Communication Systems Research), 18 February, 1997 (18.02.97), (Family: none) | 3 |
| Y | Takao SHIMOMURA, "Program Slicing Gijutsu to Oyo", Kyoritsu Shuppan Co., Ltd., 07 July, 1995 (07.07.95), pages 1 to 23 | 4 |
| Y | JP 7-239788 A   (NEC Hokuriku Software Co., Ltd.), 12 September, 1995 (12.09.95), (Family: none) | 5,6 |
| Y | JP 10-307727 A   (NEC Corp., Nihon Denki Telecom System Kabushiki Kaisha), 17 November, 1998 (17.11.98), (Family: none) | 7-9 |

Form PCT/ISA/210 (continuation of second sheet) (July 1998)